(19) Europäisches Patentamt
European Patent Office
Office européen des brevets

(11) **EP 4 339 869 B1**

(12) **EUROPEAN PATENT SPECIFICATION**

(45) Date of publication and mention
of the grant of the patent:
**29.10.2025   Bulletin 2025/44**

(21) Application number: **22807451.4**

(22) Date of filing: **09.05.2022**

(51) International Patent Classification (IPC):
**G06Q 30/0601** (2023.01)     **G06Q 30/0201** (2023.01)
**G06Q 30/0251** (2023.01)     **G16Y 20/40** (2020.01)
**G16Y 40/20** (2020.01)

(52) Cooperative Patent Classification (CPC):
**G06Q 30/0201; G06Q 30/0269; G06Q 30/0631;
G16Y 20/40; G16Y 40/20**

(86) International application number:
**PCT/JP2022/019733**

(87) International publication number:
**WO 2022/239750 (17.11.2022 Gazette 2022/46)**

(54) **PREFERRED PRODUCT INFORMATION PRESENTATION DEVICE AND PREFERRED BEVERAGE/FOOD INFORMATION PRESENTATION DEVICE**

VORRICHTUNG ZUR DARSTELLUNG BEVORZUGTER PRODUKTINFORMATIONEN UND VORRICHTUNG ZUR DARSTELLUNG BEVORZUGTER GETRÄNKE-/ NAHRUNGSMITTELINFORMATIONEN

DISPOSITIF DE PRÉSENTATION D'INFORMATIONS DE PRODUIT PRÉFÉRÉ ET DISPOSITIF DE PRÉSENTATION D'INFORMATIONS DE BOISSON/ALIMENT PRÉFÉRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **12.05.2021   JP 2021081157**

(43) Date of publication of application:
**20.03.2024   Bulletin 2024/12**

(73) Proprietor: **Taste and Aroma Strategic Research Institute Co., Ltd.
Tokyo 104-0033 (JP)**

(72) Inventors:
• **KOYANAGI, Michihiro**
  **Tokyo 104-0033 (JP)**
• **HAYASAKA, Hirofumi**
  **Tokyo 104-0033 (JP)**
• **FUJIMARU, Junko**
  **Tokyo 104-0033 (JP)**
• **KONDO, Tamaki**
  **Tokyo 104-0033 (JP)**
• **TAKAHASHI, Takahiro**
  **Tokyo 104-0033 (JP)**

(74) Representative: **Ipsilon
Le Contemporain
50 Chemin de la Bruyère
69574 Dardilly Cedex (FR)**

(56) References cited:
WO-A1-2019/033089     JP-A- 2002 117 059
JP-A- 2004 361 998     JP-A- 2011 095 814
JP-A- 2012 123 749     JP-A- 2016 009 211
KR-B1- 101 843 987     US-A1- 2015 294 225
US-A1- 2018 025 386

EP 4 339 869 B1

# EP 4 339 869 B1

**Description**

Technical Field

The present invention relates to a device capable of presenting information regarding a product conforming to a preference of a user and information regarding beverage/food information conforming to the preference of the user.

Background Art

(Prior Art 1)

Patent Document 1 (Japanese Patent Application Laid-Open (JP-A) No. 2002-117059) discloses an invention in which data of positions of various brands of wine on a taste distribution map is stored in a database, and in a case in which a user enters a brand of wine that the user knows from a terminal, a position of the input brand of wine on the taste distribution map is displayed on a screen of the terminal, and based on the position of the input brand of wine on the taste distribution map, a brand of wine having a desired taste can be designated by the user from the taste distribution map according to a desire such as "sweeter" than the input brand of wine.

(Prior Art 2)

Patent Document 2 (JP-A No. 2004 -13231) discloses an invention in which not only a purchase history of a user but also the number of views of content, a content viewing interval, content deletion, and the like, which are file operation histories of the user, are taken into consideration to extract a more detailed content preference tendency than a content preference tendency of the user extracted only from a purchase history, and a content provider recommends highly accurate recommended content to the user.

KR101843987 B1 discloses a wine information service server for recommending wine based on a matching of a wine with a user's taste information extracted from a user's profile. The user's taste information may include values for a plurality of attributes, such as sugar content, acidity, and can be represented by a polygon having the value of each attribute as a vertex. The wine information can be generated in a polygon similar to the taste information of the user.

SUMMARY OF INVENTION

Technical Problem

An object of the invention is to make it possible to accurately present information regarding a product conforming to preference of a user and composition information regarding a beverage or a food conforming to a preference of a user as compared with the prior art.

Solution to Problem

The invention is set out in the independent claims.

According to a first aspect, there is provided a preferred product information presentation device including a user preference evaluation value storage unit that stores a user preference evaluation value for each of a plurality of preference evaluation topics for one or a combination of two or more of a sense of taste, a smell, and a food taste in association with a user; an item evaluation value storage unit that stores an item evaluation value for each of the plurality of preference evaluation topics in association with an item of at least one of a beverage or a food; a reception unit that receives a presentation request for information associated with a product conforming to a preference of the user; a determination unit that extracts a user preference evaluation value associated with the user from the user preference evaluation value storage unit according to the presentation request received by the reception unit, compares the extracted user preference evaluation value with a corresponding item evaluation value stored in the item evaluation value storage unit, and determines a degree of coincidence between the two values; and a product information presentation unit that presents information regarding a product conforming to the preference of the user according to a determination result from the determination unit.

According to a second aspect, in the first aspect, the preferred product information presentation device further includes a question presentation unit that presents, to the user, a question to which answers are different according to a difference in an item evaluation value between items of at least one of the beverage or the food; an answer reception unit that receives an answer of the user to the question; and an evaluation value generation unit that generates a user preference evaluation value on the basis of the answer received by the answer reception unit and associates the user preference evaluation value with the user.

According to a third aspect, in the preferred product information presentation device of the second aspect, an answer result to the question is classified into first to N-th (where N is 2 or more) preference patterns, and the user preference evaluation value for each of the plurality of preference evaluation topics is associated with the first to N-th preference patterns for the one or the combination of two or more of the sense of taste, the smell, and the food taste.

According to a fourth aspect, in the preferred product information presentation device of any one of the first to third aspects, the user preference evaluation value storage unit includes a preference pattern storage unit that stores the user in association with any of first to N-th (where N is 2 or more) preference patterns, and a pattern preference evaluation value storage unit that stores the user preference evaluation value for each of the plurality of preference evaluation topics for the one or the combination of two or more of the sense of taste, the smell, and the food taste in association with the first to N-th preference patterns.

According to a fifth aspect, in the preferred product information presentation device of any one of the first to fourth aspects, the user preference evaluation value storage unit stores the user preference evaluation value as a relative numerical value with respect to the user preference reference value, and the item evaluation value storage unit stores the item evaluation value as a relative numerical value with respect to the item reference value.

According to a sixth aspect, in the preferred product information presentation device of any one of the first to fifth aspects, the product information presentation unit presents, as a result of comparing a numerical value of the user preference evaluation value with a numerical value of the item evaluation value, at least one of the beverage or the food of an item for which the numerical values of the two values are closer to each other than other items.

According to a seventh aspect, in the preferred product information presentation device of any one of the first to sixth aspects, the item of at least one of the beverage or the food is associated with a manufacturing institution that manufactures the item or/and a store that sells and provides the item, and the product information presentation unit presents, as a result of comparing a numerical value of the user preference evaluation value with a numerical value of the item evaluation value, a manufacturing institution or/and a store associated with an item for which the numerical values of the two values are closer to each other than items of other manufacturing institutions or/and stores.

According to an eighth aspect, in the preferred product information presentation device of the second or third aspect, a product preferred by the user belonging to the preference pattern is associated with each of the first to N-th (N is 2 or more) preference patterns, and the product information presentation unit presents information regarding the product associated with the preference pattern to which the user belongs.

According to a ninth aspect, in the preferred product information presentation device of the second, third, or eighth aspect, the product information presentation unit presents another user belonging to a preference pattern to which the user belongs as a matching target.

According to a tenth aspect, there is provided a preferred beverage/food information presentation device including a user preference evaluation value storage unit that stores, as a relative numerical value with respect to a user preference reference value, a user preference evaluation value for each of a plurality of preference evaluation topics for one or a combination of two or more of the sense of taste, a smell, and a food taste in association with a user; a reference sample composition information storage unit that stores composition information of a reference sample from which an item reference value serving as a reference of an item evaluation value for at least one of a beverage or a food is obtained; a reception unit that receives a presentation request for composition information of an item of at least one of a beverage and a food conforming to a preference of a user; a corrected composition information generation unit that extracts a relative numerical value with respect to a user preference reference value associated with the user from the user preference evaluation value storage unit in response to the presentation request received by the reception unit, and corrects the composition information of the reference sample according to the extracted relative numerical value with respect to the user preference reference value; and a presentation unit that presents the corrected composition information generated by the corrected composition information generation unit as composition information of the item of at least one of the beverage and the food conforming to the preference of the user.

According to an eleventh aspect, there is provided a preference information generation device including a user preference evaluation value storage unit that stores a user preference evaluation value for each of a plurality of preference evaluation topics for one or a combination of two or more of the sense of taste, a smell, and a food taste in association with a user; an item evaluation value storage unit that stores an item evaluation value for each of the plurality of preference evaluation topics in association with an item of a dish or a food; a selection unit that selects an item of a dish or a food; and an item evaluation value adjustment unit that extracts an item evaluation value corresponding to the item of the selected dish or food from the item evaluation value storage unit, extracts a user preference evaluation value associated with the user from the user preference evaluation value storage unit, and adjusts the item evaluation value corresponding to the item of the selected dish or food such that the item evaluation value is an item evaluation value according to the extracted user preference evaluation value.

According to a twelfth aspect, the preference information generation device of the eleventh aspect further includes a per-user history data storage unit that stores per-user history data indicating an item of a dish or a food purchased by the user or provided to the user in the past in association with the user, in which the selection unit selects an item of a dish or a food from the per-user history data stored in the per-user history data storage unit.

According to a thirteenth, the preference information generation device of the eleventh aspect further includes an acquisition unit that acquires information regarding a food constituent material to be stocked, in which the selection unit selects an item of a dish or a food including the acquired food constituent material.

According to a fourteenth aspect, in the preference information generation device of the eleventh to thirteenth aspects, a recipe for a dish or a food is presented according to the adjusted item evaluation value.

According to a fifteen aspect, the preference information generation device of the eleventh to fourteenth aspects further includes a reproduction unit that reproduces a dish or a food from which the sense of taste or/and a smell or/and a food taste is obtained according to the adjusted item evaluation value.

According to a sixteen aspect, in the preference information generation device of the fifteenth aspect, the reproduction unit reproduces a dish or a food by using a food constituent material designated by the user.

According to a seventeenth aspect, in the preference information generation device of the eleventh to sixteenth aspect, a nationality or a hometown is associated with the user, the user preference evaluation value storage unit stores the user preference evaluation value as a relative numerical value with respect to the user preference reference value according to the nationality or the hometown of the user, the item evaluation value storage unit stores an item evaluation value for each nationality or hometown as a relative numerical value with respect to an item reference value for each nationality or hometown, and the item evaluation value adjustment unit extracts an item evaluation value corresponding to the nationality or the hometown of the user from the item evaluation value storage unit, and adjusts the item evaluation value corresponding to the nationality or the hometown of the user such that the item evaluation value is an item evaluation value according to the user preference evaluation value.

According to an eighteenth aspect, there is provided a preferred beverage/food information presentation device including a purchase item history acquisition unit that acquires a history of purchase items of beverages or foods purchased by a user in the past; an item evaluation value storage unit that stores an item evaluation value for each of a plurality of preference evaluation topics for one or a combination of two or more of the sense of taste, a smell, and a food taste in association with an item of at least one of a beverage or a food; a user preference evaluation value generation unit that generates a user preference evaluation value for each of the plurality of preference evaluation topics of the user according to an item evaluation value corresponding to a purchase item of the user acquired by the purchase item history acquisition unit; a user preference evaluation value storage unit that stores the user preference evaluation value in association with each user;
a reception unit that receives a presentation request for information regarding a beverage or a food conforming to a preference of the user; and an information presentation unit that extracts the user preference evaluation value associated with the user from the user preference evaluation value storage unit in response to the presentation request received by the reception unit, and presents information of an item of a beverage or a food serving as an item evaluation value corresponding to the extracted user preference evaluation value as information of an item of a beverage or a food conforming to the preference of the user.

According to a nineteenth aspect, in the preferred beverage/food information presentation device of the eighteenth aspect, the user preference evaluation value is classified into first to N-th (where N is 2 or more) preference patterns, one of the first to N-th preference patterns is associated with each user, and the information presentation unit presents information of an item of a beverage or a food serving as an item evaluation value that coincides with a preference pattern associated with the user as information of an item of a beverage or a food conforming to the preference of the user.

According to a twentieth aspect, in the preferred beverage/food information presentation device of the nineteenth aspect, the user preference evaluation value generation unit generates the user preference evaluation value on the basis of an average value or a standard deviation of item evaluation values of a plurality of purchase items purchased in the past by the user, acquired by the purchase item history acquisition unit.

According to a twenty-first aspect, in the preferred beverage/food information presentation device of any one of the eighteenth to twentieth aspects, the purchase item history acquisition unit acquires a history of a purchase item of a beverage or a food belonging to a specific category of the beverage or the food.

Advantageous Effects of Invention

According to the first to twenty-first aspects, it is possible to accurately present information regarding a product conforming to a preference of a user and composition information of a beverage/food conforming to the preference of the user compared with the prior art.

BRIEF DESCRIPTION OF DRAWINGS

Fig. 1 is a diagram exemplifying a configuration of a preferred product information presentation device according to an embodiment.

Fig. 2 is a block diagram exemplifying a hardware configuration of the embodiment.

Fig. 3 is a block diagram exemplifying a functional configuration of a preferred product information presentation device according to a first embodiment.

Fig. 4A is a diagram exemplifying data of a user preference evaluation value stored in a user preference evaluation value storage unit.

Fig. 4B is a diagram exemplifying data of a user preference evaluation value stored in the user preference evaluation value storage unit.

Fig. 5A is a diagram exemplifying data of an item evaluation value stored in an item evaluation value storage unit.

Fig. 5B is a diagram exemplifying data of an item evaluation value stored in the item evaluation value storage unit.

Fig. 5C is a diagram illustrating data of an item evaluation value stored in the item evaluation value storage unit.

Fig. 6 is a diagram illustrating a display example of a question/answer screen.

Fig. 7 is a diagram illustrating a display example of a question/answer screen.

Fig. 8 is a diagram illustrating comparison of item evaluation values of items between different items in a radar chart.

Fig. 9 is a diagram illustrating answer results classified into 20 clusters.

Fig. 10A is a diagram exemplifying a correspondence relationship between a preference pattern stored in a pattern preference evaluation value storage unit and a user preference evaluation value.

Fig. 10B is a diagram exemplifying a correspondence relationship between a preference pattern stored in the pattern preference evaluation value storage unit and a user preference evaluation value.

Fig. 10C is a diagram exemplifying a correspondence relationship between a preference pattern stored in the pattern preference evaluation value storage unit and a user preference evaluation value.

Fig. 10D is a diagram exemplifying a correspondence relationship between a preference pattern stored in the pattern preference evaluation value storage unit and a user preference evaluation value.

Fig. 10E is a diagram exemplifying a correspondence relationship between a preference pattern stored in the pattern preference evaluation value storage unit and a user preference evaluation value.

Fig. 10F is a diagram exemplifying a correspondence relationship between a preference pattern stored in the pattern preference evaluation value storage unit and a user preference evaluation value.

Fig. 10G is a diagram exemplifying a correspondence relationship between a preference pattern stored in the pattern preference evaluation value storage unit and a user preference evaluation value.

Fig. 10H is a diagram exemplifying a correspondence relationship between a preference pattern stored in the pattern preference evaluation value storage unit and a user preference evaluation value.

Fig. 11 is a diagram illustrating content performed by a determination unit.

Fig. 12A is a diagram exemplifying a preferred product information presentation screen displayed on a display screen of a user-side terminal.

Fig. 12B is a diagram exemplifying a preferred product information presentation screen displayed on the display screen of the user-side terminal.

Fig. 12C is a diagram exemplifying a preferred product information presentation screen displayed on the display screen of the user-side terminal.

Fig. 13A is a diagram exemplifying a preferred product information presentation screen displayed on the display screen of the user-side terminal.

Fig. 13B is a diagram illustrating item evaluation values associated with respective items in a radar chart.

Fig. 14 is a diagram exemplifying a preferred product information presentation screen displayed on the display screen of the user-side terminal.

Fig. 15 is a diagram exemplifying a preferred product information presentation screen displayed on the display screen of the user-side terminal.

Fig. 16 is a diagram exemplifying a preferred product information presentation screen displayed on the display screen of the user-side terminal.

Fig. 17 is a diagram exemplifying a data structure of per-preference-pattern purchase history data.

Fig. 18 is a diagram exemplifying a preferred product information presentation screen displayed on the display screen of the user-side terminal.

Fig. 19 is a diagram illustrating a relationship between a user group belonging to a third preference pattern, another user group belonging to the same third preference pattern, and another user group not belonging to the third preference pattern.

Fig. 20 is a diagram exemplifying a preference user information presentation screen.

Fig. 21 is a block diagram exemplifying a functional configuration of a preferred beverage/food information presentation device according to a second embodiment.

Fig. 22 is a diagram illustrating content of processing performed by a correction unit.

Fig. 23 is a diagram exemplifying a preferred beverage/food information presentation screen.

Fig. 24 is a table exemplifying a correspondence relationship between various volatile fragrance components and smell quality.

Fig. 25A is a diagram illustrating a procedure of measuring a first taste and an aftertaste of a food by using a taste sensor.

Fig. 25B is a diagram illustrating a procedure of measuring a first taste of a food and an aftertaste of the food after being rinsed with a beverage by using a taste sensor.

Fig. 26 is a graph exemplifying numerical values of evaluation values of an aftertaste of sushi (tuna) after being rinsed with five brands of sake.

Fig. 27 is a block diagram exemplifying a functional configuration of a preference information generation device according to a third embodiment.

Fig. 28 is a diagram illustrating an example of a food history screen.

Fig. 29 is a diagram illustrating an example of a preference information generation screen.

Fig. 30 is a view illustrating an example of a preference information generation screen.

Fig. 31 is a diagram illustrating an appearance of an automatic cooker.

Fig. 32 is a block diagram illustrating a configuration of the automatic cooker.

Fig. 33 is a diagram illustrating an initial screen of a display screen of the automatic cooker.

Fig. 34 is a diagram illustrating a state in which the display screen of the automatic cooker has transitioned to the preference information generation screen.

Fig. 35 is a diagram illustrating a state in which the display screen of the automatic cooker has transitioned to a cooking information screen.

Fig. 36 is a diagram illustrating a difference in evaluation values of an umami taste and a salty taste in different countries.

Fig. 37A is a diagram illustrating user preference evaluation values corresponding to an eighth preference pattern of a certain country in a radar chart.

Fig. 37B is a diagram illustrating user preference evaluation values corresponding to the eighth preference pattern of another country in a radar chart.

Fig. 38A is a diagram illustrating data of item evaluation values associated with dishes of a certain country in a radar chart.

Fig. 38B is a diagram illustrating data of item evaluation values associated with dishes of another country in a radar chart.

Fig. 39A is a diagram corresponding to Fig. 38 A, and is a diagram illustrating data of item evaluation values after adjustment in a radar chart.

Fig. 39B is a diagram corresponding to Fig. 38 B, and is a diagram illustrating data of item evaluation values after adjustment in a radar chart.

Fig. 40 is a block diagram exemplifying a functional configuration of a preferred beverage/food information presentation device according to a fourth embodiment.

Figs. 41(A) and 41(B) are diagrams each illustrating item evaluation values of a coffee beverage item in a category of a coffee beverage.

Fig. 42 is a diagram exemplifying a method of generating a user preference evaluation value.

Fig. 43 is a diagram exemplifying a method of generating a user preference evaluation value.

Fig. 44 is a diagram exemplifying a method of generating a user preference evaluation value.

Fig. 45 is a diagram exemplifying a preferred beverage/food information presentation screen displayed on the display screen of the user-side terminal.

Fig. 46 is a diagram exemplifying a preferred beverage/food information presentation screen displayed on the display screen of the user-side terminal.

## DESCRIPTION OF EMBODIMENTS

Hereinafter, embodiments of the invention will be described with reference to the drawings.

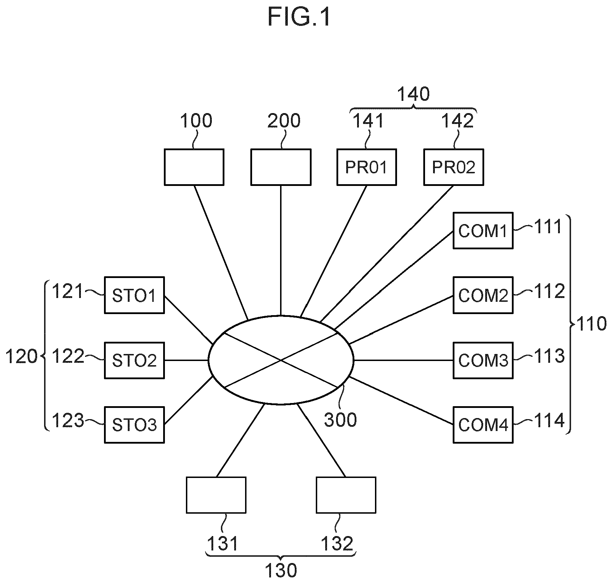

Fig. 1 is a diagram illustrating a configuration of a preferred product information presentation device according to an embodiment.

The preferred product information presentation device includes an administrator-side terminal 100, manufacturing institution-side terminals 111, 112, 113, and 114, store-side terminals 121, 122, and 123, user-side terminals 131 and 132, information providing institution-side terminals 141 and 142, a server 200, and a network 300 that connects the terminals 111, 112, 113, 114, 121, 122, 131, 132, 141, and 142 and the server 200 so that data can be mutually transmitted and received between the terminals 111, 112, 113, 114, 121, 122, 131, 132, 141, and 142 and the server 200.

The respective manufacturing institution-side terminals 111, 112, 113, and 114 will be collectively referred to as a manufacturing institution-side terminal 110. The respective manufacturing institution-side terminals 111, 112, 113, and 114 are terminals managed by, for example, manufacturing institutions COM1, COM2, COM3, and COM4. The respective store-side terminals 121, 122, and 123 will be collectively referred to as a store-side terminal 120. The respective store-side terminals 121, 122, and 123 are terminals managed by, for example, stores STO1, STO2, and STO3. The respective user-side terminals 131 and 132 will be collectively referred to as a user-side terminal 130. The respective user-side terminals 131 and 132 are terminals managed by, for example, a user ID1 and a user ID2. The respective information providing institution-side terminals 141 and 142 will be collectively referred to as an information providing institution-side terminal 140. The respective information providing institution-side terminals 141 and 142 are terminals managed by, for example, information providing institutions PRO1 and PRO2.

A description will be made assuming that the manufacturing institution is a company or an association such as a manufacturer that manufactures foods and beverages. A description will be made assuming that the store is a store such as a supermarket or a convenience store that sells foods and beverages, or an online shopping site, or a store such as a restaurant or a specialty store that provides foods (dishes) and beverages. A description will be made assuming that the information providing institution is an information providing company or an association that provides information such as restaurant and recipe information.

The administrator-side terminal 100, the manufacturing institution-side terminal 110, the store-side terminal 120, the user-side terminal 130, and the information providing institution-side terminal 140 are information processing devices, and include, for example, a personal computer. The user-side terminal 130 may be a portable device such as a smartphone or a tablet PC. The network 300 includes the Internet, an intranet, or the like. The server 200 includes a server device, a virtual server built on cloud computing, or the like.

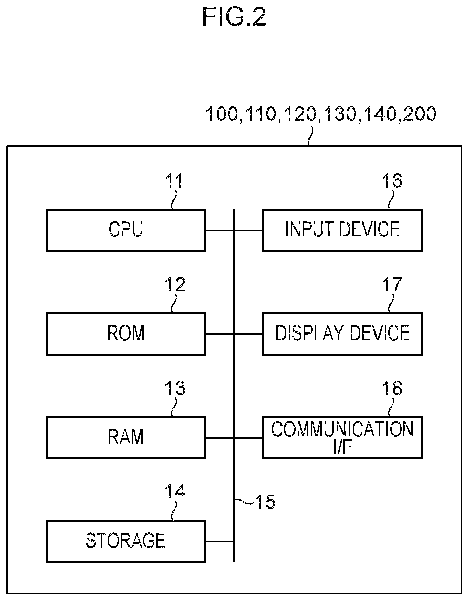

Fig. 2 is a block diagram illustrating a hardware configuration of the administrator-side terminal 100, the manufacturing institution-side terminal 110, the store-side terminal 120, the user-side terminal 130, the information providing institution-side terminal 140, and the server 200 according to the embodiment.

As illustrated in Fig. 2, in the administrator-side terminal 100, the manufacturing institution-side terminal 110, the store-side terminal 120, the user-side terminal 130, the information providing institution-side terminal 140, and the server 200, a central processing unit (CPU) 11, a read only memory (ROM) 12, a random access memory (RAM) 13, a storage 14, an input device 16, a display device 17, and a communication I/F 18 are communicatively connected to each other via system bus 15.

The CPU 11 is a central processing unit, and executes various programs and controls each device connected to the system bus 15. That is, the CPU 11 reads a program from the ROM 12 or the storage 14, and executes the program by using the RAM 13 as a work area. The CPU 11 controls each device connected to the system bus 15 and performs various arithmetic processing according to the program recorded in the ROM 12 or the storage 14. The ROM 12 or the storage 14 stores a basic input/output system (BIOS) or an operating system (OS) that is a control program executed by the CPU 11, and computer readable and executable programs (a "user preference evaluation value generation program", a "preferred product information presentation program", and a "preferred beverage/food information presentation program") for realizing the present embodiment, and various types of necessary data. The storage 14 includes a hard disk drive (HDD), a solid state drive (SSD), or a flash memory.

The ROM 12 stores various control programs and various types of data. The RAM 13 functions as a main memory, a work area, or the like of the CPU 11, and temporarily stores a program or data as a work area.

The input device 16 includes pointing devices such as a mouse and a keyboard, and is used to perform various inputs.

The display device 17 is, for example, a liquid crystal display, and displays various types of information. The display device 17 may function as the input device 16 by adopting a touch panel method.

On the display screen of the display device 17, a question/answer screen 510, a preferred product information presentation screen 530, a user preference information presentation screen 540, and a preferred beverage/food information presentation screen 550 that will be described later are displayed.

The communication interface 18 is an interface for communicating with other devices, and uses, for example, a standard such as Ethernet (registered trademark), FDDI, or Wi-Fi (registered trademark) are used. The communication interface 18 is connected to the network 300 and controls transmission and reception of data.

A user performs user registration on the question/answer screen 510 that will be described later in order to receive presentation of a product conforming to a preference of the user or presentation of a beverage/food conforming to the preference of the user.

The server 200 functions as a WEB server that displays the question/answer screen 510, the preferred product information presentation screen 530, and the preferred beverage/food information presentation screen 550 on the display device 17 of the user-side terminal 130 that is a client terminal according to a communication protocol of Hyper Text Transfer Protocol (HTTP).

In a case in which the user-side terminal 130 accesses the server 200, the question/answer screen 510 can be displayed on the display device 17. A question related to the preference of the user is displayed on the question/answer screen 510. The user ID1 and ID2 can perform an operation of selecting an answer to the question displayed on the question/answer screen 510 of the display device 17.

In a case in which the user-side terminal 130 accesses the server 200, the preferred product information presentation screen 530 can be displayed on the display device 17. On the preferred product information presentation screen 530, a product conforming to the user's preference is presented (displayed). The presentation is used in a sense including not only means using display but also output using a printer or the like.

In a case in which the manufacturing institution-side terminal 110, the store-side terminal 120, and the information providing institution-side terminal 140 access the server 200, the preference user information presentation screen 540 can be displayed on the display device 17. On the preference user information presentation screen 540, information regarding a user who likes a product manufactured by a manufacturing institution or a product provided and sold by a store (hereinafter, referred to as preference user information) is presented (displayed). The presentation is used in a sense including not only means using display but also output using a printer or the like.

The question/answer screen 510 and the preferred product information presentation screen 530 may be displayed on a condition that a user is authenticated.

(First Embodiment)

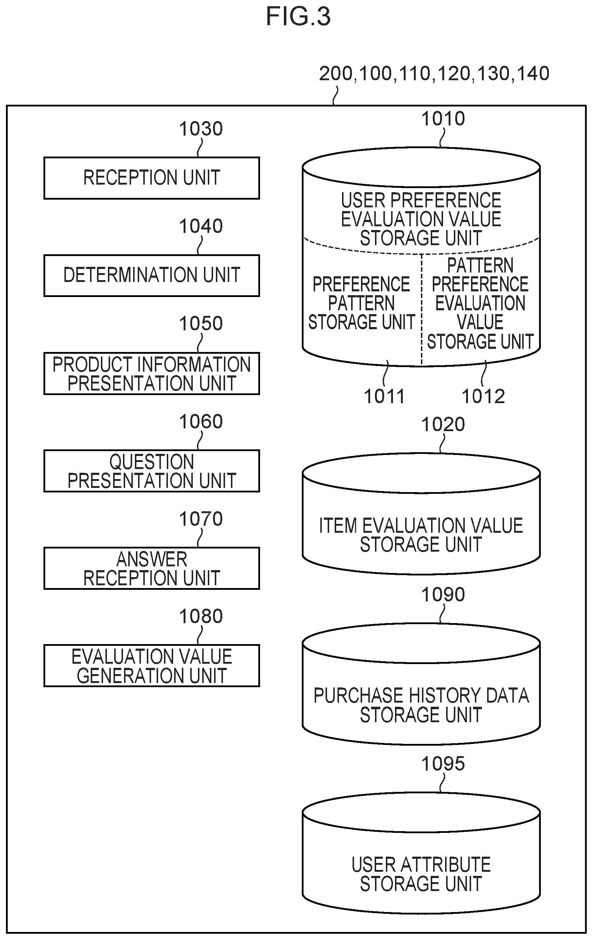

Fig. 3 is a block diagram illustrating a functional configuration of the preferred product information presentation device of the first embodiment. The functional configuration exemplified in Fig. 3 is included in the server 200, the administrator-side terminal 100, the manufacturing institution-side terminal 110, the store-side terminal 120, the user-side terminal 130, and the information providing institution-side terminal 140.

The preferred product information presentation device includes a user preference evaluation value storage unit 1010, an item evaluation value storage unit 1020, a reception unit 1030, a determination unit 1040, a product information presentation unit 1050, a question presentation unit 1060, an answer reception unit 1070, an evaluation value generation unit 1080, a purchase history data storage unit 1090, and a user attribute storage unit 1095. The user preference evaluation value storage unit 1010 includes a preference pattern storage unit 1011 and a pattern preference evaluation value storage unit 1012. The user preference evaluation value storage unit 1010 (the preference pattern storage unit 1011 and the pattern preference evaluation value storage unit 1012), the item evaluation value storage unit 1020, the purchase history data storage unit 1090, and the user attribute storage unit 1095 are configured as a database, and are included in the server 200.

(User Preference Evaluation Value Storage Unit)

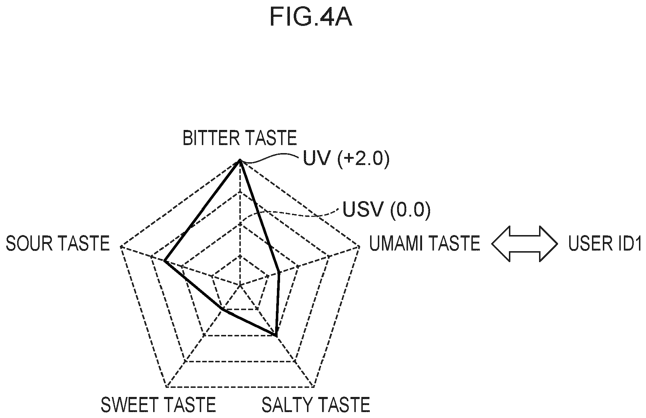

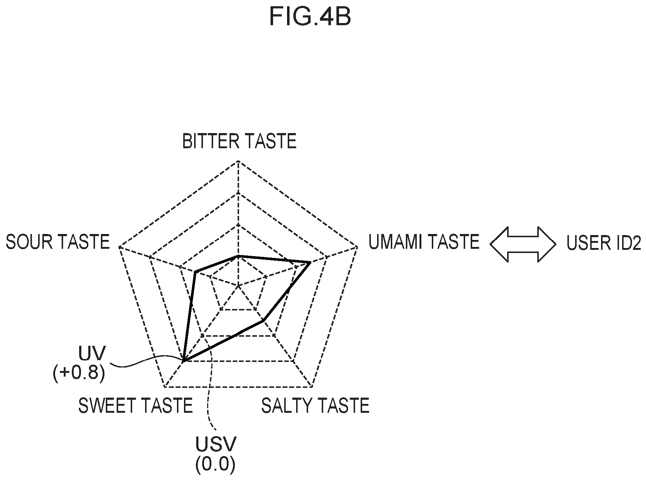

Figs. 4A and 4B exemplify data of a user preference evaluation value UV stored in the user preference evaluation value storage unit 1010. The user preference evaluation value storage unit 1010 stores the user preference evaluation value UV for each of a plurality of preference evaluation topics regarding one or a combination of two or more of the sense of taste, a smell, and a food taste in association with a user ID (for example, the user ID1 or the user ID2). Here, the user ID includes data for specifying a user who receives the presentation of the preferred product information and identifying another user.

The sense of taste is a sensation that can be perceived by a taste cell of a human tongue, and includes respective preference evaluation topics of basic five tastes such as sweet, sour, salty, bitter, and an umami taste, each preference evaluation topic of taste in a broad sense of pungency and an astringent taste, and respective preference evaluation topics indicated by sensitivities such as richness, sharpness, an aftertaste of an astringent taste, and body feeling.

The smell is a scent and an odor that can be perceived by human's sense of smell, and includes preference evaluation topics indicated by chemical components such as ester odor and organic acid odor, and respective preference evaluation topics indicated by sensitivities such as sweet scent, ginjo aroma, and saussureae radix.

The food taste indicates respective preference evaluation topics such as texture, temperature, color, gloss, and sound that can be perceived by human's tactile sense, visual sense, and auditory sense, and includes respective preference evaluation topics indicated by physical quantities such as clay, elasticity, and hardness, and respective preference evaluation topics indicated by sensitivities such as chewability and roughness.

A user preference reference value USV is a numerical value (which may be set to zero, for example) serving as a reference of the user preference evaluation value UV, such as an average value of the preference evaluation values UV for a large number of users.

In the user preference evaluation value storage unit 1010, the user preference evaluation value UV is stored as a relative numerical value (for example, +2.0) with respect to the user preference reference value USV (for example, 0.0).

Fig. 4A is a radar chart illustrating the user preference evaluation value UV for the user ID1. A user attribute of the user ID1 is, for example, a man in sixties. Fig. 4A illustrates, regarding the sense of taste of the user ID1, the user preference evaluation value UV for each preference evaluation topic such as a sweet taste, a sour taste, a salty taste, a bitter taste, or an umami taste as a relative numerical value UDE with respect to the user preference reference value USV. As can be seen from Fig. 4A, in the user ID1, the user preference evaluation values UV for a bitter taste, a sour taste, and a salty taste are greater than the user preference reference value USV, the user preference evaluation values UV for a sweet taste and an umami taste are smaller than the user preference reference value USV, and the user ID1 has a preference "liking for a bitter taste, a sour taste, and a salty taste but low acceptability to a sweet taste and an umami taste".

Fig. 4B is a radar chart illustrating the user preference evaluation value UV for the user ID2. An attribute of the user ID2 is, for example, a woman in thirties. Fig. 4B illustrates, regarding the sense of taste of the user ID2, the user preference evaluation value UV for each preference evaluation topic of a sweet taste, a sour taste, a salty taste, a bitter taste, or an umami taste as a relative numerical value UDE with respect to the user preference reference value USV. As can be seen from Fig. 4B, in the user ID2, the user preference evaluation values UV for a sweet taste and an umami taste are greater than the user preference reference value USV, and the user preference evaluation values UV for a bitter taste, a sour taste, and a salty taste are smaller than the user preference reference value USV, and the user ID2 has a preference "liking for a sweet taste and an umami taste but low acceptability to a bitter taste, a sour taste, and a salty taste".

Although the sense of taste has been described, similarly for the smell and the food taste, the user preference evaluation value UV for each preference evaluation topic in association with a user ID is stored in the user preference evaluation value storage unit 1010 as the relative numerical value UDE with respect to the user preference reference value USV.

The user preference evaluation value UV for each user ID is generated according to answer content to a question displayed on the question/answer screen 510 of the display device 17 of the user-side terminal 130.

The user attribute storage unit 1095 stores user attribute data AD indicating attributes of a user such as a gender, an age, and a domicile (hometown) of the user in association with a user ID.

(Item Evaluation Value Storage Unit)

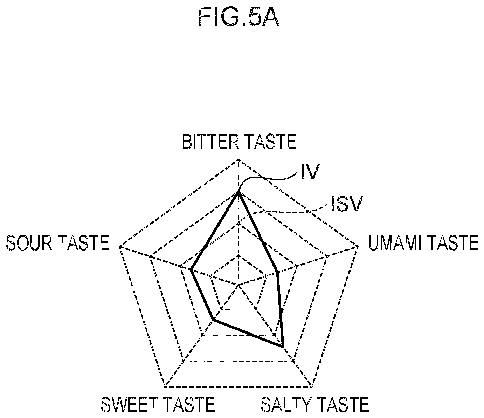

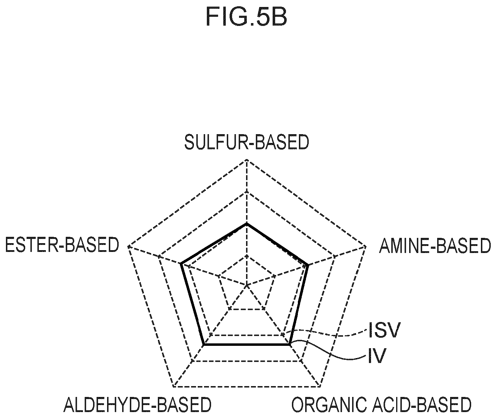

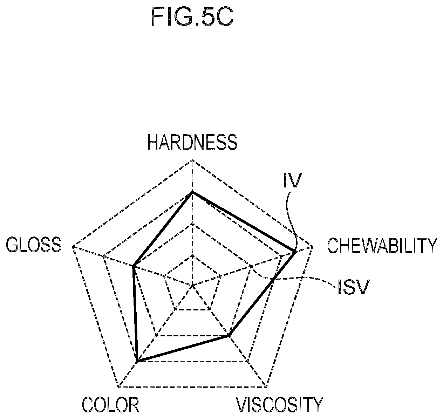

Figs. 5A, 5B, and 5C illustrate data of the item evaluation value IV stored in the item evaluation value storage unit 1020. As illustrated in Fig. 5A, the item evaluation value storage unit 1020 stores an item evaluation value IV for each of a plurality of preference evaluation topics (for example, a sweet taste, a sour taste, a salty taste, a bitter taste, and an umami taste) regarding the sense of taste in association with at least one item of a beverage or a food. As illustrated in Fig. 5B, the item evaluation value storage unit 1020 stores an item evaluation value IV for each of a plurality of preference evaluation topics (for example, sulfur-based, hydrocarbon-based, aromatic-based, ester-based, and aldehyde-based) regarding a smell in association with at least one item of a beverage or a food. As illustrated in Fig. 5C, the item evaluation value storage unit 1020 stores an item evaluation value IV for each of a plurality of preference evaluation topics (for example, hardness, chewability, viscosity, color, and gloss) regarding a food taste in association with at least one of a beverage or a food.

The item evaluation value storage unit 1020 stores the item evaluation value IV as a relative numerical value IDE (for example, +2.0) with respect to the item reference value ISV (for example, 0.0).

The item evaluation value IV may be quantified on the basis of a measured value of a measurement device. A measured value of the measurement device and a sensory value obtained through a sensory test may be combined and quantified. The measurement device includes a sensor that mimics a sensory organ that perceives human taste, smell, touch, vision, and hearing, and an analysis device that analyzes components of a food and a beverage.

With respect to the sense of taste, the item evaluation value IV based on a measured value of a taste identification device including a taste sensor, a component analysis device (a gas chromatography, a liquid chromatography, a mass spectrometer, or an infrared absorption analyzer), and the like may be acquired. The item evaluation value IV regarding the sense of taste may be acquired by combining the measured value of the measurement device and the sensory value obtained through the sensory test.

Regarding a smell, the item evaluation value IV may be acquired on the basis of a measured value of a smell identification device including a smell sensor and a component analysis device (a gas chromatography or the like). The item evaluation value IV regarding a smell may be acquired by combining a measured value of a measurement device and a sensory value obtained through a sensory test.

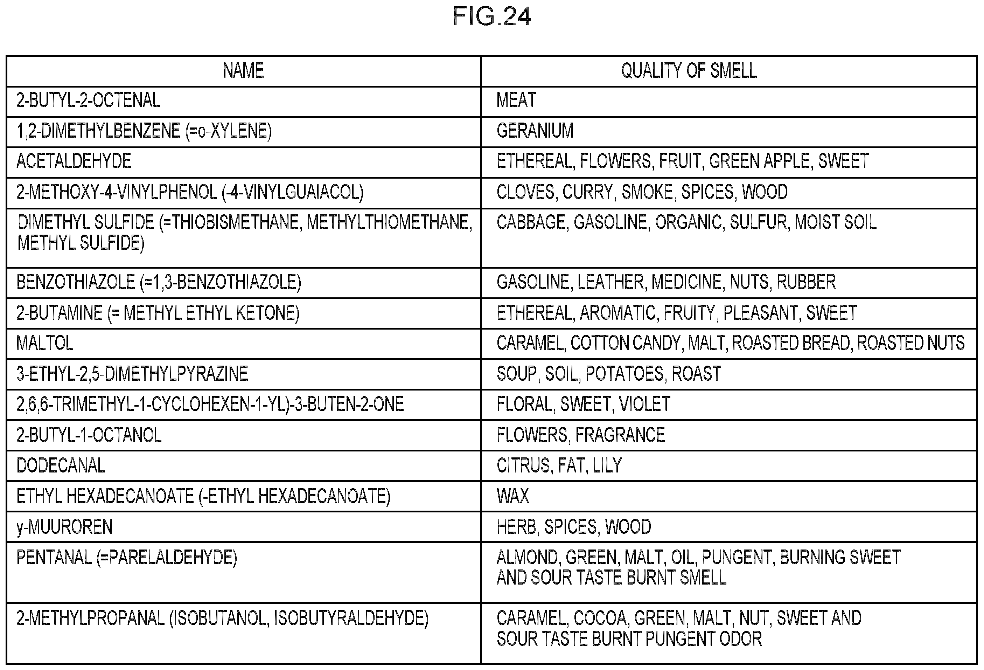

As components of the smell, there are various volatile fragrance components. A correspondence relationship between various volatile fragrance components and the quality of smell is illustrated in Fig. 24. For example, a volatile fragrance component "acetaldehyde" contributes to the qualities of smells of "ether, flower, fruit, green apple, and sweet".

Regarding the food taste, the item evaluation value IV may be acquired on the basis of a measured value of a taste identification device such as a visual analyzer (which measures a color, gloss, a shape, a pattern, and the like), a tensipressor (which measures chewability, roughness, and the like), a texture meter (which measures chewability, hardness, elasticity, and the like), a rheometer (which measures dynamic viscoelasticity and the like), a creep meter (which measures viscosity, elasticity, and the like), a viscometer (which measures viscosity or the like), or a hardness meter (which measures hardness or the like). The item evaluation value IV regarding a food taste may be acquired by combining a measured value of a measurement device and a sensory value obtained through a sensory test.

Physical property values representing texture among food tastes will be described.

Physical property values representing texture include hardness (soft/hard), viscosity (smooth/thick), elasticity (weak/strong), roughness (slippery/rough), and crispy feeling (weak/strong).

The evaluation on the mouth feel may be performed by using three or more evaluation topics including at least hardness, viscosity, and elasticity. In order to evaluate the texture, for example, in the radar chart illustrated in Fig. 5C, axes of evaluation topics such as "hardness", "viscosity", and "elasticity" may be included.

For example, a taste sensor is configured to cause a plurality of lipid polymer membranes that mimic a biological membrane of a taste cell of a tongue to receive a taste substance. Each of the plurality of lipid polymers reacts with a taste substance such as that having a bitter taste, a sweet taste, a salty taste, a sour taste, an umami taste, an astringent taste, or a pungent taste to generate a potential difference between an electrode and the lipid polymer. The detected potential difference is converted into an item evaluation value IV such as a bitter taste, a sweet taste, a salty taste, a sour taste, an umami taste, an astringent taste, or a pungent taste. Since the taste sensor can simulatively reproduce a potential difference actually generated in the sensory cell of the tongue according to a taste substance itself, a detection result from the taste sensor illustrates a high correlation with human sensory.

The item reference value ISV indicates a numerical value serving as a reference of the item evaluation value IV, and it is desirable to use the item evaluation value IV indicated by a reference sample RSA. As the item evaluation value IV, an average value of the item evaluation values IV for respective items of a category (for example, sake) to which the item (for example, sake of a specific brand) belongs may also be used.

The reference sample RSA is determined for each category of food/beverage. For example, the reference sample RSA is defined for each category of beverages and foods such as sake, wine, beer, coffee, black tea, croquettes, tonkatsu, and Japanese noodle soup. The category may be a similar beverage group, a similar food group. For example, the reference sample RSA serving as a reference of the item evaluation value IV for the item "black tea of brand A" or the item "oolong tea of brand B" may be the reference sample RSA of the category "tea-based group such as black tea, oolong tea, or green tea".

The reference sample RSA is composed of a reference composition that can reliably reproduce an item reference value (for example, 0.0). Examples of the reference composition include glucose, fructose, and sucrose with respect to a sweet taste. Examples of a salty taste include potassium chloride, potassium bromide, and sodium chloride. Examples of the sour taste include L(+)-tartaric acid, citric acid, and acetic acid. Examples of an umami taste include sodium L-glutamate, sodium inosinate, sodium guanylate, and sodium succinate. Examples of a bitter taste include quinine hydrochloride, isoalpha acid, L-phenylalanine, and L-tryptophan. Examples of an astringent taste include tannic acid, chlorogenic acid, caffeic acid, gallic acid, and epigallocatechin.

Taking the category of sake as an example, the 100 milliliter reference sample RSA of the category of sake may employ a liquid in which 2.0 grams of glucose, 0.55 grams of starch syrup, 0.20 grams of tyrosol, 15 milliliters of ethanol, succinic acid, sodium succinate, sodium glutamate, glycine, alanine, sodium chloride, potassium dihydrogen phosphate, and the like are appropriately mixed. In a case in which a sample is created by using the information of the reference composition of "2.0 g of glucose, 0.55 g of starch syrup, 15 ml of ethanol, 0.20 g of tyrosol ···", the item reference value ISV serving as a reference of the item evaluation value IV for sake can be reliably reproduced.

The reference sample RSA functions as a calibration sample.

A measurement device such as a taste sensor is likely to cause an error. For example, taking the taste sensor as an example, even in a sample A of the same item, a detected value of a potential difference at a certain time may be different from a detected value of a potential difference at another time. Thus, the item evaluation value IV is obtained according to a relative value (for example, 5) of a detected potential difference (for example, 105) of the sample A with respect to a detected potential difference (for example, 100) of the reference sample RSA detected in the same period. As a result, even if potential differences detected at different times are shifted by the same numerical value, the same value (for example, 5) is obtained as a relative value, and an error in the item evaluation value IV can be eliminated.

As the taste sensor, a sensor capable of measuring a "first taste" that is a taste at the moment of containing a food in the mouth and an "aftertaste" that is a taste having persistence remaining after the food is swallowed.

A description will be made of a method of measuring a first taste and an aftertaste by using a taste sensor and a method of measuring a first taste and an aftertaste of a food after being rinsed with a beverage by using the taste sensor.

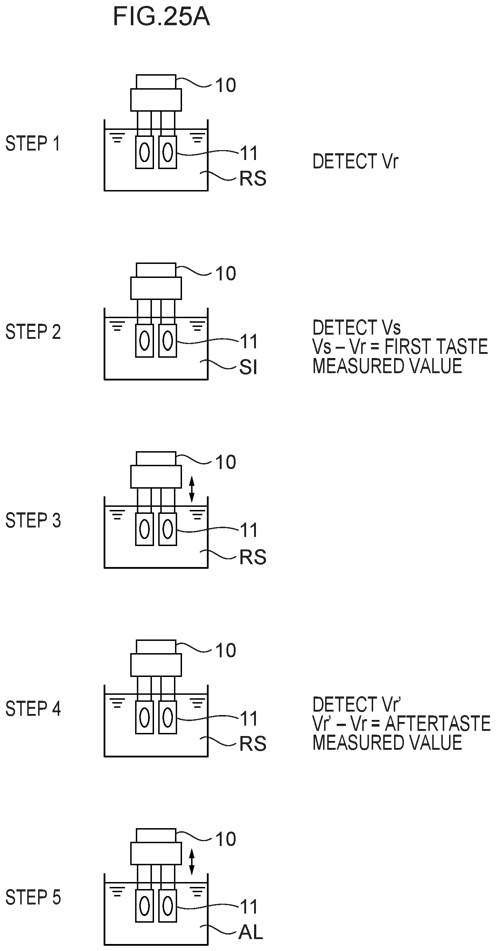

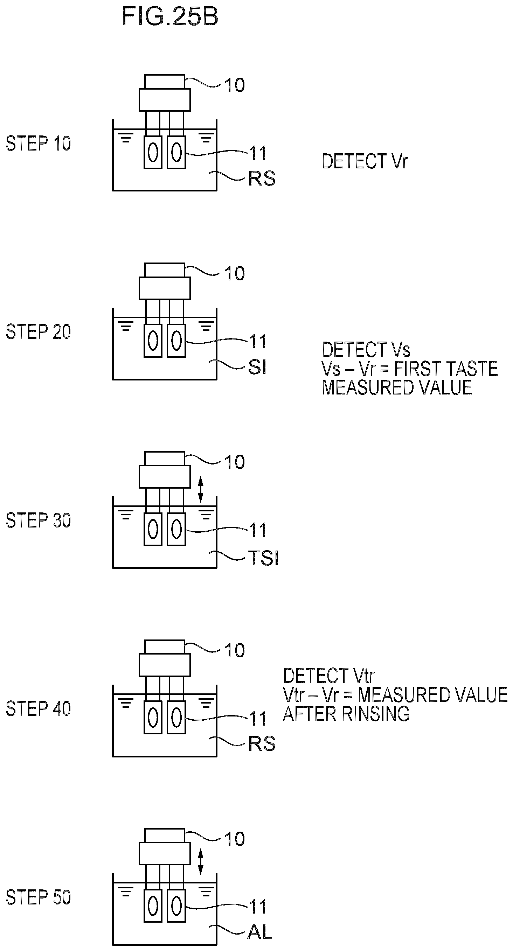

Fig. 25A illustrates a procedure of measuring a first taste and an aftertaste of a food by using a taste sensor 10. Fig. 25B illustrates a procedure of measuring a first taste of a food and an aftertaste of the food after being rinsed with a beverage by using the taste sensor 10.

The "aftertaste" is expressed by, for example, an astringent taste, a bitter taste, and richness. A sensor unit 11 of the taste sensor 10 is immersed in a liquid, and a reference liquid RS is used to detect a reference potential Vr corresponding to "no taste". The reference liquid RS is a liquid having a composition corresponding to human saliva, and for example, a solution obtained by mixing potassium chloride KCl and tartaric acid at a predetermined ratio is used.

(Measurement of First Taste and Aftertaste of Food)

Step 1: As shown in Fig. 25A, the sensor unit 11 of the taste sensor 10 is immersed in the reference liquid RS to detect the reference potential Vr.

Step 2: Next, the sensor unit 11 is immersed in a sample liquid SI of the food to detect a potential Vs. A measured value of the first taste is obtained by the following Formula (10).

$$\text{Vs - Vr = first taste measured value} \cdots (10)$$

Step 3: Next, the sensor unit 11 is simply cleaned with the reference liquid RS. The simple cleaning does not mean that the sensor unit 11 is completely cleaned, but means that the sensor unit 11 is cleaned to such an extent that a component of the sample liquid SI of the food is slightly left.

Step 4: In the same manner as in step 1, the sensor unit 11 is immersed in the reference liquid RS to detect a reference potential Vr'. A measured value of the aftertaste is obtained by the following Formula (20).

$$\text{Vr' - Vr = aftertaste measured value} \cdots (20)$$

Step 5: The sensor unit 11 is immersed in an alcohol solution AL to be completely cleaned and refreshed. The preparation for the next measurement is completed, and the process can proceed to step 1.

(Measurement of first taste of food and aftertaste of food after being rinsed with beverage)

Instead of cleaning the sensor unit 11 with the reference liquid RS, the sensor unit 11 is cleaned with a beverage TSI.

Step 10: As illustrated in Fig. 25B, the sensor unit 11 of the taste sensor 10 is immersed in the reference liquid RS to detect the reference potential Vr.

Step 20: Next, the sensor unit 11 is immersed in the sample liquid SI of the food to detect the potential Vs. A measured value of the first taste is obtained by the following Formula (10).

$$\text{Vs - Vr = first taste measured value} \cdots (10)$$

Step 30: Next, the sensor unit 11 is simply cleaned with the beverage TSI that is a compatibility diagnosis target.

Step 40: In the same manner as in step 10, the sensor unit 11 is immersed in the reference liquid RS to detect a reference potential Vtr'. A measured value of the aftertaste of the food after being rinsed with the beverage is obtained by the following Formula (30).

$$\text{Vtr' - Vr = food aftertaste measured value after being rinsed with beverage} \cdots (30)$$

Step 50: The sensor unit 11 is immersed in the alcohol solution AL to be completely cleaned and refreshed. The preparation for the next measurement is completed, and the process can proceed to step 10.

Sushi (tuna) and sake will be described as examples.

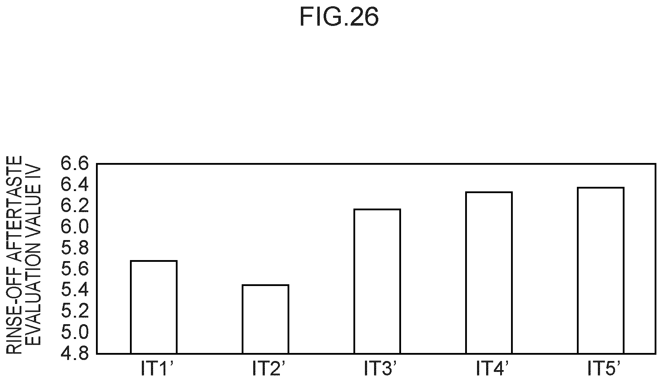

Fig. 26 is a graph illustrating numerical values of an evaluation value (hereinafter, referred to as a rinse-off aftertaste evaluation value) IV for an aftertaste of sushi (tuna) after being rinsed with five brands IT1', IT2', IT3', IT4', and IT5' of sake. The rinse-off aftertaste evaluation value IV may be expressed by an umami taste and richness. It is evaluated that the smaller a value of rinse-off aftertaste evaluation value IV, the greater the degree of rinsing of sushi (tuna) with sake, and the sake can be enjoyed. It is evaluated that the greater the rinse-off aftertaste evaluation value IV is, the smaller the degree of rinsing of the sushi (tuna) with the sake is, and the more the aftertaste of the sushi (tuna) remains in the oral cavity and the sake and the sushi (tuna) are in harmony, and the higher the satisfaction of the meal is.

(Question, Answer, and Generation of User Preference Evaluation Value)

The "user preference evaluation value generation program" is executed, and thus the following processes of question presentation, answer reception, and preference pattern generation are executed.

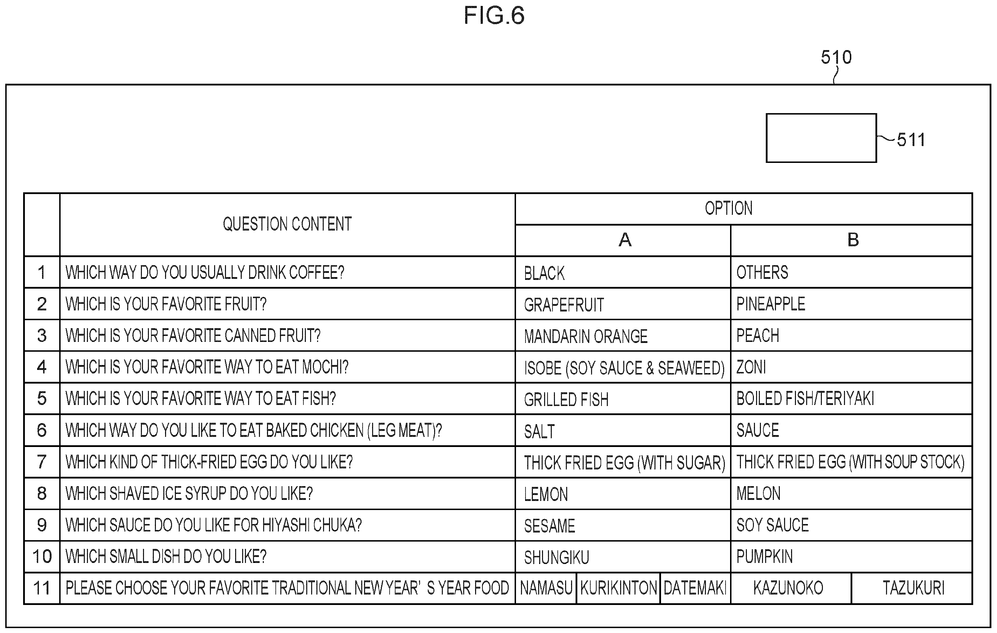

Fig. 6 illustrates a display example of the question/answer screen 510. An administrator has the authority to manage the question/answer screen 510 via the administrator-side terminal 101.

The question presentation unit 1060 displays, on a display screen of the display device 17 of the user-side terminal 130, a question with different answers according to a difference in the item evaluation value IV between items of at least one of a beverage or a food. A user may perform an operation of selecting an option displayed on the question/answer screen 510 and inputting an answer.

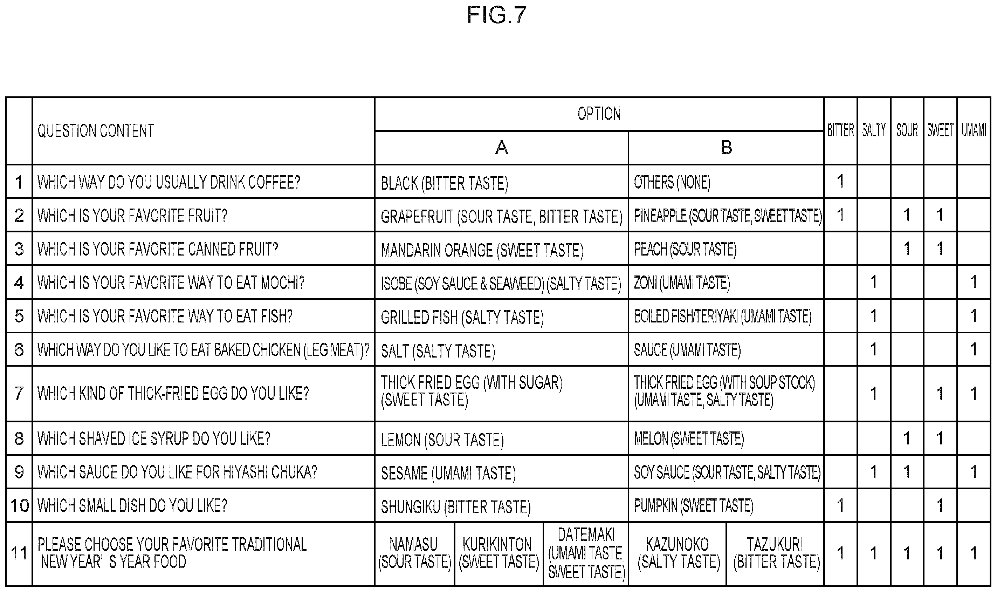

Fig. 7 illustrates a relationship between the option and the item evaluation value IV for each evaluation topic (bitter, salty, sour, sweet, and umami) for the sense of taste illustrated in Fig. 6.

Note that, in Figs. 6 and 7, among questions 1) to 15), questions 1) to 11) are exemplified.

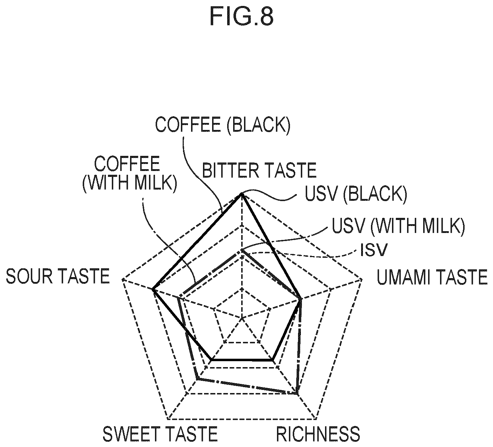

The answers A and B to each of the questions 1) to 15) are different depending on the difference in the item evaluation value IV between items of at least one of a beverage or a food. The question 1) will be described with reference to Fig. 8.

Fig. 8 illustrates comparison of the item evaluation value IV for an item "black coffee" with the item evaluation value IV for an item "coffee with milk" in a radar chart. The item evaluation value IV for a bitter taste of the item "black coffee" shows a high value and the item evaluation value IV for a bitter taste of the item "coffee with milk" shows a low value. Thus, the answers A and B to the question 1) "Which way do you usually drink coffee?" are set to be different (A: black (bitter taste) or B: other (none)) according to the difference in the bitter item evaluation value IV (the bitter taste is 1 or the bitter taste is 0). Similarly, for the other questions 2) to 15), the answers A and B are different depending on the difference in the item evaluation value IV between items corresponding to the answers A and B.

Therefore, in a case in which the user ID1 answers "black" of the answer A to the question 1), 1 is added to the user preference evaluation value UV for a bitter taste of the user ID1. On the other hand, in a case in which another user ID2 answers "others" of the answer B to the question 1), the user preference evaluation value UV for a bitter taste of the user ID2 is not added (0).

Similarly, in a case in which the user ID1 answers "Kazunoko (herring roe), Tazukuri (sweet fried sardines)" of the answer B to a question 11) "Please choose traditional New Year's food which you like", 1 is added to the user preference evaluation value UV for each of a salty taste and a bitter taste of the user ID1. On the other hand, in a case in which another user ID2 answers "Namasu, Kurikinton, Datemaki" of the answer A to the question 11), 1 is added to the user preference evaluation value UV for each of a sour taste, a sweet taste, and an umami taste of the user ID2.

An addition value of the user preference evaluation value UV obtained from the answers to all the questions of the questions 1) to 15) is as follows.

$$(\text{bitter, salty, sour, sweet, umami}) = (4,\ 2,\ 3,\ 2,\ 2) \cdots (1)$$

The preference vector of the above Formula (1) indicates, for example, an answer result that the user preference evaluation value UV for a bitter taste of the user ID1, the user preference evaluation value UV for a salty taste, the user preference evaluation value UV for a sour taste, the user preference evaluation value UV for a sweet taste, and the user preference evaluation value UV for an umami taste are 4, 2, 3, 2, and 2, respectively.

In a case in which the preference vector of the answer result is normalized in order to adjust the maximum value and the minimum value of the user preference evaluation value UV to predetermined values, a preference vector A1 of the following Formula (2) is obtained.

Preference vector A1 = (bitter, salty, sour, sweet, umami) = (4/37, 2/37, 3/37, 2/37, 2/37)                (2)

There are 32768 combinations of answer results for 15 questions, and the answer results (preference vectors) are represented by A1, A2, $\cdots$, An $\cdots$, and A32768.

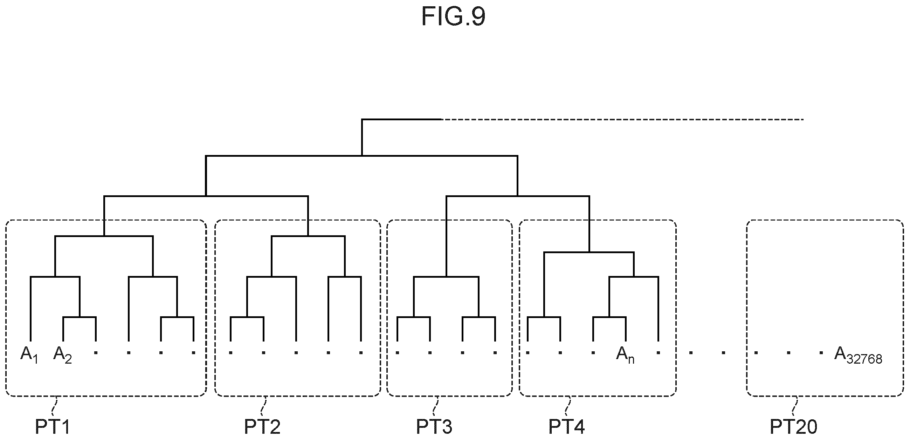

Fig. 9 illustrates a relationship between answer results A1, A2, $\cdots$, An $\cdots$, and A32768 for 15 questions and first to twentieth preference patterns PT1, PT2, $\cdots$, and PT20. Fig. 9 illustrates that the answer results A1, A2, $\cdots$, An $\cdots$, and A32768 are classified into 20 clusters.

For example, statistical processing and cluster analysis are performed on answer results of 30,000 users, and answer results having characteristics of similar preferences are collected to generate clusters, and the clusters are classified into 20 preference patterns PT1, PT2, $\cdots$, and PT20.

As described above, the answer results A1, A2, $\cdots$, An $\cdots$, and A32768 are classified into the first to twentieth preference patterns PT1, PT2, $\cdots$, and PT20, and each of the answer results A1, A2, $\cdots$, An $\cdots$, and A32768 is associated with any one of the preference patterns PT1, PT2, $\cdots$, and PT20.

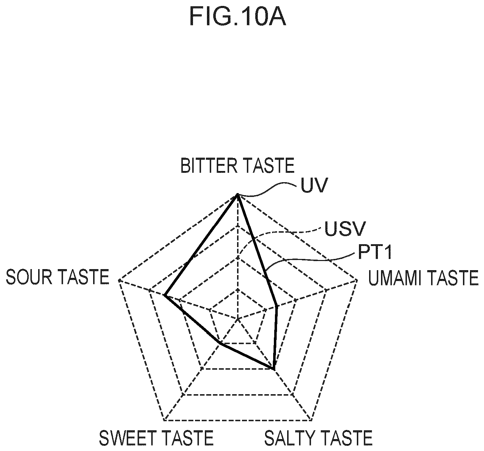

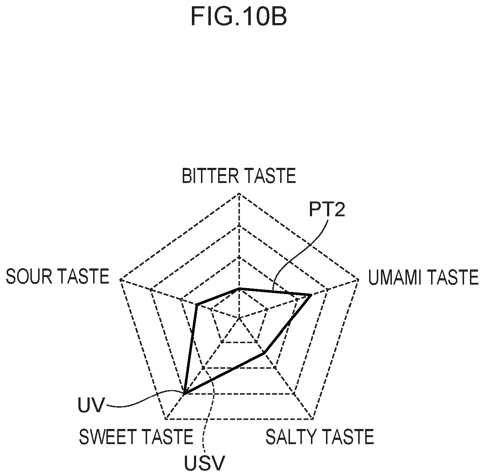

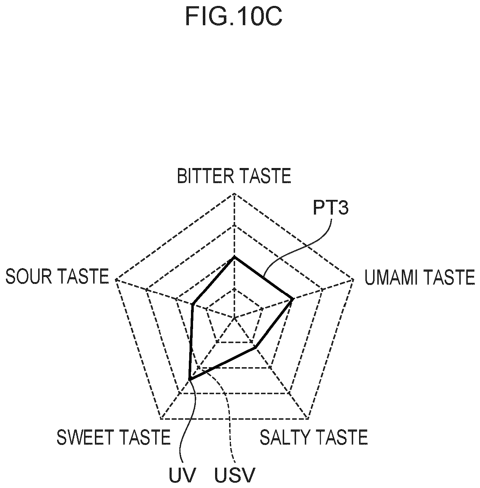

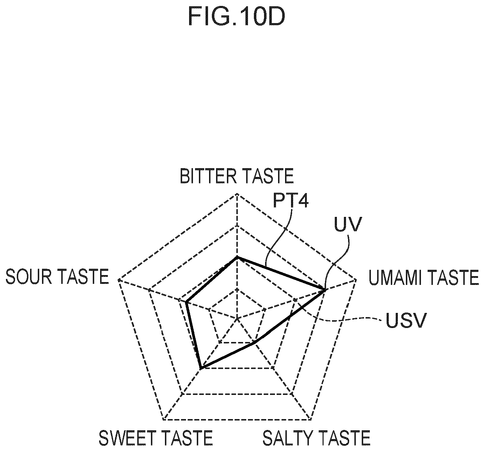

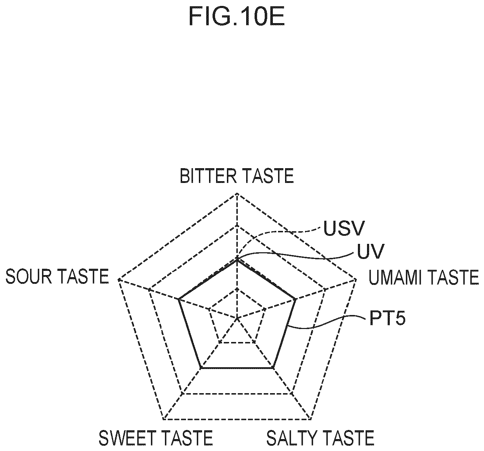

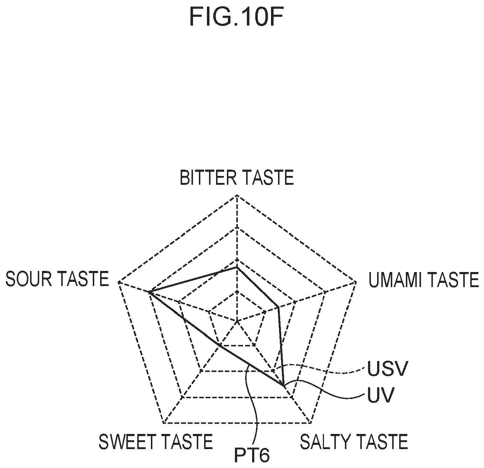

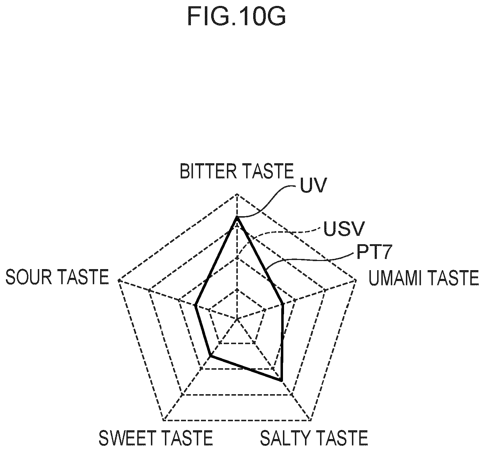

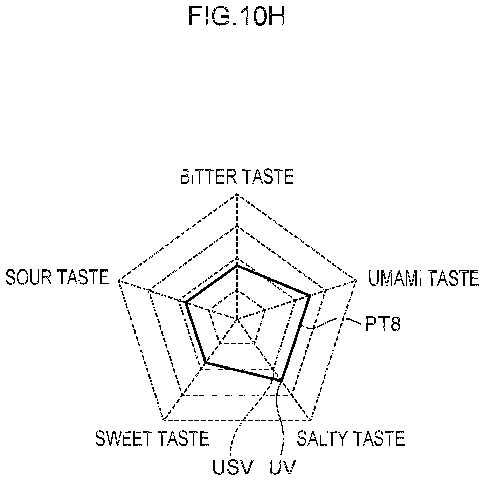

Figs. 10A, 10B, 10C, 10D, 10E, 10F, 10G, and 10H respectively exemplify the first to eighth preference patterns PT1, PT2, PT3, PT4, PT5, PT6, PT7, and PT8 among the first to twentieth preference patterns PT1, PT2, $\cdots$, and PT20. Figs. 10A, 10B, 10C, 10D, 10E, 10F, 10G, and 10H illustrate a correspondence relationship between the first to twentieth preference patterns PT1, PT2, $\cdots$, and PT20 stored in the pattern preference evaluation value storage unit 1012 and the user preference evaluation value UV.

The first preference pattern PT1 is a preference pattern "a bitter taste and a sour taste are acceptable", the second preference pattern PT2 is a preference pattern "an umami taste and a sweet taste are acceptable", the third preference pattern PT3 is a preference pattern "a sweet taste is acceptable ", the fourth preference pattern PT4 is a preference pattern "an umami taste is acceptable", the fifth preference pattern PT5 is a preference pattern "acceptance of a bitter taste, a salty taste, a sour taste, a sweet taste, and an umami taste is balanced", the sixth preference pattern PT6 is a preference pattern "a salty taste and a sour taste are acceptable", the seventh preference pattern PT7 is a preference pattern "a bitter taste is acceptable", and the eighth preference pattern PT8 is a preference pattern "an umami taste and a salty taste are acceptable".

As illustrated in Figs. 10A, 10B, 10C, 10D, 10E, 10F, 10G, and 10H, the user preference evaluation value UV for each of a plurality of preference evaluation topics (for example, respective preference evaluation topics of a bitter taste, a salty taste, a sour taste, a sweet taste, and an umami taste) regarding the sense of taste is associated with the first to twentieth preference patterns PT1, PT2, ···, and PT20.

The 20 preference patterns PT1, PT2, ···, and PT20 are an example, and may be classified into first to N-th preference patterns in which N is 2 or more.

Although the sense of taste has been described, a question regarding a smell or a food taste may be prepared and answer results may be classified into first to N-th preference patterns.

A preference pattern may be set for each of the sense of taste, a smell, and a food taste, may be set for each combination of two of the sense of taste, a smell, and a food taste, or may be set for the sense of taste, a smell, and a food taste.

In a case in which all the answers are selected on the question/answer screen 510, the user presses a confirm button 511. In a case in which the confirm button 511 is pressed, the answer reception unit 1070 receives an answer of the user to the question.

The evaluation value generation unit 1080 generates the user preference evaluation value UV on the basis of the answer received by the answer reception unit 1070 and associates the user preference evaluation value UV with the user. As an example, the answer result of the user ID1 is indicated by a preference vector A1 shown in the above Formula (2), and the preference vector A1 belongs to the first preference pattern PT1 (Fig. 10A). Thus, the user preference evaluation value UV corresponding to the first preference pattern PT1 (Fig. 10A) is associated with the user ID1. As a result, the user ID1 is evaluated to have the preference ("a bitter taste and a sour taste are acceptable") indicated by the user preference evaluation value UV corresponding to the first preference pattern PT1 (Fig. 10A).

In the preference pattern storage unit 1011, a user ID (for example, the user ID1) is stored in association with one (for example, the preference pattern PT1) among the first to twentieth preference patterns PT1, PT2, ···, and PT20.

The user attribute data AD may be acquired on the question/answer screen 510. As a result, the user attribute storage unit 1095 stores the user attribute data AD indicating attributes such as a gender (for example, male), an age (for example, sixties), and a residential place (for example, TOHOKU) of the user in association with the user ID (for example, the user ID1).

(Reception Unit)

The "preferred product information presentation program" is executed, the following processes of reception of a presentation request, determination, and preferred product information presentation are executed.

The reception unit 1030 receives a request for presentation of information regarding a product conforming to a preference of a user.

The presentation request does not depend on the intention of the user. The request may be made by the user with intention, or may be a recommendation by another person, for example, an administrator of a homepage.

The information regarding the product for which the presentation request is received is a beverage, a food, or a combination of a beverage and a food. The information is related to, for example, an "item of wine conforming to a preference of a user", an "item of sake conforming to a preference of a user", an "item of beer conforming to a preference of a user", an "item of coffee conforming to a preference of a user", an "item of black tea conforming to a preference of a user", an "item of croquettes conforming to a preference of a user", an "item of tonkatsu conforming to a preference of a user", an "item of Japanese noodle soup conforming to a preference of a user", a "combination of wine and food (dish) conforming to a preference of a user", a "combination of sake and food (dish) conforming to a preference of a user", a "combination of beer and food (dish) conforming to a preference of a user", a "combination of coffee and food (dish) conforming to a preference of a user", and a "combination of black tea and food (dish) conforming to a preference of a user".

A request for presenting information of a store that provides and sells a product as information related to the product is received. The information is, for example, "information regarding a store that provides (sells) an item of wine conforming to a preference of a user", "information regarding a store that provides (sells) an item of sake conforming to a preference of a user", "information regarding a store that provides (sells) an item of beer conforming to a preference of a user", "information regarding a store that provides (sells) an item of coffee conforming to a preference of a user", "information regarding a store that provides (sells) an item of black tea conforming to a preference of a user", "information regarding a store that provides (sells) an item of black tea conforming to a preference of a user", "information regarding a store that provides (sells) an item of croquettes conforming to a preference of a user", an "item of tonkatsu conforming to a preference of a user", "information regarding a store that provides (sells) an item of Japanese noodle soup conforming to a preference of a user", "information regarding a store that provides (sells) a combination of wine and food (dish) conforming to a preference of a user", "information regarding a store that provides (sells) a combination of sake and food (dish) conforming to a preference of a user", "information regarding a store that provides (sells) a combination of beer and food (dish) conforming to a preference of a user", "information regarding a store that provides (sells) a combination of coffee and food (dish) conforming to a preference of a user", and "information regarding a store that provides (sells) a combination of black tea and food (dish) conforming to a preference of a user".

Taking the product "item of wine conforming to a preference of a user" as an example, in a case in which the following event occurs, a presentation request is received, and the "item of wine conforming to the preference of the user" is presented to the user.

· In a case in which the user presses a button of "present recommended wine" on the screen of the display device 17 of the user-side terminal 130
· In a case in which the user presses a button of "present recommended wine matching this dish" on the screen of the display device 17 of the user-side terminal 130
· In a case in which the user enters a search word related to "wine" into a search box on the screen of the display device 17 of the user-side terminal 130
· In a case in which the user presses a button for confirming purchase of "a product related to wine" on the screen of the display device 17 of the user-side terminal 130

Taking the case of "information regarding a store that provides (sells) croquettes conforming to a preference of a user" as an example, in a case in which the following event occurs, a presentation request is received, and "information regarding a store that provides a specific dish conforming to a preference of a user" is presented.

· In a case in which the user presses a button of "search for a store selling recommended croquettes" on the screen of the display device 17 of the user-side terminal 130
· In a case in which the user presses a button of "search for a store selling recommended croquettes matching this beverage" on the screen of the display device 17 of the user-side terminal 130
· In a case in which the user enters a search word related to "croquettes" into the search box on the screen of the display device 17 of the user-side terminal 130
· In a case in which the user presses a button for confirming purchase of "a product related to croquettes" on the screen of the display device 17 of the user-side terminal 130

(Determination Unit)

In response to the presentation request received by the reception unit 1030, the determination unit 1040 extracts the user preference evaluation value UV associated with the user ID from the user preference evaluation value storage unit 1010, compares the extracted user preference evaluation value UV with the corresponding item evaluation value IV stored in the item evaluation value storage unit 1020, and determines a degree of coincidence between the two values.

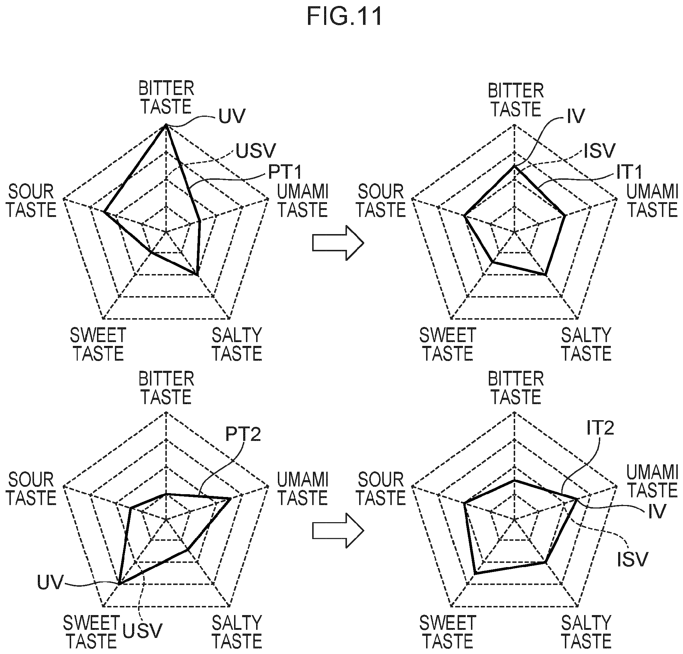

Fig. 11 illustrates content performed by the determination unit 1040.

The upper part of Fig. 11 illustrates a relationship between the user preference evaluation value UV associated with the first preference pattern PT1 and the item evaluation value IV associated with the item IT1 of a beverage (for example, coffee). The lower part of Fig. 11 illustrates a relationship between the user preference evaluation value UV associated with the second preference pattern PT2 and the item evaluation value IV associated with the item IT2 of the beverage (for example, coffee).

First, the determination unit 1040 acquires information regarding a user ID (for example, the user ID1) to which information regarding a product is to be presented (for example, "presentation of an item of coffee item conforming to the preference of the user"). The information regarding the user ID may be acquired, for example, according to a login operation.

Next, as illustrated in the upper part of Fig. 11, the first preference pattern PT1 associated with the user ID1 is extracted from the preference pattern storage unit 1011. The user preference evaluation value UV associated with the first preference pattern PT1 is extracted from the user preference evaluation value storage unit 1010.

The user preference evaluation value UV for a bitter taste associated with the first preference pattern PT1 is a value greater than the user preference reference value USV, and the user preference evaluation value UV for a sweet taste associated with the first preference pattern PT1 is a smaller value than the user preference reference value USV.

The determination unit 1040 extracts the item evaluation value IV for each of the items IT1 and IT2 in the category of coffee from the item evaluation value storage unit 1020 according to the presentation request received by the reception unit 1030 (for example, "presentation of an item of coffee conforming to a preference of a user ").

The item evaluation value IV for a bitter taste associated with the item IT1 is a value greater than the item reference value ISV, and the item evaluation value IV for a sweet taste is a value smaller than the item reference value ISV. On the other hand, the item evaluation value IV for a bitter taste associated with the item IT2 is a value smaller than the item reference value ISV, and the item evaluation value IV for a sweet taste is a value greater than the item reference value ISV.

The item evaluation value IV and the user preference evaluation value UV are compared for each of the evaluation topics (a sweet taste, a sour taste, a salty taste, a bitter taste, and an umami taste), and the degree of coincidence between the two values is determined. For example, a deviation between the item evaluation value IV and the user preference evaluation value UV is obtained for each of the evaluation topics (a sweet taste, a sour taste, a salty taste, a bitter taste, and an umami taste), and it is determined that the degree of coincidence between the item evaluation value IV and the user preference evaluation value UV becomes higher as an average value of the deviations becomes smaller.

The comparison between the user preference evaluation value UV and the item evaluation value IV is performed by, for example, comparing a relative numerical value UDE (for example, +2.0) with respect to the user preference reference value USV (for example, 0.0) and a relative numerical value IDE (for example, +2.0) with respect to the item reference value ISV (for example, 0.0).

The user preference evaluation value UV for a bitter taste and the user preference evaluation value UV for a sweet taste associated with the first preference pattern PT1 are respectively compared with the item evaluation value IV for a bitter taste and the item evaluation value IV for a sweet taste associated with the item IT1. The user preference evaluation value UV for a bitter taste and the user preference evaluation value UV for a sweet taste associated with the first preference pattern PT1 are respectively compared with the item evaluation value IV for a bitter taste and the item evaluation value IV for a sweet taste associated with the item IT2.

As a result of comparison between the two values, the item evaluation value IV for a bitter taste and the item evaluation value IV for a sweet taste associated with the item IT1 have a higher degree of coincidence with the user preference evaluation value UV in terms of "a bitter taste being stronger than the reference and a sweet taste being weaker than the reference". Therefore, it may be determined that the item IT1 having a higher degree of coincidence between the user preference evaluation value UV and the item evaluation value IV is to be presented to the user ID1.

In a case in which similar determination is performed for another user ID2, as illustrated in the lower part of Fig. 11, the second preference pattern PT2 associated with the user ID2 is extracted from the preference pattern storage unit 1011. The user preference evaluation value UV associated with the second preference pattern PT2 is extracted from the user preference evaluation value storage unit 1010.

The user preference evaluation value UV for an umami taste associated with the second preference pattern PT2 is a value greater than the user preference reference value USV, and the user preference evaluation value UV for a bitter taste associated with the second preference pattern PT2 is a value smaller than the user preference reference value USV.

The item evaluation value IV for an umami taste associated with the item IT1 is a value similar to the item reference value ISV, and the item evaluation value IV for a bitter taste is a value greater than the item reference value ISV. On the other hand, the item evaluation value IV for an umami taste associated with the item IT2 is a value greater than the item reference value ISV, and the item evaluation value IV for a bitter taste is a value smaller than the item reference value ISV.

The user preference evaluation value UV for an umami taste and the user preference evaluation value UV for a bitter taste associated with the second preference pattern PT2 are respectively compared with the item evaluation value IV for an umami taste and the item evaluation value IV for a bitter taste associated with the item IT1. The user preference evaluation value UV for an umami taste and the user preference evaluation value UV for a bitter taste associated with the second preference pattern PT2 are respectively compared with the item evaluation value IV for an umami taste and the item evaluation value IV for a bitter taste associated with the item IT2.

As a result of comparison between the two values, the item evaluation value IV for an umami taste and the item evaluation value IV for a bitter taste associated with the item IT2 have a higher degree of coincidence with the user preference evaluation value UV in terms of "an umami taste being stronger than the reference, and a bitter taste being weaker than the reference". Therefore, it may be determined that the item IT2 having a higher degree of coincidence between the user preference evaluation value UV and the item evaluation value IV is to be presented to the user ID2.

Although the sense of taste has been described, in a similar manner for a smell or a food taste, the user preference evaluation value UV may be compared with the item evaluation value IV for a corresponding item and the degree of coincidence between the two values may be determined.

(Product Information Presentation Unit)

The product information presentation unit 1050 presents information regarding a product conforming to a preference of a user according to a determination result from the determination unit 1040.

Hereinafter, each example will be described.

(Example 1)

As a result of determination performed by the determination unit 1040 by comparing a numerical value of the user preference evaluation value UV with a numerical value of the item evaluation value IV, the product information presentation unit 1050 displays at least one of a beverage or a food of an item for which numerical values of the two values are closer to each other than other items on the screen of the display device 17 of the user-side terminal 130.

Although the category of coffee is exemplified in Example 1, the present invention can be similarly applied to at least one of other categories of beverages and foods.

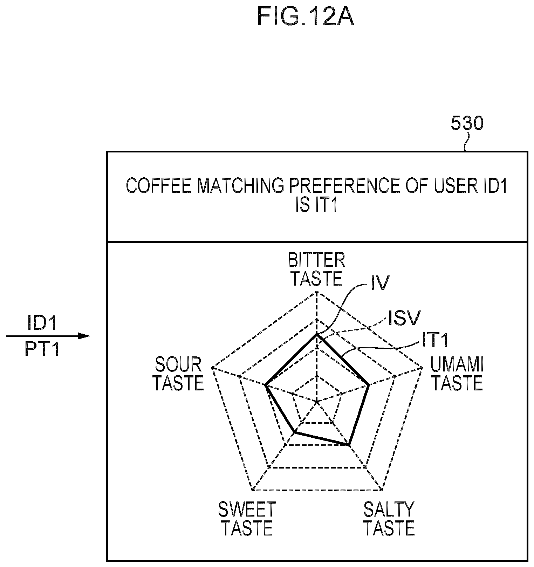

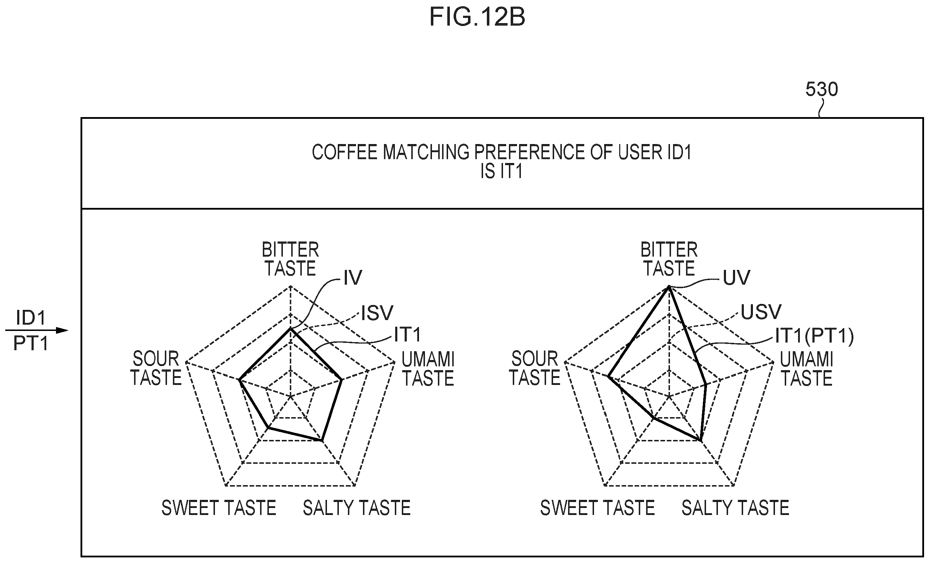

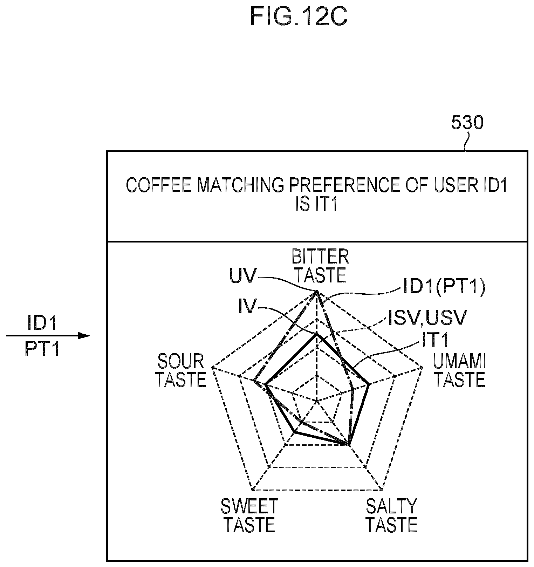

Figs. 12A, 12B, and 12C exemplify a preferred product information presentation screen 530 displayed on the display screen of the user-side terminal 131 of the user ID1 in response to a request to present an "item of coffee conforming to a preference of a user" to the user ID1.

The administrator has a management authority such as changing content displayed on the preferred product information presentation screen 530 illustrated in Figs. 12A, 12B, and 12C via management screen (not illustrated) of the administrator-side terminal 101. The preferred product information presentation screen 530 may be managed by the manufacturing institution COM1 or the store STO1 via management screen (not illustrated) of the manufacturing institution-side terminal 111 or the store-side terminal 121. In this case, the manufacturing institution COM1 or the store STO1 may limit an item presented on the preferred product information presentation screen 530 to an item of a product manufactured by the manufacturing institution COM1 or an item of a product sold and provided by the store STO1.

As illustrated in the upper part of Fig. 11, it is assumed that it is determined that the item IT1 having a higher degree of coincidence between the user preference evaluation value UV and the item evaluation value IV out of the items IT1 and IT2 of coffee is to be presented to the user ID1.

Therefore, as illustrated in Fig. 12A, the product information presentation unit 1050 displays information such as "an item of coffee conforming to the preference of user ID1 is the item IT1" and information of a radar chart of the item evaluation value IV associated with the item IT1 on the display screen of the user-side terminal 131 of the user ID1.

As illustrated in Fig. 12B, in addition to a radar chart for the item evaluation value IV associated with the item IT1, a radar chart for the user preference evaluation value UV associated with the user ID1 may be displayed together.

As illustrated in Fig. 12C, the user preference evaluation value UV associated with the user ID1 may be superimposed and displayed on the radar chart for the item evaluation value IV associated with the item IT1.

Only one item (for example, the item IT1) that most conforms to a preference of a user may be presented to the user among a plurality of items (for example, items IT1, IT2, ···). In a case in which it is determined that there are a plurality of items conforming to a preference of a user, all of the plurality of items or a plurality of top items determined to conform to the preference of the user may be presented to the user. In this case, the plurality of items to be presented to the user may be given priority (order of recommendation).

In response to a request to present the "item of coffee conforming to a preference of a user" to the user ID2", the information that "an item of coffee conforming to the preference of the user ID2 is the item IT2" and information of a radar chart for the item evaluation value IV associated with the item IT2 are displayed on the preferred product information presentation screen 530 (refer to Fig. 11).

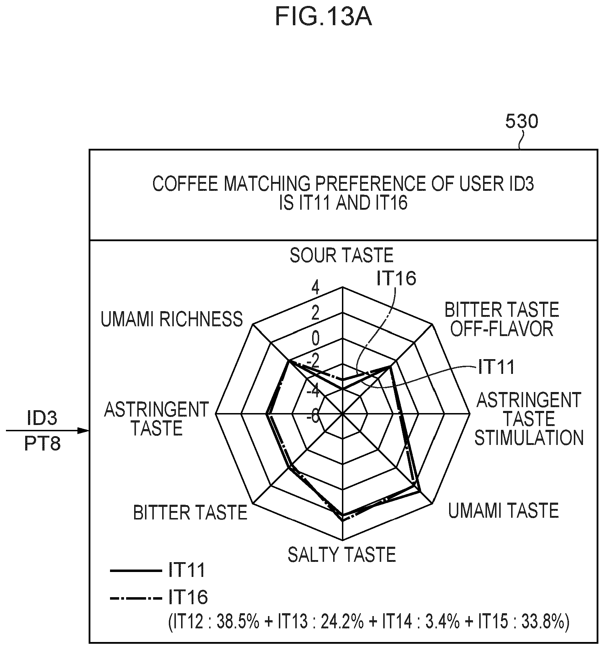

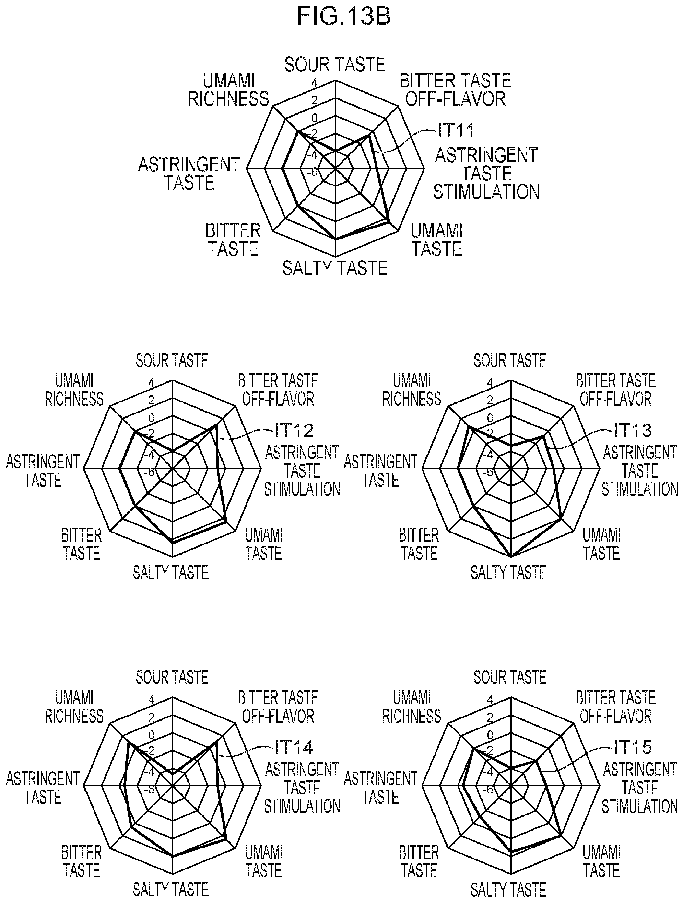

Fig. 13A illustrates a preferred product information presentation screen 530 displayed on the display screen of the user-side terminal 130 of the user ID3 in response to a request to present "an item of coffee conforming to a preference of a user" to the user ID3. Fig. 13B illustrates the item evaluation value IV associated with each of the items IT11, IT12, IT13, IT14, and IT15 in the category of coffee in a radar chart.

It is assumed that the eighth preference pattern PT8 "an umami taste and a salty taste are acceptable" illustrated in Fig. 10H is associated with user ID3. Therefore, as illustrated in Fig. 13A, among the items IT11 to IT15 of coffee, the item IT11 having the highest degree of coincidence between the item evaluation value IV and the user preference evaluation value UV associated with the eighth preference pattern PT8 is presented to the user ID3. By blending the coffee of each of the item IT12, the IT13, the IT14, and the IT15 at a predetermined ratio (38.5%: 24.2%: 3.4%: 33.8%), the degree of coincidence between the user preference evaluation value UV and the item evaluation value IV can be increased to be equal to or higher than that of the item IT11. Thus, as illustrated in Fig. 13A, the item IT16 of coffee blended as described above may be presented to the user ID3 together with the item IT11.

(Example 2)

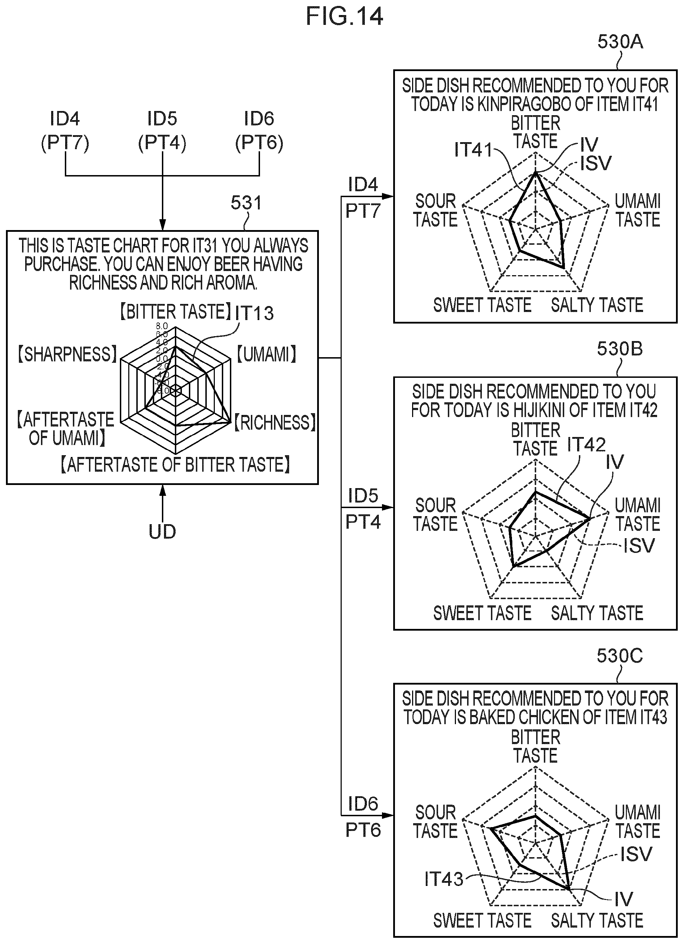

Fig. 14 exemplifies preferred product information presentation screens 530A, 530B, and 530C displayed on the display screen of the user-side terminal 130 of each of the user ID4, the user ID5, and the user ID6 in response to a request to present "an item of a side dish conforming to a preference of a user" to one of the user ID4, the user ID5, and the user ID6.

For example, a tablet terminal attached to a shopping cart of the store STO1 (supermarket) may be used as the user-side terminal 130. The store STO1 has a management authority such as changing content displayed on the preferred product information presentation screens 530A, 530B, and 530C and a purchase history screen 531 illustrated in Fig. 14 via management screen (not illustrated) of the store-side terminal 121. The store STO1 may limit items presented on the preferred product information presentation screens 530A, 530B, and 530C to items of products that can be handled by the store STO1.

In response to a login operation in the user-side terminal 130, the determination unit 1040 can acquire a user ID of a user who has performed the login operation, that is, the user ID4, the user ID5, or the user ID6.

The user ID4 is associated with the seventh preference pattern PT7 "a bitter taste is acceptable" illustrated in Fig. 10G.

The user ID5 is associated with the fourth preference pattern PT4 "an umami taste is acceptable" illustrated in Fig. 10D.

The user ID6 is associated with the sixth preference pattern PT6 "a salty taste and a sour taste are acceptable" illustrated in Fig. 10F.

Here, a purchase history is associated with each user ID. Per-user purchase history data UD includes a topic of a user ID, a topic of a purchased item IT (product name), and a topic of the number of purchases (purchase amount). The per-user purchase history data UD is stored in the purchase history data storage unit 1090 of the server 200. Per-preference-pattern purchase history data PD is stored in the purchase history data storage unit 1090. The per-preference-pattern purchase history data PD is data of a purchase history associated with each of the preference patterns PT1 to PT20. The per-preference-pattern purchase history data PD includes a topic of a preference pattern, a topic of a purchased item IT (product name), and a topic of the number of purchases (purchase amount).

For example, in a case in which the user ID4 performs a login operation on the user-side terminal 130, data of the item IT31 in the category of beer purchased by the user ID4 in the past is extracted with reference to the per-user purchase history data UD stored in the purchase history data storage unit 1090. Data of the item evaluation value IV associated with the item IT31 is extracted from the item evaluation value storage unit 1020. The purchase history screen 531 is displayed on the display screen of the user-side terminal 130 on the basis of the extracted data of the item evaluation value IV associated with the item IT31.

On the purchase history screen 531, information of a radar chart for the item evaluation value IV associated with the item IT31 is displayed together with information such as "This is a taste chart for IT31 you always purchase. You can enjoy beer having richness and rich aroma.".

Data of the item evaluation value IV for each item of the category of a side dish is extracted from the item evaluation value storage unit 1020, and the item evaluation value IV associated with each item of the side dish is compared with the item evaluation value IV associated with the item IT31, and the degree of compatibility between the two values is determined. As a result, as side dishes conforming to the item IT31, the item IT41 of "kinpiragobo", the item IT42 of "hijikini", and the item IT43 of "baked chicken" are extracted as presentation candidates for the user ID4.

The user preference evaluation value UV for the seventh preference pattern PT7 associated with the user ID4 is compared with each of the item evaluation value IV associated with the item IT41, the item evaluation value IV associated with the item IT42, and the item evaluation value IV associated with the item IT43, and the degree of coincidence between the two values is determined.

As a result of comparison between the two values, the degree of coincidence of the item evaluation value IV associated with the item IT41 with the user preference evaluation value UV is high in that "a bitter taste is stronger than the reference". Therefore, it may be determined that the item IT41 having the highest degree of coincidence between the user preference evaluation value UV and the item evaluation value IV is to be presented to the user ID4.

As a result, the display screen of the user-side terminal 130 transitions from the purchase history screen 531 to the preferred product information presentation screen 530A, and information of a radar chart for the item evaluation value IV associated with the item IT41 is displayed together with information such as "the side dish recommended to you for today is kinpiragobo of the item IT41" on the preferred product information presentation screen 530A.

In a case in which a user who has performed a login operation on the user-side terminal 130 is the user ID5, similarly, the user preference evaluation value UV for the fourth preference pattern PT4 associated with the user ID5 is compared with each of the item evaluation value IV associated with the item IT41, the item evaluation value IV associated with the item IT42, and the item evaluation value IV associated with the item IT43, and the degree of coincidence between the two values is determined.

As a result of comparison between the two values, the degree of coincidence of the item evaluation value IV associated with the item IT42 with the user preference evaluation value UV is high in that "an umami taste is stronger than the reference". Therefore, it may be determined that the item IT42 having the highest degree of coincidence between the user preference evaluation value UV and the item evaluation value IV is to be presented to the user ID5.

As a result, information of a radar chart for the item evaluation value IV associated with the item IT42 is displayed together with information such as "the side dish recommended to you for today is hijikini of the item IT42" on the preferred product information presentation screen 530B.

In a case in which a user who has performed a login operation on the user-side terminal 130 is the user ID6, similarly, the user preference evaluation value UV for the sixth preference pattern PT6 associated with each of the user ID6 is compared with the item evaluation value IV associated with the item IT41, the item evaluation value IV associated with the item IT42, and the item evaluation value IV associated with the item IT43, and the degree of coincidence between the two values is determined.

As a result of comparison between the two values, the degree of coincidence between the item evaluation value IV associated with the item IT43 and the user preference evaluation value UV is high in that "a salty taste and a sour taste are stronger than the reference". Therefore, it may be determined that the item IT43 having the highest degree of coincidence between the user preference evaluation value UV and the item evaluation value IV is to be presented to the user ID6.

As a result, the information of a radar chart for the item evaluation value IV associated with the item IT43 is displayed on the preferred product information presentation screen 530C together with information such as "the side dish recommended to you for today is baked chicken of the item IT43".

(Example 3)

Not only information regarding an item of at least one of a beverage or a food conforming to a preference of a user but also information regarding a manufacturing institution that manufactures an item conforming to a preference of a user or a store that sells and provides the item conforming to the preference of the user may be presented to the user.

For example, in Example 2 described above, even in the case of the same kinpiragobo, hijikini, or baked chicken, the sense of taste, a smell, or a food taste is different if manufacturing institutions (for example, food manufacturers) or stores (for example, supermarkets, convenience stores, or specialized stores that sell and provide foods) are different.

The item evaluation value storage unit 1020 stores data of the item evaluation value IV in which the item IT of at least one of a beverage or a food is associated with a manufacturing institution (for example, COM1, COM2, COM3, or COM4) that manufactures the item IT or/and a store (for example, STO1, STO2, or STO3) that sells and provides the item IT.

As a result of comparing a numerical value of the user preference evaluation value UV with a numerical value of the item evaluation value IV, the product information presentation unit 1050 presents a user with information regarding the manufacturing institution or/and the store associated with the item IT for which the numerical values of the two values are closer to each other than the item IT of other manufacturing institutions or/and stores.

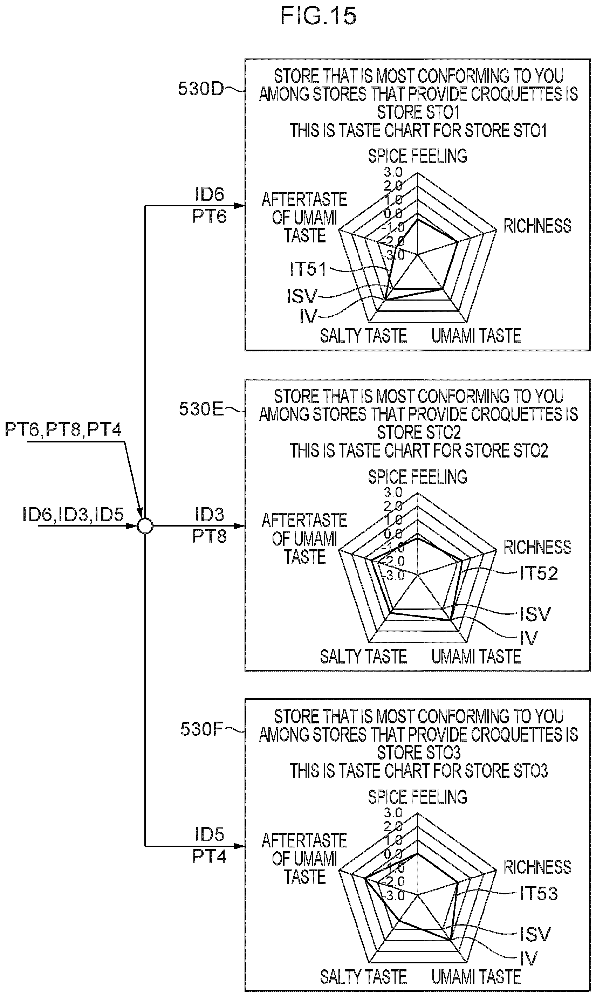

Fig. 15 exemplifies preferred product information presentation screens 530D, 530E, and 530F. Fig. 15 illustrates a radar chart for item evaluation values IV associated with items IT51, IT52, and IT53 of croquettes sold and provided at different stores STO1, STO2, and STO3, respectively. The information providing institution PRO1, for example, the information providing company PRO1 that provides a user with information regarding a beverage or food store, has a management authority such as changing content displayed on the preferred product information presentation screens 530D, 530E, and 530F illustrated in Fig. 15 via management screen (not illustrated) of the information providing institution-side terminal 141.

It is assumed that the eighth preference pattern PT8 "an umami taste and a salty taste are acceptable" illustrated in Fig. 10H is associated with user ID3.

The user ID5 is associated with the fourth preference pattern PT4 "an umami taste is acceptable" illustrated in Fig. 10D.

The user ID6 is associated with the sixth preference pattern PT6 "a salty taste and a sour taste are acceptable" illustrated in Fig. 10F.

For example, in a case in which the user ID3 performs a login operation on the user-side terminal 130, the user preference evaluation value UV for the eighth preference pattern PT8 associated with the user ID3 is compared with each of the item evaluation value IV associated with the item IT51, the item evaluation value IV associated with the item IT52, and the item evaluation value IV associated with the item IT53, the degree of coincidence between the two values is determined.

As a result of comparison between the two values, the degree of coincidence of the item evaluation value IV associated with the item IT52 with the user preference evaluation value UV is high in that "an umami taste and a salty taste are stronger than the reference." Therefore, it may be determined that information regarding the item IT52 having the highest degree of coincidence between the user preference evaluation value UV and the item evaluation value IV and the store STO2 that sells and provides the item IT52 is to be presented to the user ID3.

As a result, a preferred product information presentation screen 530E is displayed on the display device 17 of the user-side terminal 130 of the user ID3. On the preferred product information presentation screen 530E, information of a radar chart for the item evaluation value IV associated with the item IT52 is displayed together with information such as "A store that is most conforming to you among stores that provide croquettes is the store STO2. This is a taste chart for the store STO2.".

In a case in which a user who has performed a login operation on the user-side terminal 130 is the user ID5, similarly, the user preference evaluation value UV for the fourth preference pattern PT4 associated with the user ID5 is compared with each of the item evaluation value IV associated with the item IT51, the item evaluation value IV associated with the item IT52, and the item evaluation value IV associated with the item IT53, and the degree of coincidence between the two values is determined.

As a result of comparison between the two values, the degree of coincidence of the item evaluation value IV associated with the item IT53 with the user preference evaluation value UV is high in that "an umami taste is stronger than the reference". Therefore, it may be determined that the information regarding the store STO3 that sells and provides the item IT53 and the item IT53 having the highest degree of coincidence between the user preference evaluation value UV and the item evaluation value IV is to be presented to the user ID5.

As a result, a preferred product information presentation screen 530F is displayed on the display device 17 of the user-side terminal 130 of the user ID5. On the preferred product information presentation screen 530F, information of a radar chart for the item evaluation value IV associated with the item IT53 is displayed together with information such as "A store that is most conforming to you among stores that provide croquettes is the store STO3. This is a taste chart for the store STO3.".

In a case in which a user who has performed a login operation on the user-side terminal 130 is the user ID6, similarly, the user preference evaluation value UV for the sixth preference pattern PT6 associated with the user ID6 is compared with each of the item evaluation value IV associated with the item IT51, the item evaluation value IV associated with the item IT52, and the item evaluation value IV associated with the item IT53, and the degree of coincidence between the two values is determined.

As a result of comparison between the two values, the degree of coincidence of the item evaluation value IV associated with the item IT51 with the user preference evaluation value UV is high in that "a salty taste is stronger than the reference". Therefore, it may be determined that the information regarding the store STO1 that sells and provides the item IT51 and the item IT51 having the highest degree of coincidence between the user preference evaluation value UV and the item evaluation value IV is to be presented to the user ID6.

As a result, the preferred product information presentation screen 530D is displayed on the display device 17 of the user-side terminal 130 of the user ID6. On the preferred product information presentation screen 530D, information of a radar chart for the item evaluation value IV associated with the item IT51 is displayed together with information such as "a store that is most conforming to you among stores that provide croquettes is the store STO1".

(Example 4)

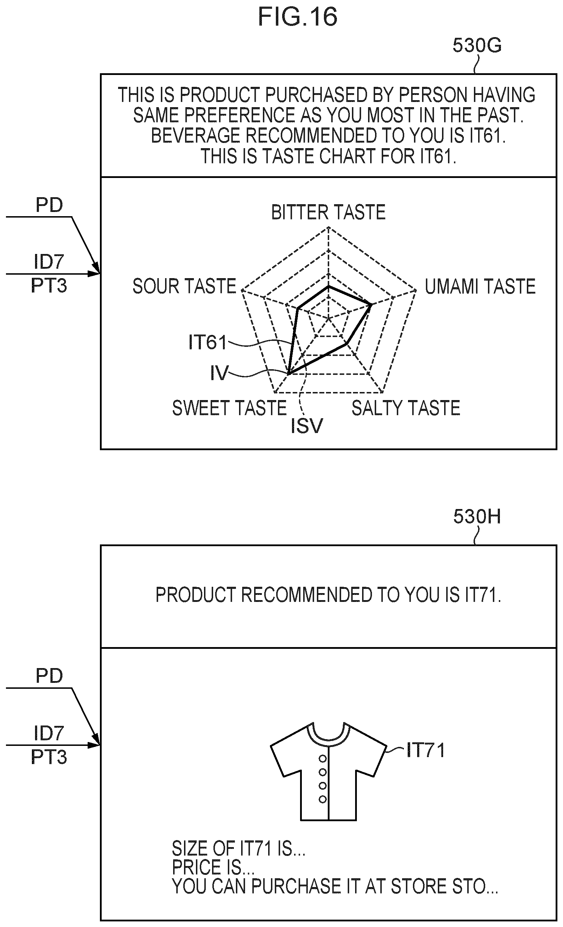

Fig. 16 illustrates preferred product information presentation screens 530G and 530H displayed on the display screen of the user-side terminal 130 of the user ID7 in response to a request to present "an item of a product conforming to a preference of a user" to the user ID7.

The user ID7 is associated with the third preference pattern PT3 "a sweet taste is acceptable" illustrated in Fig. 10C.

An item of a product to be presented to the user ID7 is the item included in the per-preference-pattern purchase history data PD described in Example 2. The item of the product may be a product other than a beverage and a food. That is, Example 4 relates to implementation content in which a product of an item purchased in the past by each user in the third preference pattern PT3 (a preference group in which a sweet taste is acceptable) to which the user ID7 belongs is recommended to the user ID7.

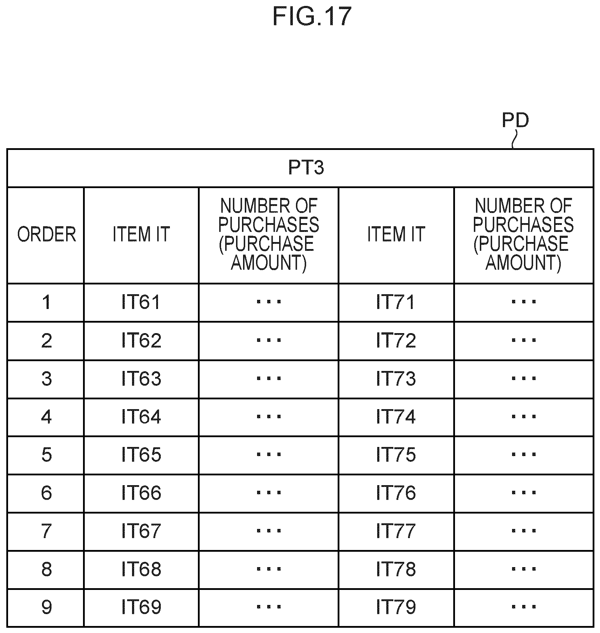

Fig. 17 illustrates a data structure of the per-preference-pattern purchase history data PD.

The per-preference-pattern purchase history data PD includes respective topics associated with a preference pattern (third preference pattern PT3), that is, a topic (for example, 1 to 9) of the order of the magnitude of the number of purchases (or a purchase amount), a topic of a purchased item IT (product name), and a topic of the number of purchases (or a purchase amount). The items IT61 to IT69 are beverages or foods. The items IT71 to IT79 are products other than beverages and foods, for example, clothing or books. For example, the item IT61 is an item of a beverage or a food purchased most by each user belonging to the third preference pattern PT3 in the past. The item IT71 is an item of a product other than a beverage and a food purchased most by each user belonging to the third preference pattern PT3 in the past. For example, it is assumed that the attribute "living in the Tokyo Metropolitan Area, male in twenties" occupies the largest number among the users belonging to the third preference pattern PT3. The "specific clothes" of the "specific clothing store" purchased most by users having the attribute of occupying the largest number may be set as the item IT71.

For example, in a case in which the user ID7 performs a login operation on the user-side terminal 130, data of the item IT61 purchased most by each user belonging to the third preference pattern PT3 in the past is extracted with reference to the per-preference-pattern purchase history data PD stored in the purchase history data storage unit 1090. Data of the item evaluation value IV associated with the item IT61 is extracted from the item evaluation value storage unit 1020. On the basis of the extracted data of the item evaluation value IV associated with the item IT61, a preferred product information presentation screen 530G is displayed on the display device 17 of the user-side terminal 130.

On the preferred product information presentation screen 530G, information of a radar chart for the item evaluation value IV associated with the item IT61 is displayed together with information such as "This is the product purchased by a person having the same preference as you most in the past. The beverage (or food) recommended to you is IT61. This is a taste chart for IT61.".

Similarly, with reference to the per-preference-pattern purchase history data PD stored in the purchase history data storage unit 1090, data of the item IT71 purchased most by each user belonging to the third preference pattern PT3 in the past is extracted. A preferred product information presentation screen 530H is displayed on the display screen of the user-side terminal 130 on the basis of the extracted data of the item IT71.

On the preferred product information presentation screen 530H, information for explaining the content of the product IT71 is displayed together with information such as "the product recommended to you is IT71".

Only one item (for example, the item IT61) among a plurality of items (for example, the items IT61 to IT69) may be presented to a user, or all of the plurality of items or a plurality of top items may be presented to the user. In this case, the plurality of items to be presented to the user may be given priority (order of recommendation).

(Example 5)

The product information presentation unit 1050 may present another user belonging to the preference pattern to which a user belongs as a matching target. This is because the users belonging to the same preference pattern have similar preference of beverages, foods, and products other than beverages and foods, and are considered to be compatible.

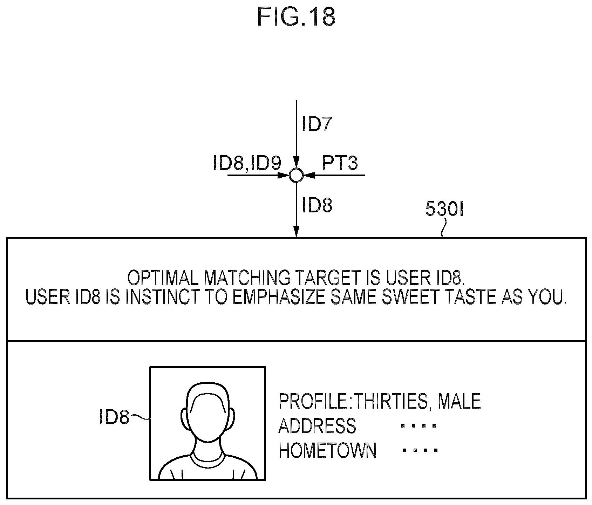

Fig. 18 illustrates a preferred product information presentation screen 530I displayed on the display screen of the user-side terminal 130 of the user ID7 in response to a request to present "another user having the same preference" to the user ID7.

The information providing institution PRO2, for example, the information providing company PRO2 that provides information regarding a matching target person to a user who desires the matching target person, has a management authority such as changing the content displayed on the preferred product information presentation screen 530I illustrated in Fig. 18 via management screen (not illustrated) of the information providing institution-side terminal 142. For example, it is assumed that information regarding an opposite sex that conforms to conditions desired by the user is provided. It is assumed that personal information of the user is stored in a personal information database (not illustrated) that the information providing institution PRO2 has an authority to manage.

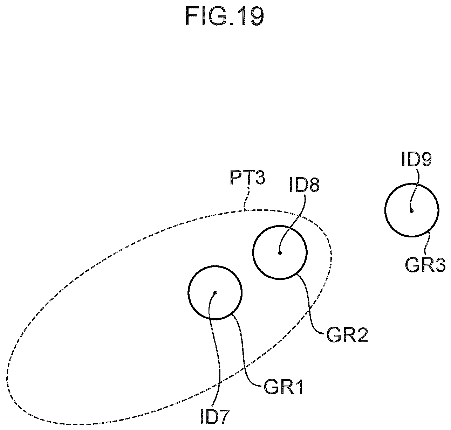

Fig. 19 illustrates a relationship between a user group GR1 of "twenties, female" belonging to the third preference pattern PT3 "a sweet taste is acceptable", a user group GR2 of "thirties, male" belonging to the same third preference pattern PT3, and a user group GR3 of "thirties, male" not belonging to the third preference pattern PT3.

It is assumed that the user ID7 belongs to the user group GR1, the user ID8 belongs to the user group GR2, and the user ID9 belongs to the user group GR3.

The user groups GR1, GR2, and GR3 are acquired on the basis of the user attribute data AD stored in the user attribute storage unit 1095 and the data of the preference patterns PT1 to PT20 associated with a user ID stored in the preference pattern storage unit 1011.

It is assumed that a matching desiring user ID7 (attribute "twenties, female") desires an attribute "thirties, male" as a matching target person.

Hereinafter, comparison is performed with a comparative example in which only the existing "matching program" is executed without executing the "preferred product information presentation program" of the present embodiment.

(Comparative Example)

In a case in which only the existing "matching program" is executed, there is a high possibility that the user ID9 of the user group GR3 ("thirties, male") not belonging to the third preference pattern PT3 is presented as a matching target person to the user ID7 according to the desired conditions "thirties, male". It is not possible to determine relative merits of matching between the user ID8 and the user ID9 depending on whether the user ID8 and the user ID9 belong to the third preference pattern PT3. Therefore, there is a high possibility that the user ID9 not belonging to the third preference pattern PT3 is presented to the user ID7 as an optimum (first candidate) matching target person, and mismatching may occur.

On the other hand, in a case in which the "preferred product information presentation program" of the present embodiment is executed, the user ID9 of the user group GR3 ("thirties, male") that does not belong to the third preference pattern PT3 can be excluded from a matching target person or can be determined as the next candidate according to the determination condition that the user ID9 does not belong to the third preference pattern PT3 that is the same as the user ID7 according to the desired condition of the same "thirties, male". The user ID8 of the user group GR2 ("thirties, male") belonging to the third preference pattern PT3 can be determined as an optimum (first candidate) matching target person according to the determination condition that the user ID8 belongs to the third preference pattern PT3 that is the same as that of the user ID7. Therefore, according to the present embodiment, the accuracy of matching can be improved compared with the prior art.

In a case in which the user ID7 performs a login operation on the user-side terminal 130 and enters the condition "a man in thirties is desired as a matching target person", the data stored in the preference pattern storage unit 1011 is referred to, and the data of the third preference pattern PT3 associated with the user ID7 is extracted. Next, the data stored in the user attribute storage unit 1095 and the preference pattern storage unit 1011 is referred to, and the user ID8 of the user group GR2 ("thirties, male") belonging to the third preference pattern PT3 same as that of the user ID7 is selected as a matching target. The data of the personal information of the user ID8 is extracted from the personal information database. On the preferred product information presentation screen 530I, the personal information for specifying the user ID8 is displayed together with information such as "The optimal matching target person is the user ID8. He is instinct to emphasize the same sweet taste as you.".

(Example 6)

In a case in which the manufacturing institution-side terminal 110, the store-side terminal 120, and the information providing institution-side terminal 140 access the server 200, the preference user information presentation screen 540 is displayed on the display device 17.

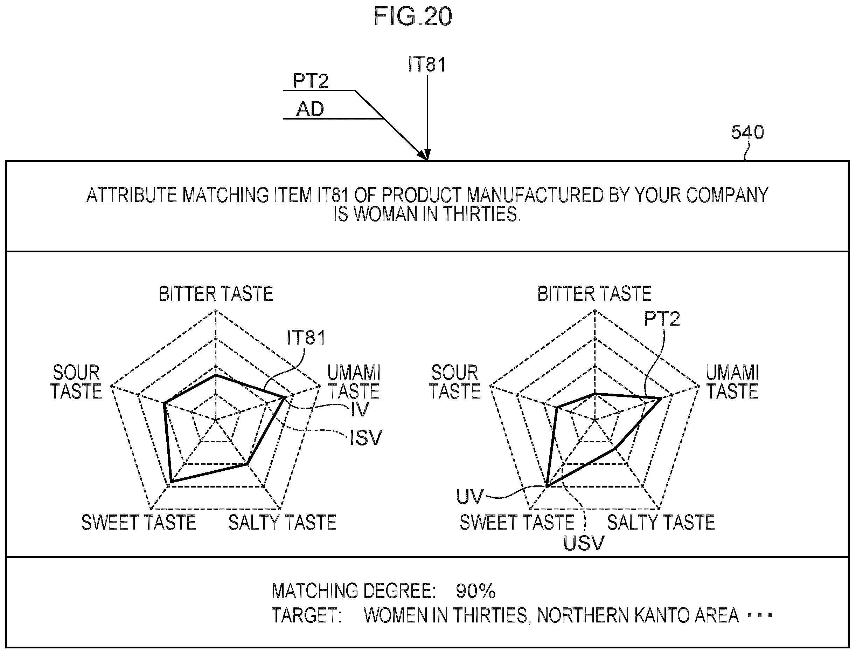

Fig. 20 illustrates a preference user information presentation screen 540. On the preference user information presentation screen 540, for example, information (preference user information) regarding a user who likes a product manufactured by the manufacturing institution COM 1 is displayed.

The administrator has a management authority such as changing content displayed on the preference user information presentation screen 540 illustrated in Fig. 20 via a management screen (not illustrated) of the administrator-side terminal 101. The manufacturing institution-side terminal 111 has the authority to access the preference user information regarding the product manufactured by the manufacturing institution COM1 that is an own institution.

The preference user information presentation screen 540 is displayed on the display device 17 of the manufacturing institution-side terminal 111 in response to a request to present "an attribute matching the item IT81 of the product manufactured by the manufacturing institution COM1".

On the preference user information presentation screen 540, information including a radar chart for the item evaluation value IV associated with the item IT81, the attribute of the user ("thirties, female") matching the item IT81 of the product, a matching degree evaluation value M, and a radar chart for the user preference evaluation value UV of the user (second preference pattern PT2) matching the item IT81 of the product are displayed together with information such as "the attribute matching the item IT81 of the product manufactured by your company is a woman in thirties".

In a case in which the request to present a "user attribute matching the item IT81 of the product manufactured by the manufacturing institution COM1" is received, the data of the item evaluation value IV for the item IT81 is extracted from the item evaluation value storage unit 1020. The data of the user preference evaluation value UV associated with each of the first to twentieth preference patterns PT1 to PT20 is extracted from the user preference evaluation value storage unit 1010.

The item evaluation value IV for the item IT81 and the user preference evaluation value UV are compared for each of the evaluation topics (a sweet taste, a sour taste, a salty taste, a bitter taste, and an umami taste), and the degree of coincidence between the two values is obtained. For example, a deviation between the item evaluation value IV and the user preference evaluation value UV is obtained for each of the evaluation topics (a sweet taste, a sour taste, a salty taste, a bitter taste, and an umami taste), and it is determined that the smaller the average value of the deviations, the higher the degree of coincidence between the item evaluation value IV and the user preference evaluation value UV, and the greater the matching degree evaluation value M. The matching degree evaluation value M is obtained for each of the first to twentieth preference patterns PT1 to PT20.

The comparison between the item evaluation value IV and the user preference evaluation value UV is performed by, for example, comparing a relative numerical value IDE (for example, +2.0) with respect to the item reference value ISV (for example, 0.0) and a relative numerical value UDE (for example, +2.0) with respect to the user preference reference value USV (for example, 0.0).

As a result, it is determined that the second preference pattern PT2 has the highest degree of coincidence between the item evaluation value IV and the user preference evaluation value UV among the first to twentieth preference patterns PT1 to PT20 ("the two values are coincident in that a sweet taste and an umami taste are strong, and are coincident in that a bitter taste, a sour taste, and a salty taste are weak"), and the matching degree evaluation value M is large (90%).

On the basis of the user attribute data AD stored in the user attribute storage unit 1095 and the data of the second preference pattern PT2 stored in the preference pattern storage unit 1011 and associated with the user ID, information including each user group forming the second preference pattern PT2 and the number of users for each user group is extracted. As a result, it is determined that the number of attributes "thirties, female" is the largest among the user groups forming the second preference pattern PT2.

The preference user information presentation screen 540 is configured according to the results determined as described above.

The matching degree evaluation values M for the other first and third to twentieth preference patterns PT1 and PT3 to PT20 and user attributes of the other first and third to twentieth preference patterns PT1 and PT3 to PT20 may be displayed together on the preference user information presentation screen 540.

Similarly, pieces of preference user information related to products manufactured by the manufacturing institutions COM2, COM3, and COM4 may be respectively displayed on the preference user information presentation screens 540 of the manufacturing institution-side terminals 112, 113, and 114. Similarly, pieces of preference user information related to products sold and provided by the stores STO1, STO2, and STO3 may be respectively displayed on the preference user information presentation screens 540 of the store-side terminals 121, 122, and 123.

Therefore, each of the manufacturing institutions COM1, COM2, COM3, and COM4 can accurately ascertain a target layer of the product manufactured by the institution. Similarly, each of the stores STO1, STO2, and STO3 can accurately ascertain a target layer of the product sold and provided by the store.

Next, a second embodiment will be described.

(Second Embodiment)

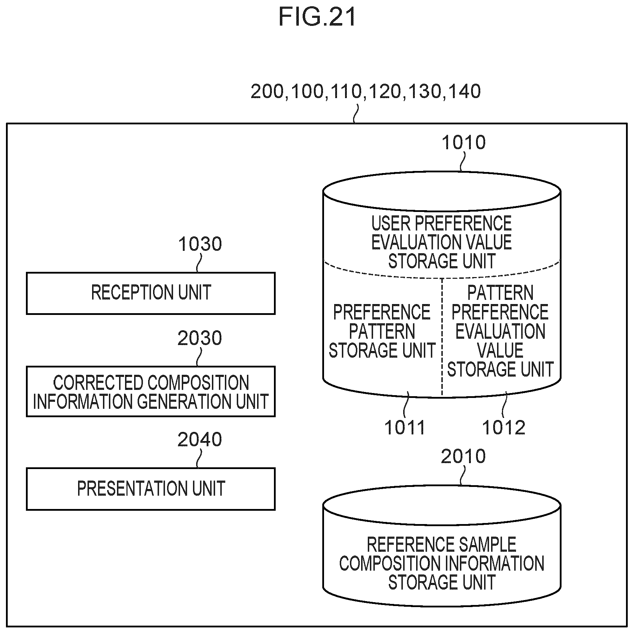

Fig. 21 is a block diagram exemplifying a functional configuration of a preferred beverage/food information presentation device according to a second embodiment. The functional configuration exemplified in Fig. 21 is provided in the server 200, the administrator-side terminal 100, the manufacturing institution-side terminal 110, the store-side terminal 120, the user-side terminal 130, and the information providing institution-side terminal 140.

The preferred beverage/food information presentation device includes a user preference evaluation value storage unit 1010, a reference sample composition information storage unit 2010, a reception unit 1030, a corrected composition information generation unit 2030, and a presentation unit 2040.

The same constituents as those of the first embodiment are denoted by the same reference numerals and reference signs, and the description thereof will be omitted as appropriate.

(Reception Unit)

By executing the "preferred beverage/food information presentation program", the following processes of reception of a presentation request, generation of corrected composition information, and presentation of preferred beverage/food information is executed.

The reception unit 1030 receives a presentation request for at least one of a beverage or a food conforming to a preference of a user. For example, a presentation request for composition information regarding the item IT21 of a beverage conforming to the preference of the user specified by the user ID2 is received.

(Corrected Composition Information Generation Unit)

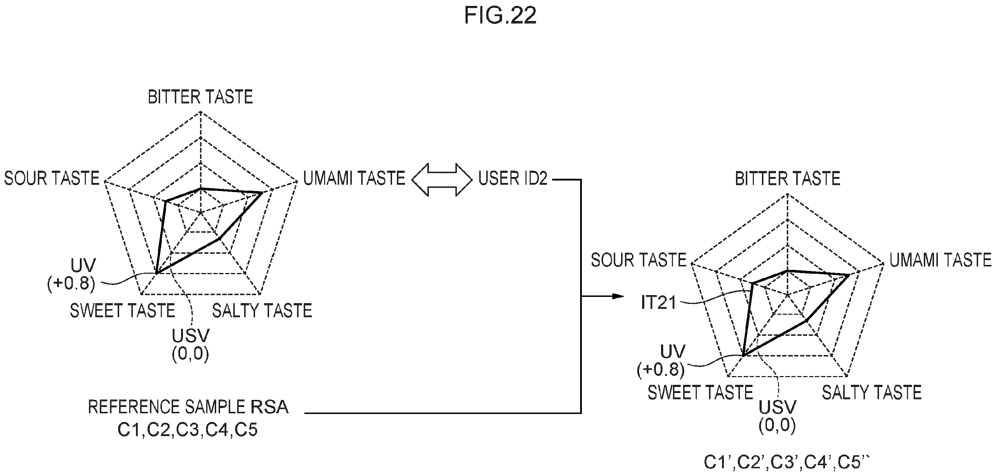

Fig. 22 exemplifies content of processing performed by the corrected composition information generation unit 2030.

In response to the presentation request received by the reception unit 1030, the corrected composition information generation unit 2030 extracts the relative numerical value UDE (for example, +0.8) with respect to the user preference reference value USV (for example, 0.0) associated with the user ID2 from the user preference evaluation value storage unit 1010, and corrects the composition information regarding the reference sample RSA by using the extracted relative numerical value UDE (for example, +0.8) with respect to the user preference reference value (for example, 0.0).

For example, composition information of a sweet taste, composition information of a sour taste, composition information of a salty taste, composition information of a bitter taste, and composition information of an umami taste of the reference sample RSA of the category to which the item IT21 of the beverage belongs are respectively denoted by C1, C2, C3, C4, and C5.

It is assumed that the sweet taste is constituted by composition information such as "C1: glucose $\alpha$ gram".

Therefore, regarding the sweet taste of the item IT21 of the beverage, if the composition information "C1: glucose $\alpha$ gram" of the reference sample RSA is changed to a corrected composition information "C1': glucose $\alpha'$ gram" by using the relative numerical value UDE (for example, +0.8) as follows according to the following Formula (3), a composition of a sweet taste conforming to the preference of the user ID is obtained.

$$\alpha'=\alpha\cdot(1+K\cdot UDE)\ \cdots(3)$$

Here, K is a predetermined constant.

Similarly, the remaining sour taste composition information C2, the salty taste composition information C3, the bitter taste composition information C4, and an umami taste composition information C5 are respectively changed to sour taste corrected composition information C2', salty taste corrected composition information C3', bitter taste corrected composition information C4', and umami taste corrected composition information C5'.

(Presentation Unit)

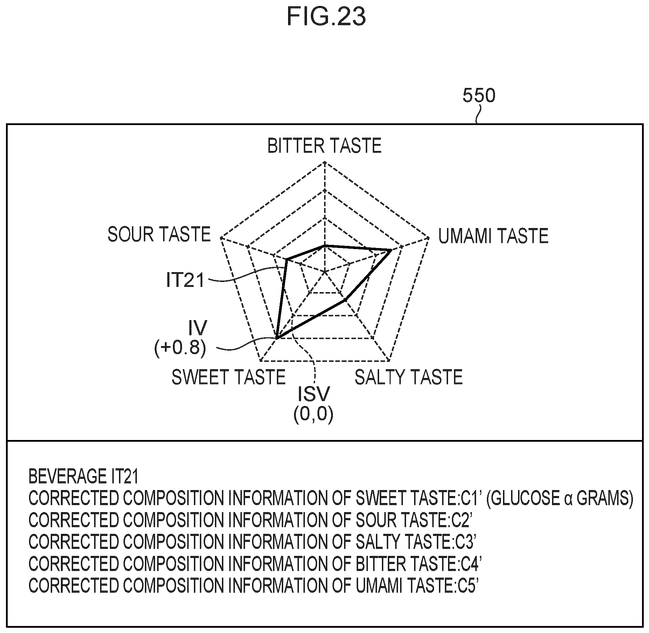

Fig. 23 exemplifies a preferred beverage/food information presentation screen 550.

The presentation unit 2040 presents the corrected composition information generated by corrected composition information generation unit 2030 as composition information regarding the beverage IT21 conforming to the preference of the user ID2.

That is, the sweet taste corrected composition information C1' (glucose $\alpha$ gram), the sour taste corrected composition information C2', the salty taste corrected composition information C3', the bitter taste corrected composition information C4', and the umami taste corrected composition information C5' of the beverage IT21 are displayed on the preferred beverage/food information presentation screen 550. An evaluation value for each evaluation topic of the beverage IT21 may also be displayed.

(Example 7)

A sample corresponding to the corrected composition information generated by the corrected composition information generation unit 2030 may be provided as a sample conforming to the preference of the user ID2. In a case in which a sample is created by using the sweet taste corrected composition information C1' (glucose $\alpha$ gram), the sour taste corrected composition information C2', the salty taste corrected composition information C3', the bitter taste corrected composition information C4', and the umami taste corrected composition information C5' of the beverage IT21, the sense of taste for the beverage IT21 conforming to the preference of the user ID2 can be reliably reproduced.

Although a beverage has been described, corrected composition information may be generated and displayed on the food information presentation screen 550 similarly for a food. In a case in which a sample is created by using the corrected composition information in the same manner, it is possible to reliably reproduce the sense of taste for the food conforming to the preference of the user ID2.

Although the sense of taste has been described, corrected composition information may be generated and displayed on the beverage/food information presentation screen 550 similarly for a smell or a food taste. In a case in which a sample is created by using the corrected composition information in the same manner, it is possible to reliably reproduce a smell or a food taste conforming to the preference of the user ID2.

(Third Embodiment)

Hereinafter, a third embodiment will be described in which item evaluation values such as the sense of taste, a scent, and a texture of a dish or the like are adjusted to match a preference of each user, and the dish or the like is reproduced so that the sense of taste and the like according to the adjusted item evaluation value such as the sense of taste can be obtained.

Hereinafter, a configuration of the third embodiment will be described. Constituents similar to those described above are denoted by similar reference numerals and reference signs, and description thereof will be omitted as appropriate.

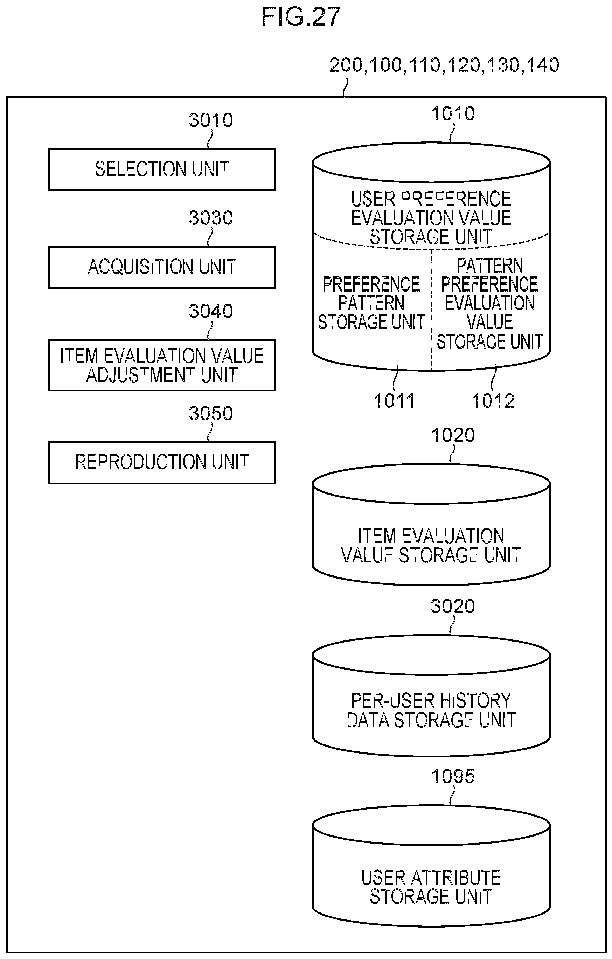

Fig. 27 is a block diagram illustrating a functional configuration of a preference information generation device of the third embodiment.

The preference information generation device includes a user preference evaluation value storage unit 1010, an item evaluation value storage unit 1020, a user attribute storage unit 1095, a selection unit 3010, a per-user history data storage unit 3020, an acquisition unit 3030, an item evaluation value adjustment unit 3040, and a reproduction unit 3050.

The functional configuration illustrated in Fig. 27 is provided in the server 200, the administrator-side terminal 100, the manufacturing institution-side terminal 110, the store-side terminal 120, the user-side terminal 130, and the information providing institution-side terminal 140.

(User Preference Evaluation Value Storage Unit)

The user preference evaluation value storage unit 1010 stores a user preference evaluation value for each of a plurality of preference evaluation topics regarding one or a combination of two or more of the sense of taste, a smell, and a food taste in association with a user. For example, as illustrated in Fig. 4B, the user preference evaluation value UV is stored as a relative numerical value (for example, +0.8) with respect to the user preference reference value USV (for example, 0.0) in association with the user ID2.

(Item Evaluation Value Storage Unit)

The item evaluation value storage unit 1020 stores an item evaluation value for each of a plurality of preference evaluation topics in association with an item of a dish or a food. For example, as illustrated in Fig. 5A, the item evaluation value storage unit 1020 stores the item evaluation value IV for each of a plurality of preference evaluation topics (for example, a sweet taste, a sour taste, a salty taste, a bitter taste, and an umami taste) regarding the sense of taste in association with an item of a dish or a food.

(User Attribute Storage Unit)

The user attribute storage unit 1095 stores user attribute data AD indicating attributes such as a gender (for example, female), an age (for example, thirties), a nationality, and a hometown of a user in association with a user ID (for example, the user ID2).

(Selection Unit)

The selection unit 3010 selects an item of a dish or a food. The selection unit 3010 selects an item of a dish or a food from the per-user history data stored in the per-user history data storage unit 3020, for example. The per-user history data storage unit 3020 is per-user history data indicating items of dishes or foods purchased by a user or provided to the user in the past in association with the user.
The selection unit 3010 may select an item of a dish or a food including a food constituent material acquired by the acquisition unit 3030. The acquisition unit 3030 acquires information regarding food constituent materials stocked in a refrigerator or the like.

(Item Evaluation Value Adjustment Unit)

The item evaluation value adjustment unit 3040 adjusts the item evaluation value corresponding to the item of the dish or food selected by the selection unit 3010.
First, an item evaluation value corresponding to the item of the dish or the food selected by the selection unit 3010 is extracted from the item evaluation value storage unit 1020. Next, a user preference evaluation value associated with the user is extracted from the user preference evaluation value storage unit 1010. Next, the item evaluation value corresponding to the item of the selected dish or food is adjusted to be an item evaluation value according to the extracted user preference evaluation value.

(Reproduction Unit)

The reproduction unit 3050 reproduces a dish or a food from which the sense of taste or/and a smell or/and a food taste according to the item evaluation value adjusted by the item evaluation value adjustment unit 3040 can be obtained. The reproduction unit 3050 reproduces a dish or a food by using, for example, food constituent materials designated by the user.
Hereinafter, each example will be described.

(Example 8)

The preference information generation device according to Example 8 selects an item such as a dish by using information regarding a food history of a user and information regarding food constituent materials stocked in a refrigerator or the like, adjusts an item evaluation value such as the sense of taste of the selected dish or the like so as to match each user's preference, and generates information regarding a recipe of the dish or the like that matches the user's preference.
For example, a personal computer terminal, a smartphone terminal, or a tablet terminal may be the user-side terminal 130.

A user ID of a user who has performed a login operation, that is, the user ID2 is acquired according to the login operation on the user-side terminal 130.

Here, a food history is associated with each user ID. Per-user food history data includes a topic of a user ID, a topic of an item IT (product name) purchased at a store or the like in the past or provided with a service at a restaurant, and a topic of the number of purchases (purchase amount). The per-user food history data is stored in the per-user history data storage unit 3020 of the server 200.

For example, it is assumed that a dish or a food purchased by the user ID2 at a store or the like or provided to the user ID2 at a restaurant or the like in the past is a "specific hamburger" of the item IT101.

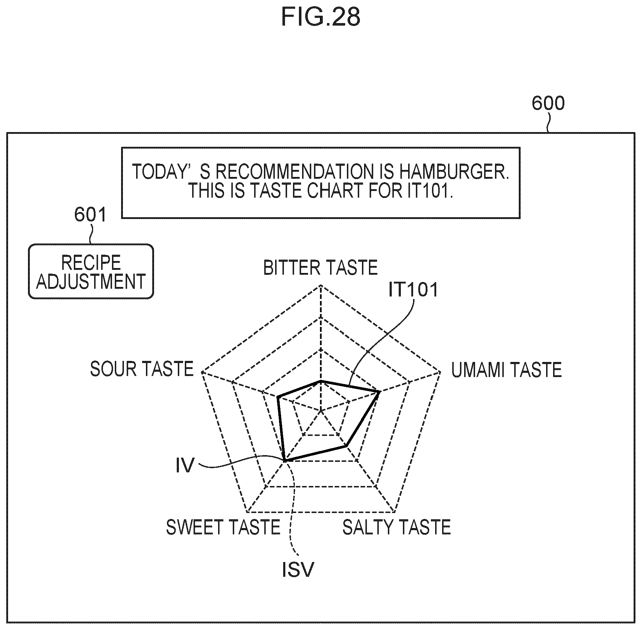

Fig. 28 illustrates an example of a food history screen 600.

The data of the item IT101 in the category of the hamburger purchased by the user ID2 in the past is extracted with reference to the per-user food history data stored in the per-user history data storage unit 3020. The data of the item evaluation value IV associated with the item IT101 is extracted from the item evaluation value storage unit 1020. On the basis of the extracted data of the item evaluation value IV associated with the item IT101, the food history screen 600 is displayed on the display screen of the user-side terminal 130. Candidates can be narrowed down from a plurality of dishes or foods by referring to the topic of the number of purchases (purchase amount).

On the food history screen 600, information of a radar chart for the item evaluation value IV associated with the item IT101 is displayed together with information such as "Today's recommendation is hamburger. This is a taste chart of IT101.".

A plurality of items of dishes or foods may be displayed as today's recommended dishes from among dishes or foods purchased at stores or the like in the past or provided at a restaurant or the like.

The "specific hamburger" of the item IT101 is a product that the user ID2 has eaten in the past, but does not necessarily match the preference of the user ID2.

In a case in which the user ID2 wants to make a dish that matches the preference of the user ID2, the user ID2 presses a recipe adjustment button 601 for "adjusting the recipe to a recipe that matches the preference" on the food history screen 600.

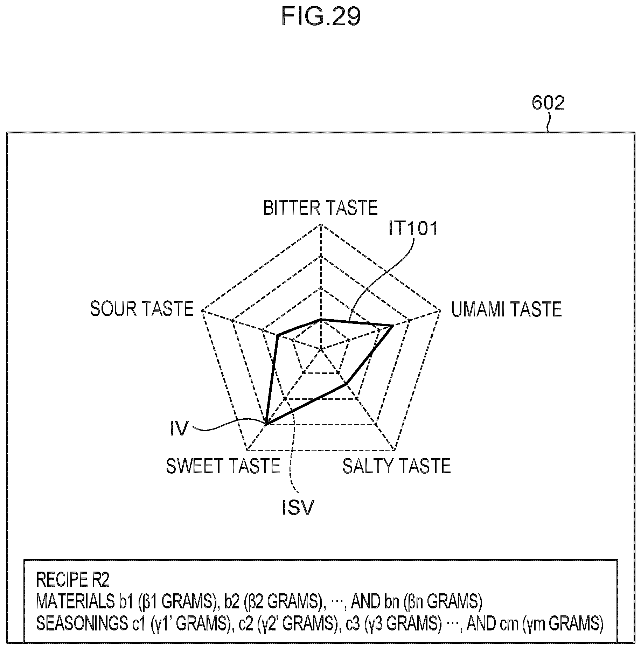

Fig. 29 illustrates an example of a preference information generation screen 602.

In a case in which the recipe adjustment button 601 is pressed, a radar chart for the item evaluation value IV adjusted according to the preference of the user ID2 is displayed on the preference information generation screen 602. Information regarding the recipe R2 is displayed on the preference information generation screen 602 in order to obtain the adjusted item evaluation value IV.

The second preference pattern PT2 is associated with the user ID2. The user preference evaluation value UV associated with the second preference pattern PT2 illustrated in Fig. 10B is extracted from the user preference evaluation value storage unit 1010.

The item evaluation value IV for the item IT101 is corrected according to the user preference evaluation value UV. For example, the item evaluation value IV for the "sweet taste" of the item IT101 is 0, whereas the user preference evaluation value UV is +0.8. Thus, the item evaluation value IV for the "sweet taste" of the item IT101 is adjusted to +0.8.

The information regarding the recipe R2 matching the preference of the user ID2 is obtained as follows.

The information regarding the recipe R1 of the "specific hamburger" of the item IT101 is as follows.
Recipe R1: materials b1 ($\beta$1 grams), b2 ($\beta$2 grams), $\cdots$, and bn ($\beta$n grams), and seasonings c1 ($\gamma$1 grams), c2 ($\gamma$2 grams), c3 ($\gamma$3 grams) $\cdots$, and cm ($\gamma$m grams)

The recipe R2 is corrected on the basis of the information regarding the recipe R1. A case in which the recipe R2 is created only by adjusting a seasoning is taken as an example.

It is assumed that a sweet taste can be adjusted only with the seasoning c1, and an umami taste can be adjusted only with the seasoning c2.

A relative value ADE1 is obtained by subtracting the item evaluation value IV (0) for the sweet taste before adjustment from the item evaluation value IV (+0.8) for the sweet taste after adjustment. A blending amount of the seasoning c1 is adjusted as follows.

$$\gamma 1' = \gamma 1 \cdot (1 + K1 \cdot ADE1) \cdots (4)$$

Here, K1 is a constant.

A relative value ADE2 is obtained by subtracting the item evaluation value IV (0) for the umami taste before adjustment from the item evaluation value IV (+0.5) for the umami taste after adjustment. A blending amount of the seasoning c2 is adjusted as follows.

$$\gamma 2' = \gamma 2 \cdot (1 + K2 \cdot ADE2) \cdots (5)$$

Here, K2 is a constant.

As a result, information regarding the recipe R2 of the "hamburger" after adjustment is as follows.
Recipe R2: materials b1 ($\beta$1 grams), b2 ($\beta$2 grams), $\cdots$, and bn ($\beta$n grams), and seasonings c1 ($\gamma$1' grams), c2 ($\gamma$2' grams), c3 ($\gamma$3 grams) $\cdots$, and cm ($\gamma$m grams)

The user ID2 can cook a hamburger matching his/her preference according to adjusted recipe R2 displayed on preference information generation screen 602.

In the above example, today's recommended dish is displayed regardless of food constituent materials and seasonings possessed today (stock today) by the user ID2. However, a recommended dish may be displayed in consideration of the food constituent materials and the seasonings possessed today by the user ID2.

For example, the acquisition unit 3030 acquires information regarding the stock of food constituent materials and seasonings in a refrigerator owned by the user ID2.

In a case in which the stock of the food constituent materials and the seasonings acquired by the acquisition unit 3030 is sufficient for cooking the "hamburger", the food history screen 600 illustrated in Fig. 28 and the preference information generation screen 602 illustrated in Fig. 29 are displayed. However, in a case in which the stock of the food constituent materials and the seasonings acquired by the acquisition unit 3030 is not sufficient for cooking the "hamburger" but is sufficient for cooking another dish, the food history screen and the preference information generation screen for the other dish are displayed in a similar manner.

In a case in which the stock of the food constituent materials and the seasoning acquired by the acquisition unit 3030 is not sufficient for cooking the "hamburger", information regarding insufficient food constituent materials and seasonings may be displayed on the preference information generation screen.

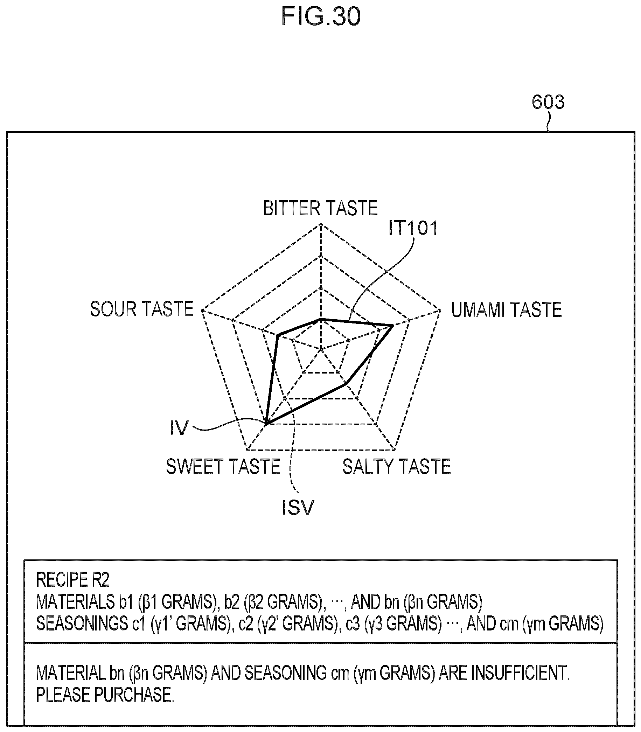

Fig. 30 illustrates an example of the preference information generation screen 603. Fig. 30 illustrates an example of the preference information generation screen 603 in a case in which there are food constituent materials and seasonings insufficient for cooking a "hamburger".

On the preference information generation screen 603, information regarding insufficient food constituent materials and insufficient seasonings is displayed in addition to the information displayed on the preference information generation screen 602.

It is assumed that the materials b 1 ($\beta$1 grams), b2 ($\beta$2 grams), $\cdots$, and the seasonings c1 ($\gamma$1' grams), c2 ($\gamma$2' grams), c3 ($\gamma$3 grams) $\cdots$ for the recipe R2 are in stock, and the material bn ($\beta$n grams) and the seasoning cm ($\gamma$m grams) for the recipe R2 are not in stock in the refrigerator owned by the user ID2. In this case, on the preference information generation screen 603, information such as "The material bn ($\beta$n grams) and the seasoning cm ($\gamma$m grams) are insufficient. Please purchase.".

(Example 9)

The preference information generation device of Example 9 generates information for automatically cooking a dish matching a preference of each user. The description overlapping with Example 8 will be omitted as appropriate. As in Example 8, the dish is a "hamburger" as an example.

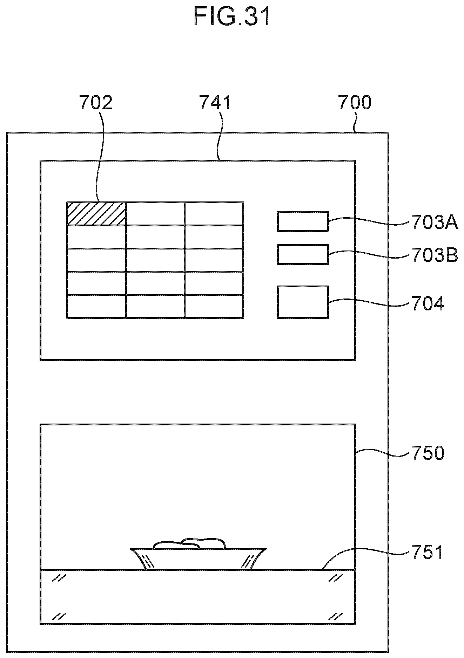

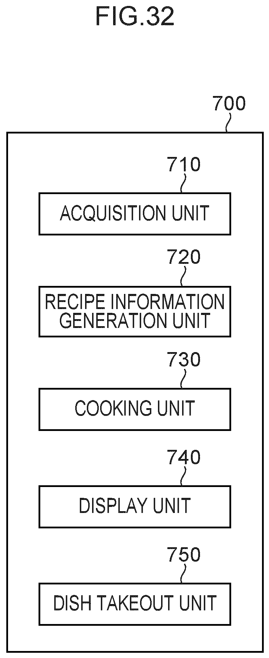

Fig. 31 illustrates an appearance of an automatic cooker 700. Fig. 32 is a block diagram illustrating a configuration of an automatic cooker 700. The automatic cooker 700 includes an acquisition unit 710, a recipe information generation unit 720, a cooking unit 730, a display unit 740, and a dish takeout unit 750.

The acquisition unit 710 acquires, from the outside of the automatic cooker 700, a user's preference and information regarding a dish to be cooked and food constituent materials. The recipe information generation unit 720 generates a recipe for cooking the dish on the basis of the information acquired by acquisition unit 710. The cooking unit 730 cooks the dish on the basis of the generated recipe. The display unit 740 displays information necessary for the user on the display screen 741. The cooked dish is placed on a takeout table 751 of the dish takeout unit 750 such that the user can take out the dish.

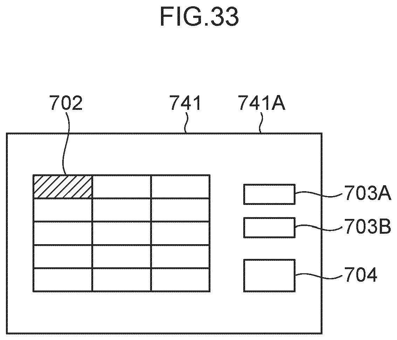

Fig. 33 illustrates an initial screen 741A of a display screen 741 of the automatic cooker 700.

On the initial screen 741A, a dish selection button 702 for selecting various dishes including a hamburger, material designation buttons 703A and 703B for designating types of food constituent materials of a dish, for example, meat/non-meat, and a reading unit 704 for reading preference information of a user are displayed. The meat is used in the sense of a food constituent material containing an animal-derived food material or component such as beef or pork, and the non-meat is used in the sense of a food constituent material obtained by replacing an animal-derived food material or component such as beef or pork with a substitute meat containing a vegetable protein such as soybean as a raw material.

In a case in which a hamburger is selected by pressing the dish selection button 702 and non-meat is selected by pressing the material designation button 703B, the acquisition unit 710 acquires information regarding a dish to be cooked such as the hamburger and information regarding a food constituent material such as non-meat.

The reading unit 704 reads the preference information of the user by reading a two-dimensional code.

For example, by holding the two-dimensional code displayed on the screen of the user-side terminal 130 including a smartphone terminal or the like over the reading unit 704, the information regarding the second preference pattern PT2 illustrated in Fig. 10B is incorporated into the automatic cooker 700. As a result, the acquisition unit 710 acquires user preference information such as the user preference evaluation value UV associated with the second preference pattern PT2.

The recipe information generation unit 720 adjusts the item evaluation value IV for the hamburger according to the preference of the user ID2, and generates information regarding recipe R3 for obtaining adjusted item evaluation value IV, similarly to Example 8.

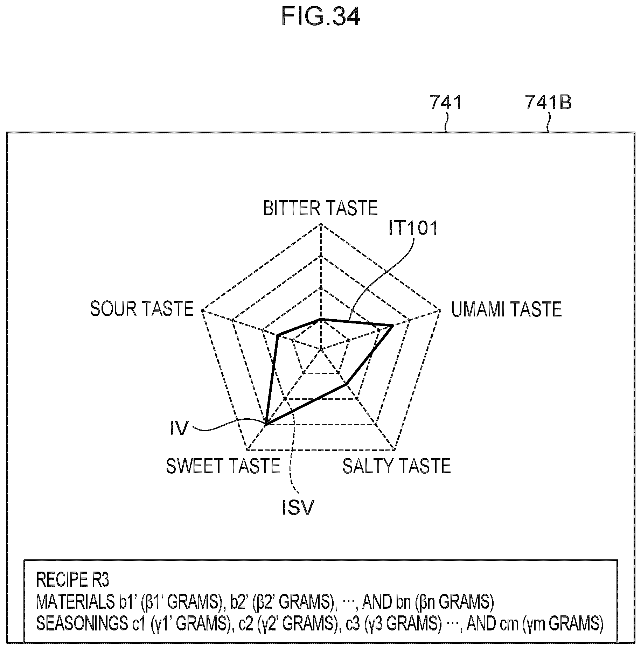

Fig. 34 illustrates a state in which the display screen 741 of the automatic cooker 700 has transitioned to a preference information generation screen 741B.

In a case in which the information regarding the recipe R3 is generated, the display screen 741 of the automatic cooker 700 transitions to the preference information generation screen 741B. On the preference information generation screen 741B, information including a radar chart for the item evaluation value IV adjusted according to the preference of a user ID2 and information regarding the recipe R3 is displayed.

The recipe R3 is obtained by replacing meat portions such as pork and beef in the materials of the recipe R2 with non-meat such as soybean. For example, in a case in which the materials b1 and b2 are composed of meat, the materials b1 and b2 are replaced with alternative non-meat materials b1' and b2'.

As a result, information regarding the recipe R3 for the "non-meat hamburger" after adjustment is as follows.

Recipe R3: materials b1' ($\beta$1' grams), b2' ($\beta$2' grams), $\cdots$, and bn ($\beta$n grams), and seasonings c1 ($\gamma$1' grams), c2 ($\gamma$2' grams), c3 ($\gamma$3' grams) $\cdots$, and cm ($\gamma$m grams)

The cooking unit 730 cooks the dish on the basis of the generated recipe R3.

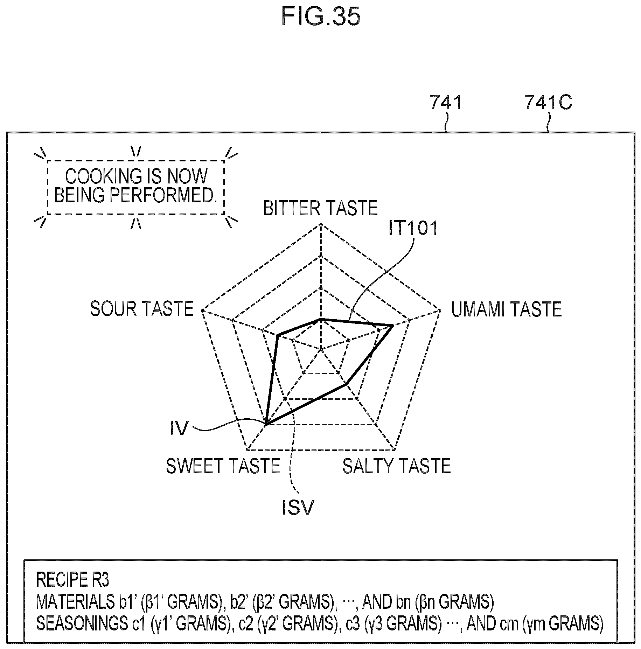

Fig. 35 illustrates a state in which the display screen 741 of the automatic cooker 700 has transitioned to a cooking information screen 741C.

On the cooking information screen 741C, information regarding cooking, such as that cooking is being performed and that cooking has ended, is displayed.

In a case in which cooking is finished, the cooked dish is placed on the dish takeout unit 750 such that the user ID2 take out the dish.

In Example 9, although the dish selection button 702 is provided on the automatic cooker 700, a recommended dish may be automatically displayed by using the per-user food history data of the user ID2 as in Example 8. For example, by holding a two-dimensional code displayed on the screen of the user-side terminal 130 over the reading unit 704 of the automatic cooker 700, the per-user food history data of the user ID2 and the information regarding the second preference pattern PT2 illustrated in Fig. 10B are incorporated into the automatic cooker 700. As a result, the acquisition unit 710 acquires the user preference evaluation value UV associated with a dish such as a hamburger and the second preference pattern PT2 from the per-user food history data of the user ID2. The cooking unit 730 cooks the hamburger matching the preference of the user ID2 according to the recipe R3. The above implementation is also possible.

(Example 10)

The preference information generation device of Example 10 generates information for automatically cooking a dish matching a country or a hometown of each user or a preference of each user. The description overlapping Examples 8 and 9 will be omitted as appropriate. Similarly to Examples 8 and 9, a hamburger is taken as an example.

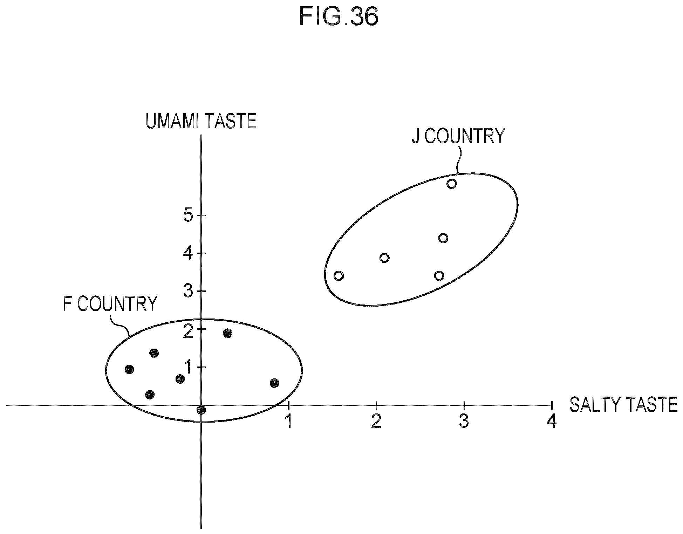

Fig. 36 illustrates a difference in evaluation values for an umami taste and a salty taste of different F country and J country regarding soups of cup noodles. In Fig. 36, evaluation values for the umami taste and the salty taste of various kinds of cup noodles of the F country and the J country are plotted on the same coordinate axis.

As can be seen from Fig. 36, in a case in which countries or hometowns of users are different, a reference value for the sense of taste for a dish, a food, or the like is different. An average evaluation value for the salty taste in the J country is + 2.5 greater than the average evaluation value for the salty taste in the F country. The average evaluation value for the umami taste in the J country is +3.0 greater than an average evaluation value for the umami taste in the F country.

(User Registration)

A nationality or a hometown is associated with a user. It is assumed that the F country is associated with the user ID11, and the J country is associated with the user ID12. The nationality or the hometown of the user is stored in the user attribute storage unit 1095 as the above-described user attribute data AD in association with the user ID.

(User Preference Evaluation Value Storage Unit)

In the user preference evaluation value storage unit 1010, the user preference evaluation value UV is stored as a relative numerical value with respect to the user preference reference value USV according to the nationality or the hometown of the user.

The eighth preference pattern PT8 that is a preference pattern "an umami taste and a salty taste are acceptable" is taken as an example.

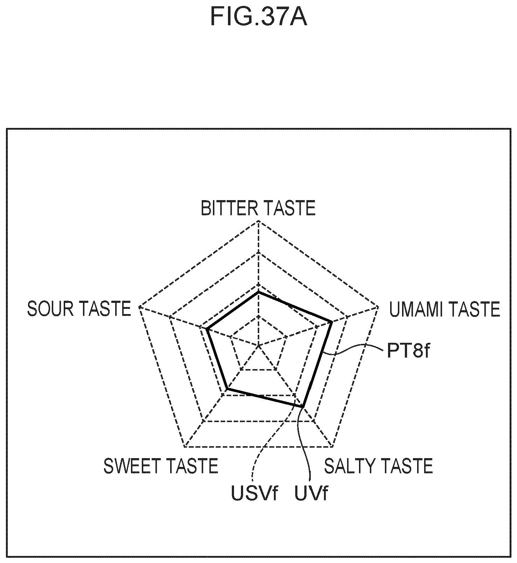

Fig. 37A is a radar chart for a user preference evaluation value UVf corresponding to an eighth preference pattern PT8f for the F country. The user preference evaluation value UVf is stored as a relative numerical value (for example, +0.5) with respect to the user preference reference value USVf (for example, 0.0) for the F country.

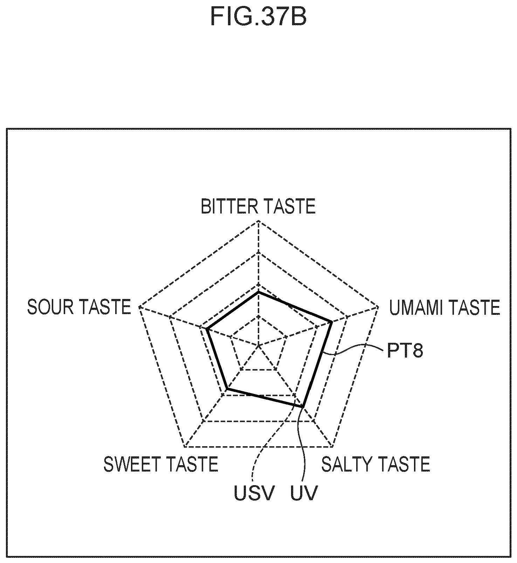

Fig. 37B illustrates a radar chart for the user preference evaluation value UV corresponding to the eighth preference pattern PT8 for the J country. The user preference evaluation value UV is stored as a relative numerical value (for example, +0.5) with respect to the user preference reference value USV (for example, 0.0) for the J country.

In correspondence with Fig. 36, the user preference reference value USV for the salty taste in the J country is +2.5 greater than the user preference reference value USVf for the salty taste in the F country. The user preference reference value USV for the umami taste in the J country is +3.0 greater than the user preference reference value USVf for the umami taste in the F country.

(Item Evaluation Value Storage Unit)

The item evaluation value storage unit 1020 stores the item evaluation value IV for each nationality or hometown as a relative numerical value with respect to the item reference value ISV for each nationality or hometown.

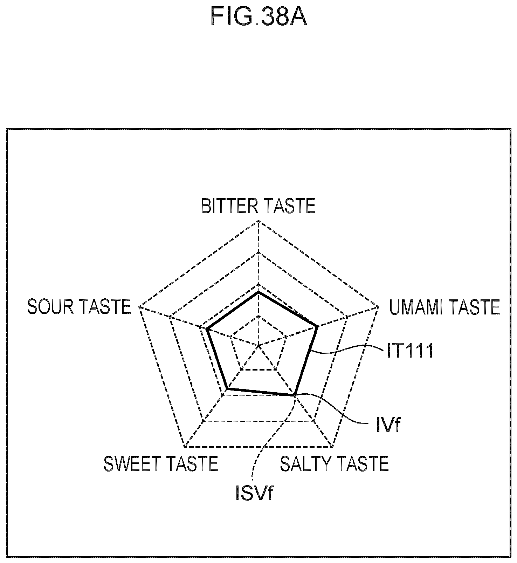

Fig. 38A Illustrates data of an item evaluation value IVf associated with the item IT111 such as a "hamburger" in the F country in a radar chart. The item evaluation value IVf is indicated by a relative numerical value with respect to the item reference value ISVf for the F country.

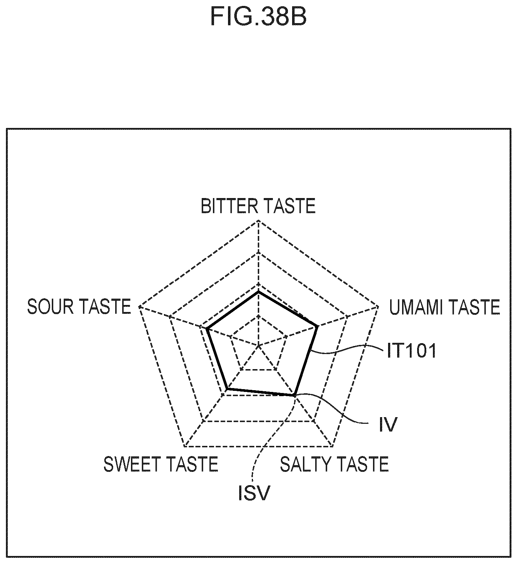

Fig. 38B illustrates data of the item evaluation value IV associated with the item IT101 such as the "hamburger" in the J country in a radar chart. The item evaluation value IV is indicated by a relative numerical value with respect to the item reference value ISV for the J country.

The item reference value ISV for the salty taste in the J country is +2.5 greater than the item reference value ISVf for the salty taste in the F country. The item reference value ISV for the umami taste in the J country is +3.0 greater than the item reference value ISVf for the umami taste in the F country.

In a case in which the dish selection button 702 is pressed to select the hamburger and the material designation button 703B is pressed to select non-meat, the acquisition unit 710 acquires information regarding a dish to be cooked such as the hamburger and information regarding a food constituent material such as the non-meat.

By holding the two-dimensional code displayed on the screen of the user-side terminal 130 over the reading unit 704 of the automatic cooker 700, the information of the user preference evaluation value UVf associated with the eighth preference pattern PT8f of the user ID11 is incorporated into the automatic cooker 700. As a result, the acquisition unit 710 acquires information of the user preference evaluation value UVf associated with the eighth preference pattern PT8f to which the user ID11 belongs.

The recipe information generation unit 720 adjusts the item evaluation value IVf for the hamburger of the item IT111 according to the information regarding the preference of the user ID11, and generates information regarding the recipe R5 for obtaining the adjusted item evaluation value IVf, similarly to Example 8 and Example 9.

The recipe R5 is corrected on the basis of the recipe R4. The recipe R4 is a recipe corresponding to the item evaluation value IV before adjustment.

The information regarding the recipe R4 for the "hamburger" in the F country is as follows.

Recipe R4: materials b1f ($\beta$1f grams), b2f ($\beta$2f grams), $\cdots$, and bnf ($\beta$nf grams), and seasonings c1f ($\gamma$1f grams), c2f ($\gamma$2f grams), c3f (y3f grams) $\cdot \cdot \cdot$ , and cmf ($\gamma$mf grams)

The information regarding the recipe R1 for the "hamburger" in the J country is as follows.

Recipe R1: materials b1 ($\beta$1 grams), b2 ($\beta$2 grams), $\cdots$, and bn ($\beta$n grams), and seasonings c1 ($\gamma$1 grams), c2 ($\gamma$2 grams), c3 ($\gamma$3 grams) $\cdot \cdot \cdot$ , and cm ($\gamma$m grams)

By cooking in accordance with the recipe R4, the item evaluation value IVf associated with the item IT111 of the "hamburger" in the F country illustrated in Fig. 38A is obtained.

By cooking in accordance with the recipe R1, the item evaluation value IV associated with the item IT101 of the "hamburger" in the J country illustrated in Fig. 38B is obtained.

The recipe R5 is corrected on the basis of the information regarding the recipe R4. A case in which the recipe R5 is created only by adjusting a seasoning is taken as an example.

It is assumed that an umami taste can be adjusted only with a seasoning c2f, and a salty taste can be adjusted only with a seasoning c3f.

A relative value ADE2f is obtained by subtracting the item evaluation value IVf(0) for the umami taste before adjustment from the value (+0.5) of the item evaluation value IVf for the umami taste after adjustment. A blending amount of the seasoning c2f is adjusted as follows.

$$\gamma 2f'=\gamma 2f\cdot(1+K3\cdot ADE2f)\cdots(6)$$

Here, K3 is a constant.

A relative value ADE3f is obtained by subtracting the item evaluation value IVf (0) for the salty taste before adjustment from the value (+0.5) of the item evaluation value IVf for the salty taste after adjustment. A blending amount of the seasoning c3f is adjusted as follows.

$$\gamma 3f'=\gamma 3f\cdot(1+K4\cdot ADE3f)\cdots(7)$$

Here, K4 is a constant.

As a result, the information regarding the recipe R5 for the "hamburger" after adjustment is as follows.

Recipe R5: materials b1f ($\beta$1f grams), b2f ($\beta$2f grams), $\cdots$, and bnf ($\beta$nf grams), and seasonings c1f ($\gamma$1f grams), c2f ($\gamma$2f' grams), c3f ($\gamma$3f' grams) $\cdots$, and cmf ($\gamma$mf grams)

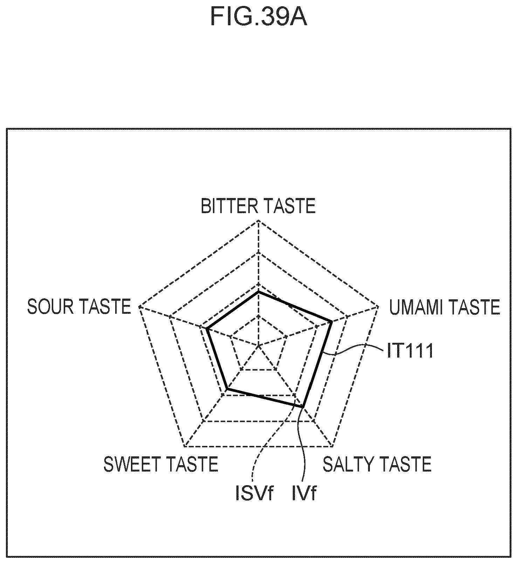

Fig. 39A is a diagram corresponding to Fig. 38B, and illustrates data of the item evaluation value IVf adjusted according to the preference of the user ID11 in a radar chart.

The cooking unit 730 cooks the dish on the basis of generated recipe R5.

The cooked dish is placed in the dish takeout unit 750 such that the user ID11 can take out the dish. As a result, a dish matching the nationality (F country) and the preference (preference pattern PT8f) of the user ID11 is provided to the user ID11.

In a case in which a user who desires to be provided with a dish is a nationality of the J country, the recipe R6 is similarly created on the basis of the recipe R1 of the J country.

Regarding the umami taste, as described above, a relative value ADE2 is obtained by subtracting the item evaluation value IV (0) for the umami taste before adjustment from the value (+0.5) of the item evaluation value IV for the umami taste after adjustment. A blending amount of the seasoning c2 is adjusted as follows.

$$\gamma 2'=\gamma 2\cdot(1+K2\cdot ADE2)\cdots(5)$$

Here, K2 is a constant.

A relative value ADE3 is obtained by subtracting the item evaluation value IVf (0) for the salty taste before adjustment from the value (+0.5) of the item evaluation value IVf for the salty taste after adjustment. A blending amount of the seasoning c3 is adjusted as follows.

$$\gamma 3'=\gamma 3\cdot(1+K5\cdot ADE3)\cdots(8)$$

Here, K5 is a constant.

As a result, the information regarding the recipe R6 for the "hamburger" after adjustment is as follows.

Recipe R6: materials b1 ($\beta$1 grams), b2 ($\beta$2 grams), $\cdots$, and bn ($\beta$n grams), and seasonings c1 ($\gamma$1 grams), c2 ($\gamma$2' grams), c3 (y3' grams) $\cdots$, and cmf ($\gamma$mf grams)

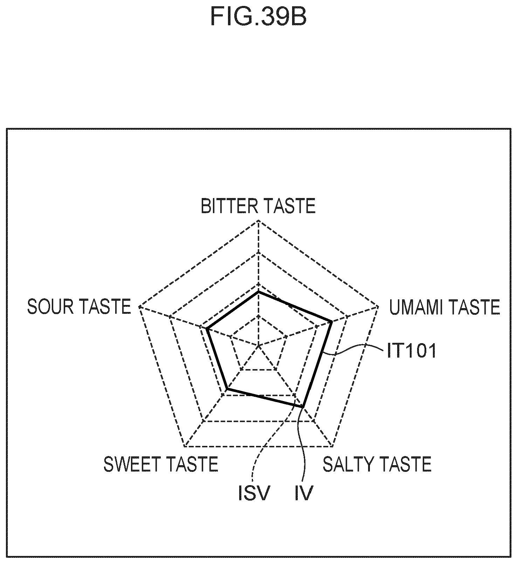

Fig. 39B is a diagram corresponding to Fig. 38B, and illustrates data of the item evaluation value IVf adjusted according to the preference of the user ID12 in a radar chart.

The cooking unit 730 cooks the dish on the basis of the generated recipe R6.

The cooked dish is placed in the dish takeout unit 750 such that the user ID12 can take out the dish. As a result, a dish matching the hometown (J country) and the preference (preference pattern PT8) of the user ID12 is provided to the user ID12.

(Fourth Embodiment)

In the first embodiment, any one of the first to twentieth preference patterns PT1, PT2$\cdots$, and PT20 is associated with a user on the basis of the user's answer to a questionnaire.

However, the present invention is not limited to a user's answer to a questionnaire, and a preference pattern may be associated with the user on the basis of an item of a beverage or a food purchased by the user in the past.

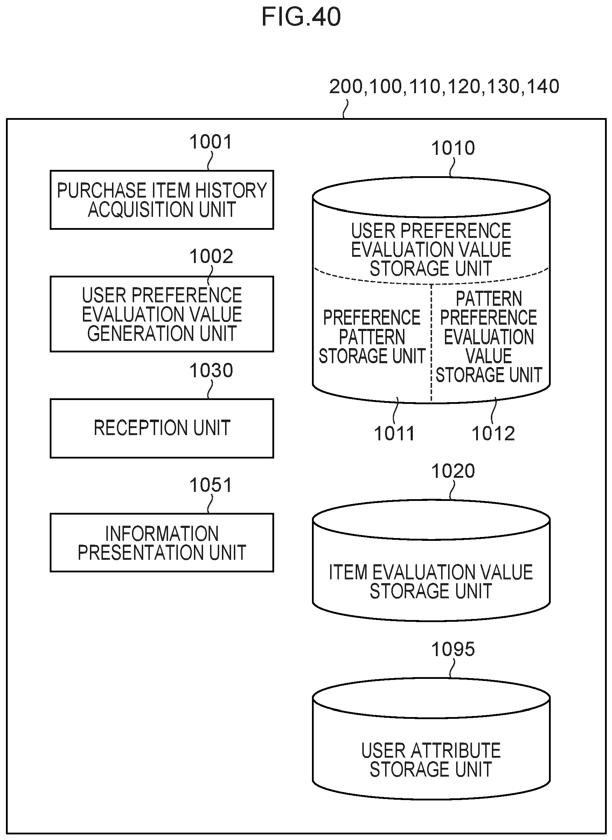

Fig. 40 is a block diagram illustrating a functional configuration of a preferred beverage/food information presentation device according to a fourth embodiment. The functional configuration illustrated in Fig. 40 is provided in the server 200, the administratorside terminal 100, the manufacturing institution-side terminal 110, the store-side terminal 120, the user-side terminal 130, and the information providing institution-side terminal 140.

The preferred beverage/food information presentation device according to the fourth embodiment includes a purchase item history acquisition unit 1001, an item evaluation value storage unit 1020, a user preference evaluation value generation unit 1002, a user preference evaluation value storage unit 1010, a reception unit 1030, an information presentation unit 1051, and a user attribute storage unit 1095.

The user preference evaluation value storage unit 1010 includes a preference pattern storage unit 1011 and a pattern preference evaluation value storage unit 1012. The user preference evaluation value storage unit 1010 (the preference pattern storage unit 1011 and the pattern preference evaluation value storage unit 1012), the item evaluation value storage unit 1020, and the user attribute storage unit 1095 are configured as a database and included in the server 200.

(Purchase Item History Acquisition Unit)

The purchase item history acquisition unit 1001 acquires a history of purchase items of beverages or foods purchased in the past by a user ID (for example, the user ID1 or ID2). The purchase item history acquisition unit 1001 acquires a history of a purchase item of beverages or foods belonging to a specific category C among the beverages or the foods. Here, the specific category C is desirably a category in which a user's preference is likely to appear, such as the category C1 of a coffee beverage, the category C2 of a dressing, the category C3 of a pot sauce, the category C4 of a ready-to-drink (RTD) beverage, the category C5 of a fruit juice beverage, and the category C6 of a snack food. Hereinafter, the category C1 of the coffee beverage will be described as an example.

For example, in a case in which the user ID1 has purchased the coffee beverage items IT111, IT112, $\cdots$ in the past within the category C1 of the coffee beverage, the purchase history of these purchase items IT111, IT112, $\cdots$ is acquired by the purchase item history acquisition unit 1001 in association with the user ID1 and the category C1. Similarly, in a case in which the user ID2 purchases the coffee beverage items IT121, IT122, $\cdots$ in the past within the category C1 of the coffee beverage, the purchase history of these purchase items IT121, IT122, $\cdots$ is acquired by the purchase item history acquisition unit 1001 in association with the user ID2 and the category C1.

(Item Evaluation Value Storage Unit)

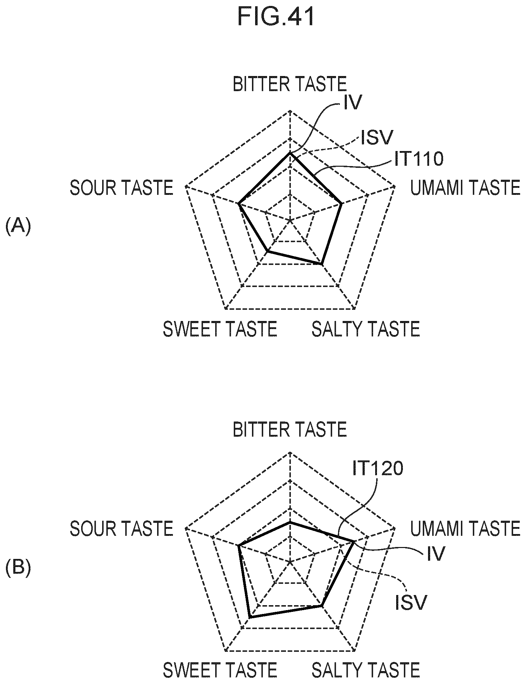

The item evaluation value storage unit 1020 stores an item evaluation value for each of a plurality of preference evaluation topics (for example, a sweet taste, a sour taste, a salty taste, a bitter taste, and an umami taste) regarding one or a combination of two or more of the sense of taste, a smell, and a food taste in association with at least one item of a beverage or a food. Figs. 41(A) and 41(B) respectively illustrate item evaluation values IV for the coffee beverage items IT110 and IT120 in the category C1 of the coffee beverages. It is assumed that there are a plurality of items such as items IT110, IT111, IT112, $\cdots$, IT120, IT121, IT122, $\cdots$ in the category C1 of the coffee beverage. The item evaluation value IV is associated with each of a plurality of items IT110, IT111, IT112, $\cdots$, IT120, IT121, IT122, $\cdots$ in the category C1 of the coffee beverage. Similarly, the item evaluation value IV is associated with each of a plurality of items in the categories C2, C3, C5, and C6, for the category C2 of the dressing, the category C3 of the pot sauce, the category C4 of the ready-to-drink (RTD) beverage, the category C5 of the fruit juice beverage, and the category C6 of the snack food.

(User Preference Evaluation Value Generation Unit)

The user preference evaluation value generation unit 1002 generates the user preference evaluation value UV for each of the plurality of preference evaluation topics (for example, a sweet taste, a sour taste, a salty taste, a bitter taste, and an umami taste) of a user ID according to the item evaluation value IV corresponding to the purchase item of the user ID (for example, the user ID1 or ID2) acquired by the purchase item history acquisition unit 1001.

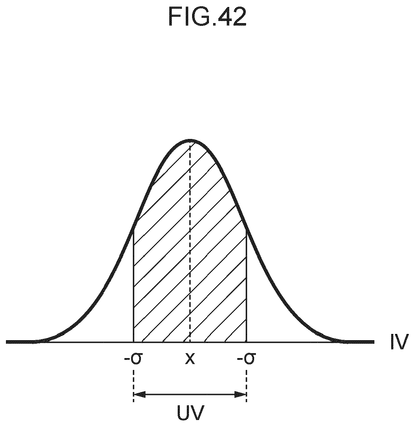

Figs. 42, 43, and 44 illustrate a method of generating the user preference evaluation value UV.

The user preference evaluation value generation unit 1002 can generate the user preference evaluation value UV of the user ID on the basis of an average value X or a standard deviation $\sigma$ of the item evaluation values IV for a plurality of purchase items purchased in the past by the user ID (for example, the user ID1 or ID2) acquired by the purchase item history acquisition unit 1001. For example, the user preference evaluation value generation unit 1002 generates the user preference evaluation value UV of the user ID on the basis of the standard deviation $\sigma$ of the item evaluation values IV for a plurality of purchase items purchased in the past by the user ID.

Fig. 42 illustrates a distribution of item evaluation values (for example, a sweet taste) IV for the coffee beverage items IT111, IT112, $\cdots$ purchased in the past by the user ID1. The item evaluation values IV for the coffee beverage items IT111, IT112, $\cdots$ may be obtained with reference to the item evaluation value storage unit 1020. In Fig. 42, X represents an average value of the item evaluation values (for example, a sweet taste) IV, and $\sigma$ represents a standard deviation of the item evaluation values (for example, a sweet taste) IV.

From Fig. 42, it may be evaluated that the user preference evaluation value UV regarding the sweet taste of the coffee beverage for the user ID1 corresponds to the item evaluation value IV within a standard deviation range of from X-$\sigma$

to X+σ (indicated by hatched lines in the drawing). The user preference evaluation values UV for the remaining sour taste, salty taste, bitter taste, and umami taste can be evaluated in the same manner.

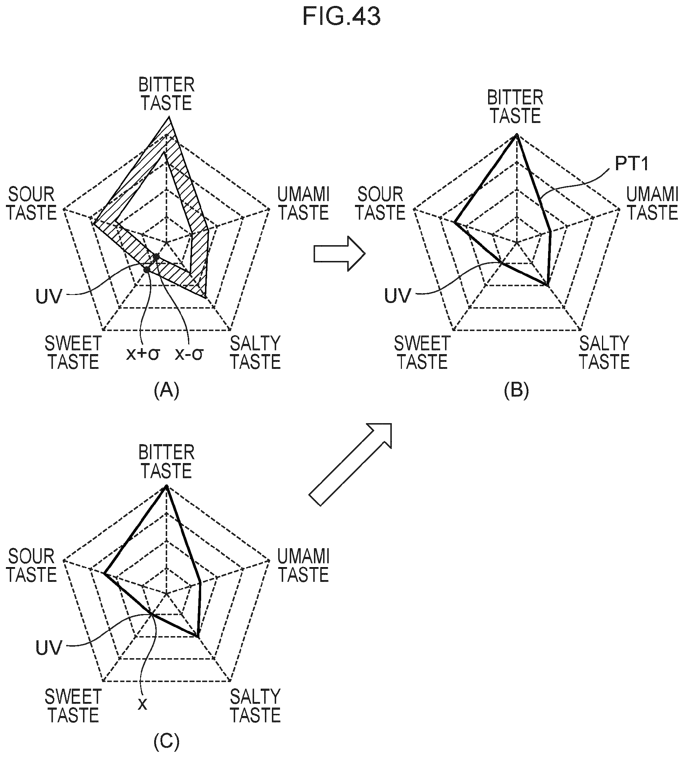

Fig. 43(A) illustrates, with hatched lines, a result of evaluating the user preference evaluation value UV for the coffee beverage (category C1) of the user ID1 on the basis of the standard deviation σ of the item evaluation values IV for a plurality of purchase items purchased in the past by the user ID1.

The user preference evaluation value UV may be classified into the first to twentieth preference patterns PT1, PT2 ···, and PT20 as illustrated in Figs. 10A, 10B, 10C, 10D, 10E, 10F, 10G, and 10H.

Therefore, the result of evaluating the user preference evaluation value UV of the user ID1 illustrated in Fig. 43(A) is compared with the user preference evaluation value UV indicated by the first to twentieth preference patterns PT1, PT2 ···, and PT20. As a result, as illustrated in Fig. 43(B), a preference pattern having the largest degree of coincidence with the evaluation result of the user preference evaluation value UV of the user ID1 illustrated in Fig. 43(A) is determined to be the preference pattern PT1.

As described above, the user preference evaluation value UV and the preference pattern PT1 of the user ID1 are generated on the basis of the standard deviation σ of the item evaluation values IV for the plurality of purchase items purchased in the past by the user ID1. However, the user preference evaluation value UV and the preference pattern of the user ID1 may be generated on the basis of the average value X of the item evaluation values IV for the plurality of purchase items purchased in the past by the user ID1.

As illustrated in Fig. 42, it can be evaluated that the user preference evaluation value UV for the sweet taste of the coffee beverage of the user ID1 corresponds to the average value X of the item evaluation values IV for the sweet taste. The user preference evaluation values UV for the remaining sour taste, salty taste, bitter taste, and umami taste can be evaluated in the same manner.

Fig. 43(C) illustrates, with solid lines, a result of evaluating the user preference evaluation value UV for the coffee beverage (category C1) of the user ID1 on the basis of the average value X of the item evaluation values IV for a plurality of purchase items purchased in the past by the user ID1.

The result of evaluating the user preference evaluation value UV of the user ID1 illustrated in Fig. 43(C) is compared with the user preference evaluation value UV indicated by the first to twentieth preference patterns PT1, PT2 ···, and PT20. As a result, as illustrated in Fig. 43(B), the preference pattern having the largest degree of coincidence with the evaluation result of the user preference evaluation value UV of the user ID1 illustrated in Fig. 43(C) is determined to be the preference pattern PT1.

The same applies to the user ID2.

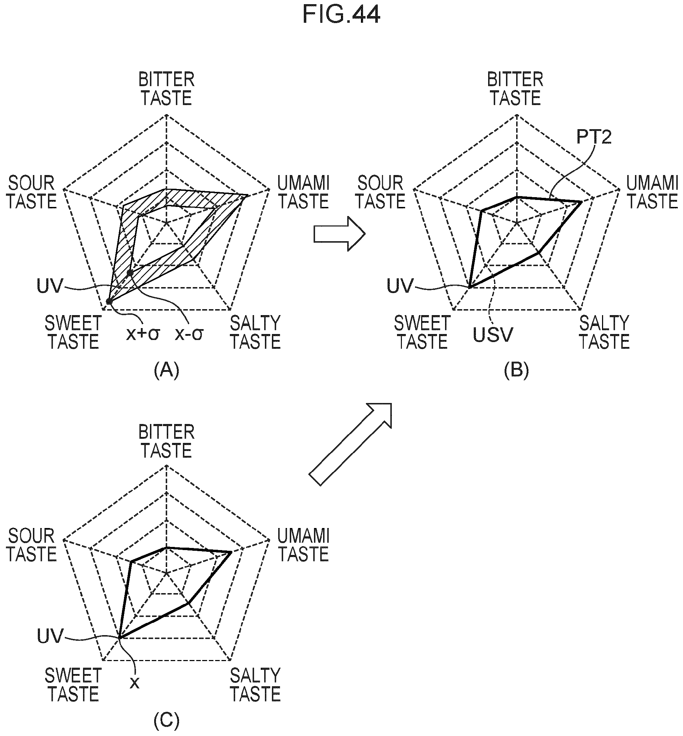

Fig. 44 is a diagram corresponding to Fig. 43.

Fig. 44(A) illustrates, with hatched lines, a result of evaluating the user preference evaluation value UV for the coffee beverage (category C1) of the user ID2 on the basis of the standard deviation σ of the item evaluation values IV for the plurality of purchase items purchased in the past by the user ID2.

Fig. 44(C) illustrates, with solid lines, a result of evaluating the user preference evaluation value UV for the coffee beverage (category C1) of the user ID2 on the basis of the average value X of the item evaluation values IV for the plurality of purchase items purchased in the past by the user ID2.

Fig. 44(B) illustrates the second preference pattern PT2 determined to be a preference pattern having the largest degree of coincidence with the evaluation result of the user preference evaluation value UV of the user ID2 illustrated in Fig. 44(A) or the evaluation result of the user preference evaluation value UV of the user ID2 illustrated in Fig. 44(C).

(User Preference Evaluation Value Storage Unit)

The user preference evaluation value storage unit 1010 stores the user preference evaluation value UV and the preference pattern in association with each other for each user ID.

The first preference pattern PT1 (preference pattern "a bitter taste and a sour taste are acceptable") and the user preference evaluation value UV indicated by the first preference pattern PT1 are associated with the user ID1 and stored in the user preference evaluation value storage unit 1010.

The second preference pattern PT2 (preference pattern "an umami taste and a sweet taste are acceptable") and the user preference evaluation value UV indicated by the second preference pattern PT2 are associated with the user ID2 and stored in the user preference evaluation value storage unit 1010.

(Reception Unit)

The reception unit 1030 receives a presentation request for information regarding a beverage or a food conforming to the preference of the user ID.

The presentation request does not depend on the intention of the user ID. The request may be made by the user ID with intention, or may be a recommendation by another person, for example, an administrator of a homepage.

(Information Presentation Unit)

In response to the presentation request received by the reception unit 1030, the information presentation unit 1051 extracts the user preference evaluation value UV associated with the user ID from the user preference evaluation value storage unit 1010, and presents the information of the item of the beverage or the food serving as the item evaluation value IV corresponding to the extracted user preference evaluation value UV as information of an item of a beverage or a food conforming to the preference of the user ID.

The first preference pattern PT1 is associated with the user ID1. The information presentation unit 1051 compares the numerical value of the user preference evaluation value UV indicated by the first preference pattern PT1 associated with the user ID1 with the numerical value of the item evaluation value IV for the item of the beverage or the food stored in the item evaluation value storage unit 1020, and displays information regarding the beverage and the food of the item for which the numerical values of the two values are close to each other on the screen of the display device 17 of the user-side terminal 130.

For example, the numerical value of the user preference evaluation value UV indicated by the first preference pattern PT1 associated with the user ID1 and the numerical value of the item evaluation value IV for the coffee beverage item IT110 in the category C1 of the coffee beverage illustrated in Fig. 41(A) stored in the item evaluation value storage unit 1020 are close to each other. Thus, the information of the coffee beverage item IT110 can be displayed on the screen of the display device 17 of the user-side terminal 130 of the user ID1.

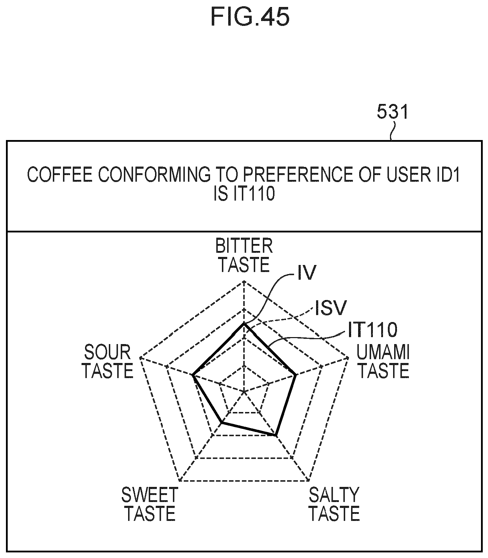

Fig. 45 exemplifies a preferred beverage/food information presentation screen 531 displayed on the display screen of the user-side terminal 131 of the user ID1 in response to a request to present "an item of coffee conforming to a preference of a user, the item having not been purchased by the user in the past (new item)" to the user ID1.

As illustrated in Fig. 45, the information presentation unit 1051 displays information of a radar chart for the item evaluation value IV associated with the item IT110 together with information "an item of coffee conforming to the preference of user ID1 is the item IT110" on the display screen of the user-side terminal 131 of the user ID1.

The same applies to the user ID2.

The numerical value of the user preference evaluation value UV indicated by the second preference pattern PT2 associated with the user ID2 is close to the numerical value of the item evaluation value IV for the coffee beverage item IT120 in the category C1 of the coffee beverage illustrated in Fig. 41(B) stored in the item evaluation value storage unit 1020. Thus, the information of the coffee beverage item IT120 can be displayed on the screen of the display device 17 of the user-side terminal 130 of the user ID2.

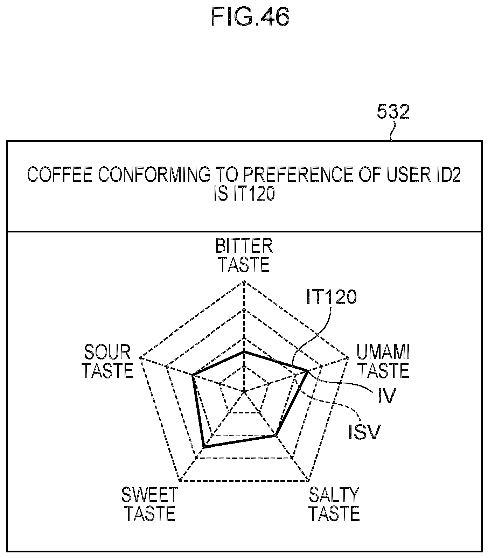

Fig. 46 exemplifies a preferred beverage/food information presentation screen 532 displayed on the display screen of the user-side terminal 131 of the user ID2 in response to a request to present an "item of coffee conforming to a preference of a user, the item having not been purchased by the user in the past (new item)" to the user ID2.

As illustrated in Fig. 46, the information presentation unit 1051 displays information of a radar chart for the item evaluation value IV associated with the item IT120 together with the information "the item of coffee conforming to the preference of the user ID2 is the item IT120" on the display screen of the user-side terminal 131 of the user ID2.

Although the information presentation unit 1051 presents the information of the item in the category C1 of the coffee beverage, the information presentation unit 1051 can similarly present information of an item having an item evaluation value ID close to the numerical value of the user preference evaluation value UV indicated by the preference pattern associated with the user ID and in other categories, that is, the item in the category C2 of the dressing, the category C3 of the pot sauce, the category C4 of the ready-to-drink (RTD) beverage, the category C5 of the fruit drink, and the category C6 of the snack food.

The user preference evaluation value UV of the user ID is evaluated on the basis of the purchase history of the item in the category C1 of the coffee beverage, and the preference pattern is associated with the user ID. However, the user preference evaluation value UV of the user ID may be evaluated on the basis of the purchase history of the item in other categories, that is, the category C2 of the dressing, the category C3 of the pot sauce, the category C4 of the ready-to-drink (RTD) beverage, the category C5 of the fruit drink, and the category C6 of the snack food, and the preference pattern may be associated with the user ID. In this case, even for the same user ID (for example, the user ID1), a preference pattern may be different for each of the categories C1, C2, C3, C4, C5, and C6.

REFERENCE SIGNS LIST

1010    User preference evaluation value storage unit

1020    Item evaluation value storage unit
1030    Reception unit

1040    Determination unit
1050    Product information presentation unit
1060    Question presentation unit
1070    Answer reception unit
1080    Evaluation value generation unit
1011    Preference pattern storage unit
1012    Pattern preference evaluation value storage unit
2010    Reference sample composition information storage unit
2020    Correction unit
2030    Corrected composition information generation unit
2040    Presentation unit
1001    Purchase item history acquisition unit
1002    User preference evaluation value generation unit
1051    Information presentation unit

**Claims**

1. A preference product information presentation device that presents information on beverage or food items that suit a user's preferences on a display screen of a user side terminal in response to a request from a user side terminal for presentation of beverage or food items that suit a user's preferences

   and presents user information matching a product manufactured by a manufacturing institution via a screen of a display device of a manufacturing institution-side terminal in response to a request for presentation of user information matching a product manufactured by the manufacturing institution and presents user information matching a product sold/provided by a store via a screen of a display device of a store-side terminal in response to a request for presentation of user information matching a product sold/provided by the store, comprising:

   manufacturing institution-side terminals (110);
   store-side terminals (120);
   user side terminals (130);
   a server (200);
   a network (300) that connects the manufacturing institution-side terminals (110), store-side terminals (120), user side terminals (130), and the server (200), so that data can be mutually transmitted and received between the manufacturing institution-side terminals (110), store-side terminals (120), user side terminals (130), and the server (200);
   a user preference evaluation value storage unit that stores a user preference evaluation value for each of a plurality of preference evaluation topics for one or a combination of two or more of a sense of taste, a smell, or a food taste in association with a user, wherein the user preference evaluation value is a relative value to a reference value;
   an item evaluation value storage unit that stores an item evaluation value for each of the plurality of preference evaluation topics in association with an item of at least one of a beverage or a food, wherein an item is associated with a manufacturing institution that manufactures the item or a store that sells or provides the item, and wherein the item evaluation value is a relative value to the reference value;
   a reception unit that receives a presentation request for information associated with a product conforming to a preference of the user on the screen of the display apparatus (17) of the user side terminal (130);
   a determination unit that extracts a user preference evaluation value associated with the user from the user preference evaluation value storage unit according to the presentation request received by the reception unit, compares the extracted user preference evaluation value with a corresponding item evaluation value stored in the item evaluation value storage unit, and determines a degree of coincidence between the two values; and
   a product information presentation unit that presents information regarding a product conforming to the preference of the user according to a determination result from the determination unit on the screen of the display apparatus (17) of the user side terminal (130);
   wherein the user preference evaluation value storage unit includes:

   - a preference pattern storage unit that stores a user in association with any of first to N-th (where N is 2 or more) preference patterns, and
   - a pattern preference evaluation value storage unit that stores a <u>specific</u> user preference evaluation

value for each of a plurality of preference evaluation topics for one or a combination of two or more of the sense of taste, a smell, or a food taste in association with the first to N-th preference patterns, wherein the specific user preference evaluation values for each of the plurality of preference evaluation topics are different from one another for each of the first to N-th preference patterns,

whereby the preferred product information presentation device further comprises:

a user attribute storage unit that stores user information including a user attribute including at least the user's gender and generation or age in association with the user;
and whereby the preferred product information presentation device is configured to perform the following steps:

• in a case in which the reception unit receives a request for the presentation of a product that matches the user's preferences via the screen of the display device (17) of the user side terminal (130) corresponding to the user:

- the determination unit:

. retrieves a preference pattern associated with the user who made the presentation request from the preference pattern storage unit,
. retrieves a specific user preference evaluation value associated with the retrieved preference pattern from the pattern preference evaluation value storage unit,
. compares the retrieved specific user preference evaluation value with the item evaluation value stored in the item evaluation value storage unit,
. retrieves information on an item whose degree of match between the two is higher than that of other items and information on the item evaluation value of the item from the item evaluation value storage unit,

- the product information presentation unit presents the information on the item and the item evaluation value of the item extracted by the determination unit on the screen of the display device (17) of the user side terminal (130);

• in a case in which the reception unit receives a request for presentation of user information matching a product manufactured by a manufacturing institution via the screen of the display device (17) of the manufacturing institution-side terminal (110) corresponding to the manufacturing institution,

- the determination unit:

. retrieves from the item evaluation value storage unit the item evaluation value associated with the item of the product associated with the manufacturing institution that made the presentation request,
. compares the retrieved item evaluation value with the corresponding specific user preference evaluation value stored in the pattern preference value storage unit,
. retrieves from the preference pattern storage unit a preference pattern in which the degree of match between the two is higher than other preference patterns, and the user information corresponding to each user associated with the extracted preference pattern is extracted from the user attribute storage unit,

- the product information presentation unit presents the user information of each user extracted by the determination unit on the screen of the display device (17) of the manufacturing institution-side terminal (110); or

• in a case in which the reception unit receives a request for presentation of user information matching a product sold/provided by a store via the screen of the display device (17) of the store-side terminal (120) corresponding to the store,

- the determination unit:

. retrieves from the item evaluation value storage unit the item evaluation value associated with the item of the product associated with the store that made the presentation request,

. compares the retrieved item evaluation value with the corresponding specific user preference evaluation value stored in the pattern preference value storage unit,

. retrieves from the preference pattern storage unit a preference pattern in which the degree of match between the two is higher than other preference patterns, and the user information corresponding to each user associated with the extracted preference pattern is extracted from the user attribute storage unit,

- the product information presentation unit presents the user information of each user extracted by the determination unit on the screen of the display device (17) of the store -side terminal (120);

wherein the manufacturing institution-side terminals (110), the store-side terminals (120), the user-side terminal (130), and the server (200) are equipped with the reception unit, the determination unit, and the product information presentation unit;

wherein the user preference evaluation value storage unit, the preference pattern storage unit, the item evaluation value storage unit, and the user attribute storage unit are configured as databases and are provided in the server (200).

2. The preferred product information presentation device according to claim 1, further comprising:

a question presentation unit that presents, to the user, a question to which answers are different according to a difference in an item evaluation value between items of at least one of the beverage or the food;

an answer reception unit that receives an answer of the user to the question; and

an evaluation value generation unit that generates a user preference evaluation value based on the answer received by the answer reception unit and associates the user preference evaluation value with the user.

3. The preferred product information presentation device according to claim 2, wherein an answer result to the question is classified into first to N-th (where N is 2 or more) preference patterns, and the user preference evaluation value for each of the plurality of preference evaluation topics is associated with the first to N-th preference patterns for the one or the combination of two or more of the sense of taste, the smell, or the food taste.

4. The preferred product information presentation device according to any one of claims 1 to 3, wherein:

the user preference evaluation value storage unit stores the user preference evaluation value as a relative numerical value with respect to the user preference reference value, and

the item evaluation value storage unit stores the item evaluation value as a relative numerical value with respect to the item reference value.

5. The preferred product information presentation device according to claim 4, wherein the product information presentation unit presents, as a result of comparing a numerical value of the user preference evaluation value with a numerical value of the item evaluation value, at least one of the beverage or the food of an item for which the numerical values of the two values are closer to each other than other items.

6. The preferred product information presentation device according to any one of claims 1 to 5, wherein: the product information presentation unit presents, as a result of comparing a numerical value of the user preference evaluation value with a numerical value of at least one of the item evaluation value, a manufacturing institution or a store associated with an item for which the numerical values of the two values are closer to each other than items of other manufacturing institutions, stores, or a combination thereof.

7. The preferred product information presentation device according to claim 2 or 3, wherein:

each of the first to N-th (where N is 2 or more) preference patterns is associated with a product preferred by the user belonging to the preference pattern, and

the product information presentation unit presents information regarding a product associated with the preference pattern to which the user belongs.

8. The preferred product information presentation device according to claim 2, 3, or 7, wherein
the product information presentation unit presents another user belonging to a preference pattern to which the user belongs as a matching target.

9. The preference information generation device according to claim 1, further comprising:

   a per-user history data storage unit that stores per-user history data indicating an item of a dish or a food purchased by the user or provided to the user in the past in association with the user,
   wherein a selection unit selects an item of a dish or a food from the per-user history data stored in the per-user history data storage unit.

10. The preference information generation device according to claim 9, further comprising:

    an acquisition unit that acquires information regarding a food constituent material to be stocked,
    wherein the selection unit selects an item of a dish or a food including the acquired food constituent material.

11. The preference information generation device according to any one of claims 9 to 10, wherein
a recipe for a dish or a food is presented according to the adjusted item evaluation value.

12. The preference information generation device according to any one of claims 9 to 11, further comprising:
a reproduction unit that reproduces a dish or a food from which at least one of the sense of taste, the smell, or the food taste is obtained according to the adjusted item evaluation value.

13. The preference information generation device according to claim 12, wherein
the reproduction unit reproduces a dish or a food by using a food constituent material designated by the user.

14. The preference information generation device according to any one of claims 9 to 13, wherein:

    a nationality or a hometown is associated with the user,
    the user preference evaluation value storage unit stores the user preference evaluation value as a relative numerical value with respect to the user preference reference value according to the nationality or the hometown of the user,
    the item evaluation value storage unit stores an item evaluation value for each nationality or hometown as a relative numerical value with respect to an item reference value for each nationality or hometown, and
    the item evaluation value adjustment unit extracts an item evaluation value corresponding to the nationality or the hometown of the user from the item evaluation value storage unit, and adjusts the item evaluation value corresponding to the nationality or the hometown of the user such that the item evaluation value is an item evaluation value according to the user preference evaluation value.

15. The preferred product information presentation device according to claim 1, wherein:

    the user preference evaluation value is classified into first to N-th (where N is 2 or more) preference patterns,
    one of the first to N-th preference patterns is associated with each user, and
    the information presentation unit presents information of an item of a beverage or a food serving as an item evaluation value that coincides with a preference pattern associated with the user as information of an item of a beverage or a food conforming to the preference of the user.

16. The preferred product information presentation device according to claim 15, wherein
a purchase item history acquisition unit acquires a history of a purchase item of a beverage or a food belonging to a specific category of the beverage or the food.

**Patentansprüche**

1. Vorrichtung zum Darstellen von Informationen zu Bevorzugungsprodukten, die als Reaktion auf eine Anfrage, welche von einem benutzerseitigen Endgerät ausgeht und das Darstellen von Getränke- oder Lebensmittelartikeln betrifft, die den Vorlieben eines Benutzers entsprechen, Informationen über Getränke- oder Lebensmittelartikel, welche den Vorlieben eines Benutzers entsprechen, auf einem Bildschirm eines benutzerseitigen Endgeräts darstellt, und die als Reaktion auf eine Anfrage, welche das Darstellen von Benutzerinformationen, die einem Produkt entsprechen, welches von einer Herstellungseinrichtung hergestellt wird, Benutzerinformationen, die einem Produkt entsprechen, welches von einer Herstellungseinrichtung hergestellt wird, über einen Bildschirm eines Anzeigegeräts eines Endgeräts auf Seiten der Herstellungseinrichtung darstellt, und die als Antwort auf eine Anfrage, welche das Darstellen von Benutzerinformationen, die einem Produkt entsprechen, welches von einem Ladengeschäft verkauft/feilgehalten wird, Benutzerinformationen, die einem Produkt entsprechen, welches von den Ladengeschäft verkauft/feilgehalten wird, über einen Bildschirm eines Anzeigegeräts eines ladengeschäftsseitigen Endgeräts darstellt, umfassend:

Endgeräte (110) auf Seiten der Herstellungseinrichtung;
ladengeschäftsseitige Endgeräte (120);
benutzerseitige Endgeräte (130);
einen Server (200);
ein Netzwerk (300), das die Endgeräte (110) auf Seiten der Herstellungseinrichtung, die ladengeschäftsseitigen Endgeräte (120), die benutzerseitigen Endgeräte (130) und den Server (200) derart miteinander verbindet, dass Daten zwischen den Endgeräten (110) auf Seiten der Herstellungseinrichtung, den ladengeschäftsseitigen Endgeräten (120), den benutzerseitigen Endgeräten (130) und dem Server (200) wechselseitig übertragen und empfangen werden können;
eine Einheit zum Speichern von Bewertungskennzahlen für Benutzervorlieben, in welcher für jedes einer Mehrzahl an Vorliebenbewertungsthemen für eines/einen oder eine Kombination aus zwei oder mehr von Geschmacksempfinden, Geruch oder Lebensmittelgeschmack eine Bewertungskennzahl für Benutzervorlieben gespeichert wird, wobei die Bewertungskennzahl für Benutzervorlieben eine relative Kennzahl gegenüber einer Bezugskennzahl ist;
eine Einheit zum Speichern von Artikelbewertungskennzahlen, in welcher eine Artikelbewertungskennzahl für jedes der Mehrzahl an Vorliebenbewertungsthemen hinsichtlich der Vorlieben in Verbindung mit einem Artikel mindestens eines von einem Getränk oder einem Lebensmittel gespeichert wird, wobei ein Artikel einer Herstellungseinrichtung, die den Artikel herstellt, oder einem Ladengeschäft zugeordnet ist, das den Artikel verkauft oder feilbietet, und wobei die Artikelbewertungskennzahl eine relative Kennzahl gegenüber einer Bezugskennzahl ist;
eine Empfangseinheit, die auf dem Bildschirm des Anzeigegeräts (17) des benutzerseitigen Endgeräts (130) eine Anfrage empfängt, welche das Darstellen von Informationen betrifft, die mit einem Produkt zusammenhängen, das einer Vorliebe des Benutzers entspricht;
eine Bestimmungseinheit, die gemäß der Darstellungsanforderung, welche von der Empfangseinheit empfangen wurde, eine dem Benutzer zugeordnete Bewertungskennzahl der Benutzervorliebe aus der Einheit zum Speichern von Bewertungskennzahlen für Benutzervorlieben extrahiert, die extrahierte Bewertungskennzahl für Benutzervorlieben mit einer entsprechenden Artikelbewertungskennzahl vergleicht, die in der Einheit zum Speichern von Artikelbewertungskennzahlen gespeichert ist, und einen Grad der Übereinstimmung zwischen den beiden Kennzahlen bestimmt; und
eine Einheit zum Darstellen von Produktinformationen, die Informationen, die ein Produkt betreffen, welches gemäß einem Bestimmungsergebnis aus der Bestimmungseinheit den Vorlieben des Benutzers entspricht, auf dem Bildschirm des Anzeigegeräts (17) des benutzerseitigen Terminals (130) darstellt;
wobei die Einheit zum Speichern von Bewertungskennzahlen für Benutzervorlieben Folgendes beinhaltet:

- eine Einheit zum Speichern von Bevorzugungsmustern, die einen Benutzer in Verbindung mit einem beliebigen von einem ersten bis N-ten (wobei N gleich 2 oder mehr ist) Bevorzugungsmuster speichert, und
- eine Einheit zum Speichern von Bewertungskennzahlen für Mustervorlieben, die eine bestimmte Bewertungskennzahl für Benutzervorlieben für jedes einer Mehrzahl an Vorliebenbewertungsthemen für eines/einen von oder eine Kombination aus zwei oder mehr von Geschmacksempfinden, Geruchs oder Lebensmittelgeschmack in Verbindung mit dem ersten bis N-ten Bevorzugungsmuster speichert, wobei sich die spezifischen Bewertungskennzahlen für Benutzervorlieben für jedes der Mehrzahl an Vorliebenbewertungsthemen für jedes der ersten bis N-ten Bevorzugungsmuster voneinander unterscheiden,

wobei die Vorrichtung zum Darstellen von Informationen zu bevorzugten Produkten weiterhin Folgendes umfasst:

eine Einheit zum Speichern von Benutzerattributen, die Benutzerinformationen einschließlich eines Benutzerattributs speichert, wobei dazu zumindest das Geschlecht und die Generation oder das Alter des Benutzers in Verbindung mit dem Benutzer gehören; und

wobei die Vorrichtung zum Darstellen von Informationen zu bevorzugten Produkten dafür ausgelegt ist, die folgenden Schritte auszuführen:

• im Falle, dass die Empfangseinheit über den Bildschirm des Anzeigegeräts (17) des benutzerseitigen Endgeräts (130), welches dem Benutzer entspricht, eine Anfrage empfängt, welche die Darstellung eines Produkts betrifft, das den Vorlieben des Benutzers entspricht:

- die Bestimmungseinheit:

· ein Bevorzugungsmuster, das dem Benutzer zugeordnet ist, welcher die Anfrage zur Darstellung gestellt hat, aus der Einheit zum Speichern von Bewertungskennzahlen für Mustervorlieben abruft,
· eine spezifische Bewertungskennzahl für Benutzervorlieben, die dem abgerufenen Bevorzugungsmuster zugeordnet ist, aus der Einheit zum Speichern von Bewertungskennzahl für Mustervorlieben abruft,
· die abgerufene bestimmte Bewertungskennzahl für Benutzervorlieben mit der Artikelbewertungskennzahl vergleicht, welche in der Einheit zum Speichern von Artikelbewertungskennzahlen gespeichert ist,
· Informationen zu einem Artikel, für welchen der Übereinstimmungsgrad zwischen den beiden höher als derjenige anderer Artikel ist, und Informationen zur Artikelbewertungskennzahl des Artikels aus der Einheit zum Speichern von Artikelbewertungskennzahlen abruft;

- die Einheit zum Darstellen von Produktinformationen die Informationen über den Artikel und die Artikelbewertungskennzahl des Artikels, welche von der Bestimmungseinheit extrahiert wurden, auf dem Bildschirm des Anzeigegeräts (17) des benutzerseitigen Terminals (130) darstellt;

• im Falle, dass die Empfangseinheit über den Bildschirm des Anzeigegeräts (17) des Endgeräts (110) auf Seiten einer Herstellungseinrichtung, welches der Herstellungseinrichtung entspricht, eine Anfrage empfängt, welche die Darstellung von Benutzerinformationen betrifft, die einem Produkt entsprechen, welches von der Herstellungseinrichtung hergestellt wurde,

- die Bestimmungseinheit:

· aus der Einheit zum Speichern von Artikelbewertungskennzahlen diejenige Artikelbewertungskennzahl abruft, welche dem Artikel des Produkts zugeordnet ist, das der Herstellungseinrichtung zugeordnet ist, welche die Darstellungsanfrage gestellt hat,
· die abgerufene Artikelbewertungskennzahl mit der entsprechenden spezifischen Bewertungskennzahl für Benutzervorlieben vergleicht, welche in der Einheit zum Speichern von Mustervorliebenkennzahlen gespeichert ist,
· aus der Einheit zum Speichern von Bevorzugungsmustern ein Bevorzugungsmuster abruft, bei welchem der Übereinstimmungsgrad zwischen den beiden höher als bei anderen Bevorzugungsmustern ist, und die Benutzerinformationen, die jedem der Benutzer entsprechen, welche dem extrahierten Bevorzugungsmuster zugeordnet sind, aus der Einheit zum Speichern von Benutzerattributen extrahiert werden,

- die Einheit zum Darstellen von Produktinformationen die Benutzerinformationen für jeden der Benutzer, wie sie von der Bestimmungseinheit extrahiert wurden, auf dem Bildschirm des Anzeigegeräts (17) des Endgeräts (110) auf der Seiten der der Herstellungseinrichtung darstellt; oder

• im Falle, dass die Empfangseinheit eine Anfrage zur Darstellung von Benutzerinformationen erhält, die einem Produkt entsprechen, welches von einem Ladengeschäft verkauft/feilgehalten wird, und zwar über den Bildschirm des Anzeigegeräts (17) des ladengeschäftsseitigen Endgeräts (120), das diesem Ladengeschäft entspricht,

- die Bestimmungseinheit:

· aus der Einheit zum Speichern von Artikelbewertungskennzahlen die Artikelbewertungskennzahl abruft, welche dem Artikel des Produkts zugeordnet ist, das dem Ladengeschäft zugeordnet ist, welches die Darstellungsanfrage gestellt hat,
· die abgerufene Artikelbewertungskennzahl mit der entsprechenden spezifischen Bewertungskennzahl für Benutzervorlieben vergleicht, welche in der Einheit zum Speichern von Mustervorliebenkennzahlen gespeichert ist,
· aus der Einheit zum Speichern von Bevorzugungsmustern ein Bevorzugungsmuster abruft, bei welchem der Übereinstimmungsgrad zwischen den beiden höher als bei anderen Bevorzugungsmustern ist, und die Benutzerinformationen, die jedem der Benutzer entsprechen, welche dem extrahierten Bevorzugungsmuster zugeordnet sind, aus der Einheit zum Speichern von Benutzerattributen extrahiert werden,

- die Einheit zum Anzeigen von Produktinformationen die Benutzerinformationen für jeden der Benutzer, wie sie von der Bestimmungseinheit extrahiert wurden, auf dem Bildschirm des Anzeigegeräts (17) des ladengeschäftsseitigen Endgeräts (120) anzeigt;

wobei die Endgeräte (110) auf Seiten der Fertigungseinrichtung, die ladengeschäftsseitigen Endgeräte (120), das benutzerseitige Endgerät (130) und der Server (200) mit der Empfangseinheit, der Bestimmungseinheit und der Einheit zum Darstellen von Produktinformationen ausgestattet sind;
wobei die Einheit zum Speichern von Bewertungskennzahlen für die Benutzervorlieben, die Einheit zum Speichern von Bevorzugungsmustern, die Einheit zum Speichern von Artikelbewertungskennzahlen und die Einheit zum Speichern von Benutzerattributen als Datenbanken ausgelegt sind und auf dem Server (200) bereitgestellt werden.

**2.** Vorrichtung zum Darstellen von Informationen zu bevorzugten Produkten nach Anspruch 1, weiterhin umfassend:

eine Einheit zum Darstellen von Fragen, die dem Benutzer eine Frage darstellt, auf die sich die Antworten gemäß einem Unterschied hinsichtlich einer Artikelbewertungskennzahl zwischen Artikeln von dem mindestens einen Getränk oder Lebensmittel unterscheiden;
eine Einheit zum Empfangen von Antworten, die eine Antwort des Benutzers auf die Frage empfängt; und
eine Einheit zum Erstellen von Bewertungskennzahlen, die auf Grundlage der Antwort, welche von der Einheit zum Empfangen von Antworten empfangen wurde, eine Bewertungskennzahl für Benutzervorlieben erstellt und dem Benutzer die Bewertungskennzahl für Benutzervorlieben zuordnet.

**3.** Vorrichtung zum Darstellen von Informationen zu bevorzugten Produkten nach Anspruch 2, wobei
eine auf die Frage gegebene Antwort in erste bis N-te Bevorzugungsmuster (wobei N gleich 2 oder mehr ist) eingestuft wird und die Bewertungskennzahl für Benutzervorlieben für jedes der Mehrzahl an Vorliebenbewertungsthemen dem ersten bis N-ten Bevorzugungsmuster für das eine / den einen oder die Kombination aus zwei oder mehr von Geschmacksempfinden, Geruch oder Lebensmittelgeschmack zugeordnet wird.

**4.** Vorrichtung zum Darstellen von Informationen zu bevorzugten Produkten nach einem beliebigen der Ansprüche 1 bis 3, wobei:

die Einheit zum Speichern von Bewertungskennzahlen für Benutzervorlieben die Bewertungskennzahl für Benutzervorlieben als relativen Zahlenwert gegenüber einer Bezugskennzahl für Benutzervorlieben speichert, und
die Einheit zum Speichern von Artikelbewertungskennzahlen die Artikelbewertungskennzahl als relativen Zahlenwert gegenüber einer Artikelbezugskennzahl speichert.

**5.** Vorrichtung zum Darstellen von Informationen zu bevorzugten Produkten nach Anspruch 4, wobei
die Einheit zum Darstellen von Produktinformationen als Ergebnis des Vergleichs eines Zahlenwerts der Bewertungskennzahl für Benutzervorlieben mit einem Zahlenwert der Artikelbewertungskennzahl mindestens eines der Getränke oder Lebensmittel eines Artikels darstellt, für welchen die Zahlenwerte der beiden Kennzahlen näher beieinander liegen als bei anderen Artikeln.

**6.** Vorrichtung zum Darstellen von Informationen zu bevorzugten Produkten nach einem beliebigen der Ansprüche 1 bis 5, wobei:
die Einheit zum Darstellen von Produktinformationen als Ergebnis des Vergleichs eines Zahlenwerts der Bewertungskennzahl für Benutzervorlieben mit einem Zahlenwert von mindestens einer Artikelbewertungskennzahl eine Herstellungseinrichtung oder ein Ladengeschäft darstellt, die/das einem Artikel zugeordnet ist, für welchen die Zahlenwerte der beiden Kennzahlen näher beieinander liegen bei als Artikeln anderer Herstellungseinrichtungen, Ladengeschäfte oder einer Kombination davon.

7. Vorrichtung zum Darstellen von Informationen zu bevorzugten Produkten nach einem beliebigen der Ansprüche 2 oder 3, wobei:

jedes der ersten bis N-ten Bevorzugungsmuster (wobei N gleich 2 oder mehr ist) einem Produkt zugeordnet ist, das von dem Benutzer bevorzugt wird, welcher dem Bevorzugungsmuster angehört, und die Einheit zum Darstellen von Produktinformationen Informationen zu einem Produkt darstellt, das dem Bevorzugungsmuster zugeordnet ist, welchem der Benutzer angehört.

8. Vorrichtung zur Darstellung von Informationen zu bevorzugten Produkten nach Anspruch 2, 3 oder 7, wobei die Einheit zum Darstellen von Produktinformationen einen anderen Benutzer, der einem Bevorzugungsmuster angehört, welchem der Benutzer angehört, als übereinstimmendes Ziel darstellt.

9. Vorrichtung zum Erstellen von Bevorzugungsinformationen nach Anspruch 1, weiterhin umfassend:

eine Einheit zum Speichern von Daten des benutzerspezifischen Verlaufs, die Daten des benutzerspezifischen Verlaufs speichert, welche einen Artikel eines in der Vergangenheit vom Benutzer gekauften oder dem Benutzer bereitgestellten Gerichts oder Lebensmittels in Zusammenhang mit dem Benutzer angeben, wobei eine Auswahleinheit einen Artikel eines Gerichts oder eines Lebensmittels aus den Daten des benutzerspezifischen Verlaufs auswählt, welche in der Einheit zum Speichern von Daten des benutzerspezifischen Verlaufs gespeichert sind.

10. Vorrichtung zum Erstellen von Bevorzugungsinformationen nach Anspruch 9, weiterhin umfassend:

eine Erfassungseinheit, die Informationen über ein zu bevorratendes Lebensmittelbestandteilmaterial erfasst, wobei die Auswahleinheit einen Artikel eines Gerichts oder eines Lebensmittels auswählt, welches das erfassten Lebensmittelbestandteilmaterial beinhaltet.

11. Vorrichtung zum Erstellen von Bevorzugungsinformationen nach einem beliebigen der Ansprüche 9 bis 10, wobei ein Rezept für ein Gericht oder ein Lebensmittel entsprechend der angepassten Artikelbewertungskennzahl dargestellt wird.

12. Vorrichtung zum Erstellen von Bevorzugungsinformationen nach einem beliebigen der Ansprüche 9 bis 11, weiterhin umfassend:
eine Nachbildungseinheit, die ein Gericht oder ein Lebensmittel nachbildet, wobei mindestens eines/einer von dessen Geschmacksempfinden, Geruch oder Lebensmittelgeschmack gemäß der angepassten Artikelbewertungskennzahl erhalten wird.

13. Vorrichtung zum Erstellen von Bevorzugungsinformationen nach Anspruch 12, wobei
die Nachbildungseinheit ein Gericht oder ein Lebensmittel unter Verwendung eines Lebensmittelbestandteilmaterials nachbildet, welches vom Benutzer bestimmt wurde.

14. Vorrichtung zum Erstellen von Bevorzugungsinformationen nach einem beliebigen der Ansprüche 9 bis 13, wobei:

dem Benutzer eine Staatsangehörigkeit oder ein Wohnort zugeordnet ist, die Einheit zum Speichern von Bewertungskennzahlen für Benutzervorlieben die Bewertungskennzahl für Benutzervorlieben als relativen Zahlenwert gegenüber der Bezugskennzahl für Benutzervorlieben entsprechend der Staatsangehörigkeit oder dem Wohnort des Benutzers speichert, die Einheit zum Speichern von Artikelbewertungskennzahlen für jede Staatsangehörigkeit oder jeden Wohnort eine Artikelbewertungskennzahl als relativen Zahlenwert gegenüber einer Artikelbezugskennzahl für jede Staatsangehörigkeit oder jeden Wohnort speichert, und die Einheit zum Anpassen der Artikelbewertungskennzahl eine Artikelbewertungskennzahl, welche der Staatsangehörigkeit oder dem Wohnort des Benutzers entspricht, aus der Einheit zum Speichern von Artikelbewertungskennzahlen extrahiert und die Artikelbewertungskennzahl, welche der Staatsangehörigkeit oder dem Wohnort des Benutzers entspricht, derart anpasst, dass die Artikelbewertungskennzahl eine Artikelbewertungskennzahl ist, welche der Bewertungskennzahl für Benutzervorlieben entspricht.

**15.** Vorrichtung zum Darstellen von Informationen zu bevorzugten Produkten nach Anspruch 1, wobei:

die Bewertungskennzahl für die Benutzervorlieben in die ersten bis N-ten Bevorzugungsmuster (wobei N gleich 2 oder mehr ist) eingestuft wird,
jedem der Benutzer eines der ersten bis N-ten Bevorzugungsmuster zugeordnet wird, und
die Einheit zur Informationsdarstellung Informationen zu einem Artikel eines Getränks oder eines Lebensmittels, die als Artikelbewertungskennzahl dienen, welche mit einem Bevorzugungsmuster übereinstimmt, das dem Benutzer zugeordnet ist, als Informationen zu einem Artikel eines Getränks oder eines Lebensmittels darstellt, das den Vorlieben des Benutzers entspricht.

**16.** Vorrichtung zum Darstellen von Informationen zu bevorzugten Produkten nach Anspruch 15, wobei eine Einheit zum Erfassen des Verlaufs des Artikelkaufs den Verlauf eines Artikelkaufs für ein Getränk oder ein Lebensmittel erfasst, das einer bestimmten Kategorie des Getränks oder des Lebensmittels angehört.

**Revendications**

**1.** Dispositif de présentation d'informations de produit préféré qui présente des informations sur des boissons ou des aliments qui conviennent aux préférences d'un utilisateur sur un écran d'affichage d'un terminal côté utilisateur en réponse à une demande d'un terminal côté utilisateur d'une présentation de boissons ou d'aliments qui conviennent aux préférences d'un utilisateur, et présente des informations d'utilisateur correspondant à un produit fabriqué par un établissement de fabrication via un écran d'un dispositif d'affichage d'un terminal côté établissement de fabrication en réponse à une demande de présentation d'informations d'utilisateur correspondant à un produit fabriqué par l'établissement de fabrication et présente des informations d'utilisateur correspondant à un produit vendu/fourni par un magasin via un écran d'un dispositif d'affichage d'un terminal côté magasin en réponse à une demande de présentation d'informations d'utilisateur correspondant à un produit vendu/fourni par le magasin, comprenant :

des terminaux côté établissement de fabrication (110) ;
des terminaux côté magasin (120) ;
des terminaux côté utilisateur (130) ;
un serveur (200) ;
un réseau (300) qui connecte les terminaux côté établissement de fabrication (110), les terminaux côté magasin (120), les terminaux côté utilisateur (130) et le serveur (200), de telle sorte que des données peuvent être mutuellement transmises et reçues entre les terminaux côté établissement de fabrication (110), les terminaux côté magasin (120), les terminaux côté utilisateur (130) et le serveur (200) ;
une unité de stockage de valeur d'évaluation de préférence d'utilisateur qui stocke une valeur d'évaluation de préférence d'utilisateur pour chacun d'une pluralité de sujets d'évaluation de préférence pour un ou une combinaison de deux ou plus d'un sens du goût, d'une odeur ou d'un goût d'aliment en association avec un utilisateur, dans lequel la valeur d'évaluation de préférence d'utilisateur est une valeur relative par rapport à une valeur de référence ;
une unité de stockage de valeur d'évaluation d'article qui stocke une valeur d'évaluation d'article pour chacun de la pluralité de sujets d'évaluation de préférence en association avec un article d'au moins un parmi une boisson ou un aliment, dans lequel un article est associé à un établissement de fabrication qui fabrique l'article ou à un magasin qui vend ou fournit l'article, et dans lequel la valeur d'évaluation d'article est une valeur relative par rapport à la valeur de référence ;
une unité de réception qui reçoit une demande de présentation d'informations associées à un produit conforme à une préférence de l'utilisateur sur l'écran de l'appareil d'affichage (17) du terminal côté utilisateur (130) ;
une unité de détermination qui extrait une valeur d'évaluation de préférence d'utilisateur associée à l'utilisateur à partir de l'unité de stockage de valeur d'évaluation de préférence d'utilisateur selon la demande de présentation reçue par l'unité de réception, compare la valeur d'évaluation de préférence d'utilisateur extraite avec une valeur d'évaluation d'article correspondante stockée dans l'unité de stockage de valeur d'évaluation d'article, et détermine un degré de coïncidence entre les deux valeurs ; et
une unité de présentation d'informations de produit qui présente des informations concernant un produit conforme à la préférence de l'utilisateur selon un résultat de détermination de l'unité de détermination sur l'écran de l'appareil d'affichage (17) du terminal côté utilisateur (130) ;
dans lequel l'unité de stockage de valeur d'évaluation de préférence d'utilisateur inclut :

- une unité de stockage de motifs de préférences qui stocke un utilisateur en association avec un quelconque de premier à N-ième (où N est égal à 2 ou plus) motifs de préférences, et
- une unité de stockage de valeur d'évaluation de préférence de motif qui stocke une valeur d'évaluation de préférence d'utilisateur spécifique pour chacun d'une pluralité de sujets d'évaluation de préférence pour un ou une combinaison de deux ou plus du sens du goût, d'une odeur ou d'un goût d'aliment en association avec les premier à N-ième motifs de préférences, dans lequel les valeurs d'évaluation de préférence d'utilisateur spécifiques pour chacun de la pluralité de sujets d'évaluation de préférence sont différentes les unes des autres pour chacun des premier à N-ième motifs de préférences,

dans lequel le dispositif de présentation d'informations de produit préféré comprend en outre :

une unité de stockage d'attribut d'utilisateur qui stocke des informations d'utilisateur incluant un attribut d'utilisateur incluant au moins le sexe et la génération ou l'âge de l'utilisateur en association avec l'utilisateur ; et
le dispositif de présentation d'informations de produit préféré étant configuré pour effectuer les étapes suivantes :

• dans un cas où l'unité de réception reçoit une demande de présentation d'un produit qui correspond aux préférences de l'utilisateur via l'écran du dispositif d'affichage (17) du terminal côté utilisateur (130) correspondant à l'utilisateur :

- l'unité de détermination :

· récupère un modèle de préférences associé à l'utilisateur qui a fait la demande de présentation à partir de l'unité de stockage de motifs de préférences,
· récupère une valeur d'évaluation de préférence d'utilisateur spécifique associée au motif de préférences récupéré à partir de l'unité de stockage de valeur d'évaluation de préférence de motif,
· compare la valeur d'évaluation de préférence d'utilisateur spécifique récupérée avec la valeur d'évaluation d'article stockée dans l'unité de stockage de valeur d'évaluation d'article,
· récupère des informations sur un article dont le degré de correspondance entre les deux est supérieur à celui d'autres article et des informations sur la valeur d'évaluation d'article de l'unité de stockage de valeur d'évaluation d'article,

- l'unité de présentation d'informations de produit présente les informations sur l'article et la valeur d'évaluation d'article de l'article extrait par l'unité de détermination sur l'écran du dispositif d'affichage (17) du terminal côté utilisateur (130) ;

• dans un cas où l'unité de réception reçoit une demande de présentation d'informations d'utilisateur correspondant à un produit fabriqué par un établissement de fabrication via l'écran du dispositif d'affichage (17) du terminal côté établissement de fabrication (110) correspondant à l'établissement de fabrication,

- l'unité de détermination :

· récupère à partir de l'unité de stockage de valeur d'évaluation d'article la valeur d'évaluation d'article associée à l'article du produit associé à l'établissement de fabrication qui a fait la demande de présentation,
· compare la valeur d'évaluation d'article récupérée à la valeur d'évaluation de préférence d'utilisateur spécifique correspondante stockée dans l'unité de stockage de valeur de préférence de motif,
· récupère à partir de l'unité de stockage de motifs de préférences un motif de préférences dans lequel le degré de correspondance entre les deux est supérieur à d'autres motifs de préférences, et les informations d'utilisateur correspondant à chaque utilisateur associé au motif de préférences extrait sont extraites de l'unité de stockage d'attribut d'utilisateur,

- l'unité de présentation des informations sur le produit présente les informations d'utilisateur de chaque utilisateur extraites par l'unité de détermination sur l'écran du dispositif d'affichage (17) du terminal côté établissement de fabrication (110) ; ou

• dans un cas où l'unité de réception reçoit une demande de présentation d'informations d'utilisateur correspondant à un produit vendu/fourni par un magasin via l'écran du dispositif d'affichage (17) du terminal côté magasin (120) correspondant au magasin,

- l'unité de détermination :

· récupère à partir de l'unité de stockage de valeur d'évaluation d'article la valeur d'évaluation d'article associée à l'article du produit associé au magasin qui a fait la demande de présentation,
· compare la valeur d'évaluation d'article récupérée à la valeur d'évaluation de préférence d'utilisateur spécifique correspondante stockée dans l'unité de stockage de valeur de préférence de motif,
· récupère à partir de l'unité de stockage de motifs de préférences un motif de préférences dans lequel le degré de correspondance entre les deux est supérieur à d'autres motifs de préférences, et les informations d'utilisateur correspondant à chaque utilisateur associé au motif de préférences extrait sont extraites de l'unité de stockage d'attribut d'utilisateur,

- l'unité de présentation des informations sur le produit présente les informations d'utilisateur de chaque utilisateur extraites par l'unité de détermination sur l'écran du dispositif d'affichage (17) du terminal côté magasin (120) ; ou

dans lequel les terminaux côté établissement de fabrication (110), les terminaux côté magasin (120), le terminal côté utilisateur (130) et le serveur (200) sont équipés de l'unité de réception, de l'unité de détermination et de l'unité de présentation d'informations de produit ;
dans lequel l'unité de stockage de valeur d'évaluation de préférence d'utilisateur, l'unité de stockage de motifs de préférences, l'unité de stockage de valeur d'évaluation d'article et l'unité de stockage d'attribut d'utilisateur sont configurées sous la forme de bases de données et sont fournies dans le serveur (200).

2. Dispositif de présentation d'informations de produit préféré selon la revendication 1, comprenant en outre :

une unité de présentation de question qui présente, à l'utilisateur, une question à laquelle des réponses sont différentes en fonction d'une différence de valeur d'évaluation d'article entre des articles d'au moins un parmi la boisson ou l'aliment ;
une unité de réception de réponse qui reçoit une réponse de l'utilisateur à la question ; et
une unité de génération de valeur d'évaluation qui génère une valeur d'évaluation de préférence d'utilisateur sur la base de la réponse reçue par l'unité de réception de réponse et associe la valeur d'évaluation de préférence d'utilisateur à l'utilisateur.

3. Dispositif de présentation d'informations de produit préféré selon la revendication 2, dans lequel un résultat de réponse à la question est classé en premier à N-ième (où N est 2 ou plus) motifs de préférences, et la valeur d'évaluation de préférence d'utilisateur pour chacun de la pluralité de sujets d'évaluation de préférence est associée aux premier à N-ième motifs de préférences pour le certain ou la combinaison de deux ou plus du sens du goût, de l'odeur ou du goût d'aliment.

4. Dispositif de présentation d'informations de produit préféré selon l'une quelconque des revendications 1 à 3, dans lequel :

l'unité de stockage de valeur d'évaluation de préférence d'utilisateur stocke la valeur d'évaluation de préférence d'utilisateur en tant que valeur numérique relative par rapport à la valeur de référence de préférence d'utilisateur, et
l'unité de stockage de valeur d'évaluation d'article stocke la valeur d'évaluation d'article en tant que valeur numérique relative par rapport à la valeur de référence d'article.

5. Dispositif de présentation d'informations de produit préféré selon la revendication 4, dans lequel l'unité de présentation d'informations de produit présente, en résultat de la comparaison d'une valeur numérique de la valeur d'évaluation de préférence d'utilisateur avec une valeur numérique de la valeur d'évaluation d'article, au moins un parmi la boisson ou l'aliment d'un article pour lequel les valeurs numériques des deux valeurs sont plus proches l'une de l'autre que d'autres articles.

6. Dispositif de présentation d'informations de produit préféré selon l'une quelconque des revendications 1 à 5, dans lequel :

l'unité de présentation d'informations de produit présente, en résultat de la comparaison d'une valeur numérique de la valeur d'évaluation de préférence d'utilisateur avec une valeur numérique d'au moins une de la valeur d'évaluation d'article, un établissement de fabrication ou un magasin associé à un article pour lequel les valeurs numériques des deux valeurs sont plus proches l'une de l'autre que d'articles d'autres établissements de fabrication, magasins, ou une combinaison de ceux-ci.

7. Dispositif de présentation d'informations de produit préféré selon la revendication 2 ou 3, dans lequel :

chacun des premier à N-ième motifs de préférences (où N est 2 ou plus) est associé à un produit préféré par l'utilisateur appartenant au motif de préférences, et
l'unité de présentation d'informations de produit présente des informations concernant un produit associé au motif de préférences auquel l'utilisateur appartient.

8. Dispositif de présentation d'informations de produit préféré selon la revendication 2, 3 ou 7, dans lequel
l'unité de présentation d'informations de produit présente un autre utilisateur appartenant à un motif de préférences auquel l'utilisateur appartient en tant que cible de mise en correspondance.

9. Dispositif de génération d'informations de préférence selon la revendication 1, comprenant en outre :

une unité de stockage de données d'historique par utilisateur qui stocke des données d'historique par utilisateur indiquant un article d'un plat ou d'un aliment acheté par l'utilisateur ou fourni à l'utilisateur dans le passé en association avec l'utilisateur,
dans lequel une unité de sélection sélectionne un article d'un plat ou d'un aliment à partir des données d'historique par utilisateur stockées dans l'unité de stockage de données d'historique par utilisateur.

10. Dispositif de génération d'informations de préférence selon la revendication 9, comprenant en outre :

une unité d'acquisition qui acquiert des informations concernant un matériau constituant un aliment à stocker, dans lequel l'unité de sélection sélectionne un élément d'un plat ou d'un aliment comprenant le matériau constituant un aliment acquis.

11. Dispositif de génération d'informations de préférence selon l'une quelconque des revendications 9 à 10, dans lequel une recette pour un plat ou un aliment est présentée en fonction de la valeur d'évaluation d'article ajustée.

12. Dispositif de génération d'informations de préférence selon l'une quelconque des revendications 9 à 11, comprenant en outre :
une unité de reproduction qui reproduit un plat ou un aliment à partir duquel au moins un élément parmi le sens du goût, l'odeur ou le goût de l'aliment est obtenu selon la valeur d'évaluation d'article ajustée.

13. Dispositif de génération d'informations de préférence selon la revendication 12, dans lequel
l'unité de reproduction reproduit un plat ou un aliment en utilisant un matériau constituant un aliment désigné par l'utilisateur.

14. Dispositif de génération d'informations de préférence selon l'une quelconque des revendications 9 à 13, dans lequel :

une nationalité ou une ville d'origine est associée à l'utilisateur,
l'unité de stockage de valeur d'évaluation de préférence d'utilisateur stocke la valeur d'évaluation de préférence d'utilisateur en tant que valeur numérique relative par rapport à la valeur de référence de préférence d'utilisateur en fonction de la nationalité ou de la ville d'origine de l'utilisateur,
l'unité de stockage de valeur d'évaluation d'article stocke une valeur d'évaluation d'article pour chaque nationalité ou ville d'origine en tant que valeur numérique relative par rapport à une valeur de référence d'article pour chaque nationalité ou ville d'origine, et
l'unité d'ajustement de valeur d'évaluation d'article extrait une valeur d'évaluation d'article correspondant à la nationalité ou à la ville d'origine de l'utilisateur à partir de l'unité de stockage de valeur d'évaluation d'article, et ajuste la valeur d'évaluation d'article correspondant à la nationalité ou à la ville d'origine de l'utilisateur de telle sorte que la valeur d'évaluation d'article soit une valeur d'évaluation d'article selon la valeur d'évaluation de préférence d'utilisateur.

**15.** Dispositif de présentation d'informations de produit préféré selon la revendication 1, dans lequel :

la valeur d'évaluation de préférence d'utilisateur est classée en premier à N-ième (où N est 2 ou plus) motifs de préférences,
l'un des premier à N-ième motifs de préférences est associé à chaque utilisateur, et
l'unité de présentation d'informations présente des informations d'un article d'une boisson ou d'un aliment servant de valeur d'évaluation d'article qui coïncide avec un motif de préférences associé à l'utilisateur en tant qu'informations d'un article d'une boisson ou d'un aliment conforme à la préférence de l'utilisateur.

**16.** Dispositif de présentation d'informations de produit préféré selon la revendication 15, dans lequel une unité d'acquisition d'historique d'article d'achat acquiert un historique d'un article d'achat d'une boisson ou d'un aliment appartenant à une catégorie spécifique de la boisson ou de l'aliment.

FIG.1

# FIG.2

100,110,120,130,140,200

| 11 | 16 |
| --- | --- |
| CPU | INPUT DEVICE |

| 12 | 17 |
| --- | --- |
| ROM | DISPLAY DEVICE |

| 13 | 18 |
| --- | --- |
| RAM | COMMUNICATION I/F |

| 14 | ~15 |
| --- | --- |
| STORAGE | |

# FIG.3

200,100,110,120,130,140

1030
RECEPTION UNIT

1040
DETERMINATION UNIT

1050
PRODUCT INFORMATION
PRESENTATION UNIT

1060
QUESTION
PRESENTATION UNIT

1070
ANSWER
RECEPTION UNIT

1080
EVALUATION VALUE
GENERATION UNIT

1010
USER PREFERENCE
EVALUATION VALUE
STORAGE UNIT

PREFERENCE
PATTERN
STORAGE UNIT

PATTERN
PREFERENCE
EVALUATION
VALUE
STORAGE UNIT

1011      1012

1020
ITEM EVALUATION VALUE
STORAGE UNIT

1090
PURCHASE HISTORY DATA
STORAGE UNIT

1095
USER ATTRIBUTE
STORAGE UNIT

# FIG.4A

# FIG.4B

## FIG.5A

BITTER TASTE

IV

ISV

SOUR TASTE

UMAMI TASTE

SWEET TASTE

SALTY TASTE

# FIG.5B

SULFUR-BASED

ESTER-BASED

AMINE-BASED

ISV
IV

ALDEHYDE-BASED

ORGANIC ACID-BASED

# FIG.5C

## FIG.6

EP 4 339 869 B1

|  | QUESTION CONTENT | OPTION | | |
|---|---|---|---|---|
|  |  | A | | B |
| 1 | WHICH WAY DO YOU USUALLY DRINK COFFEE? | BLACK | | OTHERS |
| 2 | WHICH IS YOUR FAVORITE FRUIT? | GRAPEFRUIT | | PINEAPPLE |
| 3 | WHICH IS YOUR FAVORITE CANNED FRUIT? | MANDARIN ORANGE | | PEACH |
| 4 | WHICH IS YOUR FAVORITE WAY TO EAT MOCHI? | ISOBE (SOY SAUCE & SEAWEED) | | ZONI |
| 5 | WHICH IS YOUR FAVORITE WAY TO EAT FISH? | GRILLED FISH | | BOILED FISH/TERIYAKI |
| 6 | WHICH WAY DO YOU LIKE TO EAT BAKED CHICKEN (LEG MEAT)? | SALT | | SAUCE |
| 7 | WHICH KIND OF THICK-FRIED EGG DO YOU LIKE? | THICK FRIED EGG (WITH SUGAR) | | THICK FRIED EGG (WITH SOUP STOCK) |
| 8 | WHICH SHAVED ICE SYRUP DO YOU LIKE? | LEMON | | MELON |
| 9 | WHICH SAUCE DO YOU LIKE FOR HIYASHI CHUKA? | SESAME | | SOY SAUCE |
| 10 | WHICH SMALL DISH DO YOU LIKE? | SHUNGIKU | | PUMPKIN |
| 11 | PLEASE CHOOSE YOUR FAVORITE TRADITIONAL NEW YEAR'S YEAR FOOD | NAMASU / KURIKINTON / DATEMAKI | | KAZUNOKO / TAZUKURI |

510

511

# FIG.7

| | QUESTION CONTENT | OPTION | | | BITTER | SALTY | SOUR | SWEET | UMAMI |
|---|---|---|---|---|---|---|---|---|---|
| | | A | B | | | | | | |
| 1 | WHICH WAY DO YOU USUALLY DRINK COFFEE? | BLACK (BITTER TASTE) | OTHERS (NONE) | | 1 | | | | |
| 2 | WHICH IS YOUR FAVORITE FRUIT? | GRAPEFRUIT (SOUR TASTE, BITTER TASTE) | PINEAPPLE (SOUR TASTE, SWEET TASTE) | | 1 | | 1 | 1 | |
| 3 | WHICH IS YOUR FAVORITE CANNED FRUIT? | MANDARIN ORANGE (SWEET TASTE) | PEACH (SOUR TASTE) | | | | 1 | 1 | |
| 4 | WHICH IS YOUR FAVORITE WAY TO EAT MOCHI? | ISOBE (SOY SAUCE & SEAWEED) (SALTY TASTE) | ZONI (UMAMI TASTE) | | | 1 | | | 1 |
| 5 | WHICH IS YOUR FAVORITE WAY TO EAT FISH? | GRILLED FISH (SALTY TASTE) | BOILED FISH/TERIYAKI (UMAMI TASTE) | | | 1 | | | 1 |
| 6 | WHICH WAY DO YOU LIKE TO EAT BAKED CHICKEN (LEG MEAT)? | SALT (SALTY TASTE) | SAUCE (UMAMI TASTE) | | | 1 | | | 1 |
| 7 | WHICH KIND OF THICK-FRIED EGG DO YOU LIKE? | THICK FRIED EGG (WITH SUGAR) (SWEET TASTE) | THICK FRIED EGG (WITH SOUP STOCK) (UMAMI TASTE, SALTY TASTE) | | | 1 | | 1 | 1 |
| 8 | WHICH SHAVED ICE SYRUP DO YOU LIKE? | LEMON (SOUR TASTE) | MELON (SWEET TASTE) | | | | 1 | 1 | |
| 9 | WHICH SAUCE DO YOU LIKE FOR HIYASHI CHUKA? | SESAME (UMAMI TASTE) | SOY SAUCE (SOUR TASTE, SALTY TASTE) | | | 1 | 1 | | 1 |
| 10 | WHICH SMALL DISH DO YOU LIKE? | SHUNGIKU (BITTER TASTE) | PUMPKIN (SWEET TASTE) | | 1 | | | 1 | |
| 11 | PLEASE CHOOSE YOUR FAVORITE TRADITIONAL NEW YEAR' S YEAR FOOD | NAMASU (SOUR TASTE) / KURIKINTON (SWEET TASTE) / DATEMAKI (UMAMI TASTE, SWEET TASTE) | KAZUNOKO (SALTY TASTE) / TAZUKURI (BITTER TASTE) | | 1 | 1 | 1 | 1 | 1 |

EP 4 339 869 B1

FIG.8

FIG.9

A$_{32768}$

PT20

A$_n$

PT4

PT3

PT2

A$_1$ A$_2$

PT1

FIG.10A

# FIG.10B

# FIG.10C

# FIG.10D

# FIG.10E

BITTER TASTE

USV

UV

UMAMI TASTE

SOUR TASTE

PT5

SWEET TASTE    SALTY TASTE

# FIG.10F

FIG.10G

# FIG.10H

BITTER TASTE

UMAMI TASTE

SOUR TASTE

PT8

SWEET TASTE

SALTY TASTE

USV UV

# FIG.11

# FIG.12A

530

COFFEE MATCHING PREFERENCE OF USER ID1 IS IT1

ID1
PT1

BITTER
TASTE
IV
ISV
IT1
SOUR
TASTE
UMAMI
TASTE
SWEET
TASTE
SALTY
TASTE

FIG.12B

COFFEE MATCHING PREFERENCE OF USER ID1
IS IT1

# FIG.12C

# FIG.13A

# FIG.13B

# FIG.14

530A

SIDE DISH RECOMMENDED TO YOU FOR TODAY IS KINPIRAGOBO OF ITEM IT41

ID4
PT7

530B

SIDE DISH RECOMMENDED TO YOU FOR TODAY IS HIJIKINI OF ITEM IT42

ID5
PT4

530C

SIDE DISH RECOMMENDED TO YOU FOR TODAY IS BAKED CHICKEN OF ITEM IT43

ID6
PT6

ID4
(PT7)

ID5
(PT4)

ID6
(PT6)

531

THIS IS TASTE CHART FOR IT31 YOU ALWAYS PURCHASE. YOU CAN ENJOY BEER HAVING RICHNESS AND RICH AROMA.

UD

# FIG.15

530D~ STORE THAT IS MOST CONFORMING TO YOU AMONG STORES THAT PROVIDE CROQUETTES IS STORE STO1
THIS IS TASTE CHART FOR STORE STO1

ID6
PT6

PT6,PT8,PT4

ID6,ID3,ID5

530E~ STORE THAT IS MOST CONFORMING TO YOU AMONG STORES THAT PROVIDE CROQUETTES IS STORE STO2
THIS IS TASTE CHART FOR STORE STO2

ID3
PT8

530F~ STORE THAT IS MOST CONFORMING TO YOU AMONG STORES THAT PROVIDE CROQUETTES IS STORE STO3
THIS IS TASTE CHART FOR STORE STO3

ID5
PT4

## FIG.16

530G

THIS IS PRODUCT PURCHASED BY PERSON HAVING SAME PREFERENCE AS YOU MOST IN THE PAST. BEVERAGE RECOMMENDED TO YOU IS IT61. THIS IS TASTE CHART FOR IT61.

PD

ID7
PT3

BITTER TASTE

SOUR TASTE

UMAMI TASTE

IT61

IV

SWEET TASTE

ISV

SALTY TASTE

530H

PRODUCT RECOMMENDED TO YOU IS IT71.

PD

ID7
PT3

IT71

SIZE OF IT71 IS...
PRICE IS...
YOU CAN PURCHASE IT AT STORE STO...

# FIG.17

PD

| PT3 | | | | |
|---|---|---|---|---|
| ORDER | ITEM IT | NUMBER OF PURCHASES (PURCHASE AMOUNT) | ITEM IT | NUMBER OF PURCHASES (PURCHASE AMOUNT) |
| 1 | IT61 | · · · | IT71 | · · · |
| 2 | IT62 | · · · | IT72 | · · · |
| 3 | IT63 | · · · | IT73 | · · · |
| 4 | IT64 | · · · | IT74 | · · · |
| 5 | IT65 | · · · | IT75 | · · · |
| 6 | IT66 | · · · | IT76 | · · · |
| 7 | IT67 | · · · | IT77 | · · · |
| 8 | IT68 | · · · | IT78 | · · · |
| 9 | IT69 | · · · | IT79 | · · · |

# FIG.18

ID7

ID8,ID9 → PT3

ID8

5301

OPTIMAL MATCHING TARGET IS USER ID8.
USER ID8 IS INSTINCT TO EMPHASIZE SAME SWEET TASTE AS YOU.

ID8

PROFILE:THIRTIES, MALE
ADDRESS · · · ·
HOMETOWN · · · ·

FIG.19

# FIG.20

PT2
AD
IT81

540

ATTRIBUTE MATCHING ITEM IT81 OF PRODUCT MANUFACTURED BY YOUR COMPANY IS WOMAN IN THIRTIES.

MATCHING DEGREE: 90%

TARGET: WOMEN IN THIRTIES, NORTHERN KANTO AREA ···

## FIG.21

200,100,110,120,130,140

1010

USER PREFERENCE
EVALUATION VALUE
STORAGE UNIT

1030

RECEPTION UNIT

PREFERENCE
PATTERN
STORAGE UNIT

PATTERN
PREFERENCE
EVALUATION
VALUE
STORAGE UNIT

2030

CORRECTED COMPOSITION
INFORMATION GENERATION UNIT

1011          1012

2040

2010

PRESENTATION UNIT

REFERENCE SAMPLE
COMPOSITION INFORMATION
STORAGE UNIT

FIG.22

EP 4 339 869 B1

# FIG.23

550

BEVERAGE IT21
CORRECTED COMPOSITION INFORMATION OF SWEET TASTE:C1' (GLUCOSE α GRAMS)
CORRECTED COMPOSITION INFORMATION OF SOUR TASTE:C2'
CORRECTED COMPOSITION INFORMATION OF SALTY TASTE:C3'
CORRECTED COMPOSITION INFORMATION OF BITTER TASTE:C4'
CORRECTED COMPOSITION INFORMATION OF UMAMI TASTE:C5'

## FIG.24

| NAME | QUALITY OF SMELL |
|---|---|
| 2-BUTYL-2-OCTENAL | MEAT |
| 1,2-DIMETHYLBENZENE (=o-XYLENE) | GERANIUM |
| ACETALDEHYDE | ETHEREAL, FLOWERS, FRUIT, GREEN APPLE, SWEET |
| 2-METHOXY-4-VINYLPHENOL (-4-VINYLGUAIACOL) | CLOVES, CURRY, SMOKE, SPICES, WOOD |
| DIMETHYL SULFIDE (=THIOBISMETHANE, METHYLTHIOMETHANE, METHYL SULFIDE) | CABBAGE, GASOLINE, ORGANIC, SULFUR, MOIST SOIL |
| BENZOTHIAZOLE (=1,3-BENZOTHIAZOLE) | GASOLINE, LEATHER, MEDICINE, NUTS, RUBBER |
| 2-BUTAMINE (= METHYL ETHYL KETONE) | ETHEREAL, AROMATIC, FRUITY, PLEASANT, SWEET |
| MALTOL | CARAMEL, COTTON CANDY, MALT, ROASTED BREAD, ROASTED NUTS |
| 3-ETHYL-2,5-DIMETHYLPYRAZINE | SOUP, SOIL, POTATOES, ROAST |
| 2,6,6-TRIMETHYL-1-CYCLOHEXEN-1-YL)-3-BUTEN-2-ONE | FLORAL, SWEET, VIOLET |
| 2-BUTYL-1-OCTANOL | FLOWERS, FRAGRANCE |
| DODECANAL | CITRUS, FAT, LILY |
| ETHYL HEXADECANOATE (-ETHYL HEXADECANOATE) | WAX |
| γ-MUUROREN | HERB, SPICES, WOOD |
| PENTANAL (=PARELALDEHYDE) | ALMOND, GREEN, MALT, OIL, PUNGENT, BURNING SWEET AND SOUR TASTE BURNT SMELL |
| 2-METHYLPROPANAL (ISOBUTANOL, ISOBUTYRALDEHYDE) | CARAMEL, COCOA, GREEN, MALT, NUT, SWEET AND SOUR TASTE BURNT PUNGENT ODOR |

EP 4 339 869 B1

## FIG.25A

STEP 1 — DETECT Vr

STEP 2 — DETECT Vs
Vs – Vr = FIRST TASTE
MEASURED VALUE

STEP 3

STEP 4 — DETECT Vr'
Vr' – Vr = AFTERTASTE
MEASURED VALUE

STEP 5

## FIG.25B

STEP 10     10   11   RS     DETECT Vr

STEP 20     10   11   SI     DETECT Vs
Vs – Vr = FIRST TASTE
MEASURED VALUE

STEP 30     10   11   TSI

STEP 40     10   11   RS     DETECT Vtr
Vtr – Vr = MEASURED VALUE
AFTER RINSING

STEP 50     10   11   AL

FIG.26

# FIG.27

200,100,110,120,130,140

3010

SELECTION UNIT

3030

ACQUISITION UNIT

3040

ITEM EVALUATION VALUE
ADJUSTMENT UNIT

3050

REPRODUCTION UNIT

1010

USER PREFERENCE
EVALUATION VALUE
STORAGE UNIT

PREFERENCE
PATTERN
STORAGE UNIT

PATTERN
PREFERENCE
EVALUATION
VALUE
STORAGE UNIT

1011     1012

1020

ITEM EVALUATION
VALUE STORAGE UNIT

3020

PER-USER HISTORY
DATA STORAGE UNIT

1095

USER ATTRIBUTE
STORAGE UNIT

86

# FIG.28

FIG.29

# FIG.30

RECIPE R2
MATERIALS b1 (β1 GRAMS), b2 (β2 GRAMS), ···, AND bn (βn GRAMS)
SEASONINGS c1 (γ1' GRAMS), c2 (γ2' GRAMS), c3 (γ3 GRAMS) ···, AND cm (γm GRAMS)

MATERIAL bn (βn GRAMS) AND SEASONING cm (γm GRAMS) ARE INSUFFICIENT.
PLEASE PURCHASE.

# FIG.31

# FIG.32

700

710
ACQUISITION UNIT

720
RECIPE INFORMATION
GENERATION UNIT

730
COOKING UNIT

740
DISPLAY UNIT

750
DISH TAKEOUT UNIT

# FIG.33

# FIG.34

741   741B

BITTER TASTE
IT101
SOUR TASTE
UMAMI TASTE
IV
SWEET TASTE
SALTY TASTE
ISV

RECIPE R3
MATERIALS b1' (β1' GRAMS), b2' (β2' GRAMS), ⋯, AND bn (βn GRAMS)
SEASONINGS c1 (γ1' GRAMS), c2 (γ2' GRAMS), c3 (γ3 GRAMS) ⋯, AND cm (γm GRAMS)

# FIG.35

741    741C

COOKING IS NOW BEING PERFORMED.

BITTER TASTE

IT101

SOUR TASTE

UMAMI TASTE

IV

SWEET TASTE

SALTY TASTE

ISV

RECIPE R3
MATERIALS b1' ($\beta$1' GRAMS), b2' ($\beta$2' GRAMS), ⋯, AND bn ($\beta$n GRAMS)
SEASONINGS c1 ($\gamma$1' GRAMS), c2 ($\gamma$2' GRAMS), c3 ($\gamma$3 GRAMS) ⋯, AND cm ($\gamma$m GRAMS)

FIG.36

# FIG.37A

# FIG.37B

# FIG.38A

# FIG.38B

# FIG.39A

# FIG.39B

# FIG.40

200,100,110,120,130,140

1001

PURCHASE ITEM HISTORY ACQUISITION UNIT

1010

USER PREFERENCE EVALUATION VALUE STORAGE UNIT

1002

USER PREFERENCE EVALUATION VALUE GENERATION UNIT

PREFERENCE PATTERN STORAGE UNIT

PATTERN PREFERENCE EVALUATION VALUE STORAGE UNIT

1030

RECEPTION UNIT

1011        1012

1051

INFORMATION PRESENTATION UNIT

1020

ITEM EVALUATION VALUE STORAGE UNIT

1095

USER ATTRIBUTE STORAGE UNIT

# FIG.41

(A)

(B)

FIG.42

# FIG.43

(A)

(B)

(C)

# FIG.44

(A)

(B)

(C)

# FIG.45

531

COFFEE CONFORMING TO PREFERENCE OF USER ID1
IS IT110

# FIG.46

532

COFFEE CONFORMING TO PREFERENCE OF USER ID2 IS IT120

BITTER
TASTE

IT120

SOUR
TASTE

UMAMI
TASTE

IV

ISV

SWEET
TASTE

SALTY
TASTE

**EP 4 339 869 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002117059 A
- JP 2004013231 A
- KR 101843987 B1